# EUROPEAN PATENT APPLICATION

(11) **EP 1 462 494 A1**
(43) Date of publication of application: **29.09.2004**
(21) Application number: 04007466.8
(22) Date of filing: 26.03.2004
(51) Int. Cl.: C09D 11/00

(54) **Ink and ink set**

(30) Priority: 26.03.2003 JP 2003085457; 27.03.2003 JP 2003089231
(71) Applicant: Fuji Photo Film Co., Ltd., Kanagawa (JP)
(72) Inventor: Taguchi, Toshiki, Fujinomiya-shi Shizuoka (JP)
(74) Representative: HOFFMANN - EITLE

(57) **Abstract**

An ink containing: an aqueous medium; and at least one dye in which a ratio of a total atomic weight of hetero elements contained in a dye molecule to a dye molecular weight is from 40 to 90%.

## Description

### FIELD OF THE INVENTION

This invention relates to inks and ink sets which are excellent in image durability.

### BACKGROUND OF THE INVENTION

With the recent diffusion of computers, inkjet printers have been widely employed in printing on papers, films, fabrics and so on not only in offices but also in homes.

Inkjet recording methods include a system of jetting ink droplets under pressurization with the use of a piezo device, a system of foaming an ink by heating and thus jetting ink droplets, a system using ultrasonic wave, and a systemof electrostatically sucking and jetting ink droplets. As ink compositions for inkjet recording by these systems, use is made of water-base inks, oil-base inks or solid (molten) inks. Among these inks, water-base inks are mainly employed from the viewpoints of production, handling properties, odor, safety and so on.

Requirements for a coloring agent to be used in these inkjet recording inks are as follows: being highly soluble in solvents, enabling high density recording, having a favorable color hue, having high fastness to light, heat, air, water and chemicals, having favorable fixation properties on an image receiving material with little bleeding, being excellent in storage properties as an ink, having no toxicity, having a high purity, andbeing available at a low cost. However, it is highly difficult to search for a coloring agent satisfying these requirements at a high level.

Although various dyes and pigments have been already proposed and practically employed in inkjet recording, no coloring agent satisfying all of the above requirements has been found outyet. Using well-known dyes and pigments typified by those having color indexes (C.I.) assigned thereto, it is highly difficult to satisfy both of such color hue and fastness as required in inkjet recording inks.

As a dye for improving fastness, there have been proposed azo dyes derived from aromatic amines and 5-membered heterocyclic amines as described in JP-A-55-161856. However, these dyes have undesirable color hues in the yellow and cyan regions and, therefore, suffer from a problem of worsening color reproducibility.

JP-A-61-36362 and JP-A-2-212566 disclose inkjet recording inks aiming at achieving both of favorable color hue and high light fastness. However, colorants employed in these documents are still insufficient in the solubility in water when used as water-soluble inks. In the case of using the colorants described in these documents in water-soluble inks for inkjet recording, there arises an additional problem in fastness heat-humid fastness.

JP-T-11-504958 proposes compounds and ink compositions for solving these problems. Further, an inkjet recording ink using a pyrazolylaniline azo dye is reported for improving color hue and light fastness (see JP-A-2003-231850j . However, these inkjet recording inks are all still insufficient in color reproducibility and fastness of images output thereby.

Moreover, it has been clarified that when an image is printed on a photo gloss paper for inkjet recording and fixed indoors, seriously poor storage properties of the image are sometimes observed. The inventor assumes that this phenomenon is caused by some oxidative gases such as ozone in the atmosphere. Although this phenomenon scarcely arises when the paper is air-blocked by, for example, putting into a glass frame, the use conditions are restricted in such a case.

The above phenomenon is particularly remarkably observed on a photo gloss paper for inkjet recording, thereby causing a serious problem in the present inkjet recording system one of the important characteristics of which resides in photographic qualities.

The inventors have conducted intensive studies on inkjet inks with the use of dyes. However, there is found out a problem that an ink with the use of a water-soluble dye has poor image durability.

In the case of forming a color image by using an ink set composed of various color inks, it is also found out that upset of the balance in color durabilities would remarkably worsen image qualities with the passage of time.

### SUMMARY OF THE INVENTION

The problem that the invention is to solve is to provide an ink and an ink set being excellent in image durability including image qualities and color balance with the passage of time, still preferably an inkjet ink and an inkjet ink set.

The problems that the invention is to solve are resolved by the following inks and ink sets.
1) An ink containing at least one dye in an aqueous medium characterized by having at least one dye in which the ratio of the total atomic weight of hetero elements contained in the dye molecule to the dye molecular weight is from 40 to 90%.
2) An ink according to the above 1) characterized in that the dye is a compound represented by the following formula (1) :

   Formula (1) (A-N=N-B)ₙL

   In the formula (1) , A and B independently represent each an optionally substituted heterocyclic group. L represents a hydrogen atom, a simple bond (a certain chemical bond) or a divalent linking group. n is 1 or 2, provided that in the case where n is 1, L represents a hydrogen atom and A and B are both monovalent heterocyclic groups; in the case where n is 2, L is a simple bond or a divalent linking group and one of A and Bis a monovalent heterocyclic group while the other is a divalent heterocyclic group; and in the case where n is 2, A's may be either the same or different and B's may be either the same or different too.
3) An ink according to the above 1) or 2) characterized in that the ratio of the total atomic weight of hetero elements contained in the dye molecule to the dye molecular weight is 50% or more.
4) An ink set characterized by containing at least one ink according to any of the above 1) to 3).
5) An ink set characterized by containing at least 2 inks according to any of the above 1) to 3).
6) An ink set characterized by containing at least 3 inks according to any of the above 1) to 3).
7) An ink set characterized in that each of the inks constituting the ink set corresponds to an ink according to any of the above 1) to 3).
8) An ink set comprising inks each containing at least one dye in an aqueous medium characterized in that the inks contained in the ink set include at least 5 inks having different colors from each other, i.e. , cyan, light cyan, magenta, light magenta and yellow and at least 3 of these 5 inks contain each at least one dye having 2 or more heterocyclic groups in the fundamental dye skeleton participating in the color development.
9) An ink set comprising inks each containing at least one dye in an aqueous medium characterized in that all of the inks contained in the ink set contain each at least one dye having 2 or more heterocyclic groups in the fundamental dye skeleton participating in the color development.
10) An ink set according to the above 8) or 9) characterized by containing an azo dye as the dye having 2 or more heterocyclic groups.
11) An ink set according to any of the above 8) to 10) characterized by containing a metal chelatedyeas the dye having 2 or more heterocyclic groups.
12) An ink set according to any of the above 8) to 11) characterized by containing an azo dye, wherein heterocyclic groups are bonded to each other via an azo bond, as the dye having 2 or more heterocyclic groups.
13) An ink set according to any of the above 8) to 12) characterized by containing a metal chelate dye as the dye having 2 or more heterocyclic groups and the metal chelate dye being a phthalocyanine dye.
14) An ink set according to any of the above 8) to 13) characterized in that an ink containing a dye having heterocyclic groups according to any of the above 8) to 10) is an ink according to any of the above 1) to 3).
15) An ink set according to any of the above 4) to 14) characterized by further containing a black ink and the dye concentration of the black ink being the highest.
16) An ink set according to any of the above 4) to 15) characterized by further containing a black ink and the black ink includes an ink comprising a dye and another ink comprising a pigment dispersion.

According to the invention, it is possible to provide an ink and an ink set, preferably an inkjet ink and an inkjet ink set, being excellent in image durability including image qualities and color balance with the passage of time by using an ink having a dye in which the ratio of the total atomic weight of hetero elements contained in the dye molecule to the dye molecular weight is from 40 to 90% and/or a dye containing 2 or more heterocyclic groups or an ink set containing this ink.

### DETAILED DESCRIPTION OF THE INVENTION

Next, the invention will be illustrated in greater detail.

The ink according to the invention as described in the above 1) (hereinafter referred to as "the ink A") is characterized by having at least one dye having a hetero element content at a certain level or more (hereinafter referred to as "hetero element-rich dye" too). The term "hetero element" as used herein means an element other than carbon atom. The hetero element content, which means the ratio of the total atomic weight of hetero elements contained in the dye molecule to the dye molecular weight, ranges from 40 to 90%, preferably from 55 to 80% in the invention.

The ink A according to the invention may have an additional dye other than the hetero element-rich dye.

The ink set according to the invention as described in any of the above 4) to 7) (hereinafter referred to as "the ink set A") is characterized by containing at least the above-described ink A as a constituting thereof.

The ink set A according to the invention usually consists of 2 or more, preferably 4 or more, inks having different colors from each other.

The ink set A is characterized in that at least one of the dyes contained in at least 1 to 3 inks, preferably in all of the inks employed, contains a hetero element-rich dye as a constituting unit thereof.

The expression "having different colors" in the ink set A according to the invention means that printed colors are different from each other in one or more of the factors of color hue, lightness and chromaticity. More specifically speaking, in the case of using the same amount of inks comprising the same dye but having different concentrations, the colors thus developed are different from each other. The ink A according to the invention and the ink set A according to the invention are generically called merely "the invention A".

Next, the ink set as described in the above 8) (hereinafter referred to as "the ink set B" or "the invention B") will be illustrated.

The ink set B, Which comprises 5 or more, preferably 7 or more, inks having different colors from each other, is characterized in that at least 3 of these 5 inks (i.e., a cyan ink, a light cyan ink, a magenta ink, a light magenta ink and a yellow ink) contain each at least one dye having 2 or more heterocyclic groups, preferably aromatic heterocyclic groups, in the fundamental dye skeleton participating in the color development.

Next, the ink set as described in the above 9) according to the invention (hereinafter referred to as "the ink set C" or "the invention C") will be illustrated.

The ink set C, which comprises 2 or more, preferably 4 or more, inks having different colors from each other, is characterized in that at least one dye contained in all of the inks has 2 or more heterocyclic groups, preferably aromatic heterocyclic groups, in the fundamental dye skeleton participating in the color development.

Namely, at least 2 inks are employed in the ink set C.

The expression "having different colors" used with regard to the ink sets B and C has the same meaning as in the ink set A.

The expression "fundamental dye skeleton participating in the color development" of a dye having 2 or more heterocyclic groups employed with regard to the inventions B and C means a partial structure the addition or removal of which causes a large change in the absorption region of the dye. In most cases, it means a part constructing a π-electron system or a conjugation system. That is to say, it means such a part the removal of which causes a change in the main absorption of the dye from cyan to magenta or makes the dye colorless.

As an ink to be used in the invention B or C, it is preferable to use the ink A.

In the inventions A, B and C (hereinafter merely referred to also as "the invention") , it is preferable that an azo dye is contained as the dye. An azo dye may be used in color development of all of the inks constituting the ink set. Alternatively, it may be used in color development of some of the inks. It may be used together with dyes of other structures for the color development thereof. It is preferable that such an azo dye is used in a yellow ink, a dark yellow ink, a magenta ink, a light magenta ink, a black ink and so on.

As the azo dye, it is preferable to employ a structure wherein heterocyclic groups are bonded to each other via an azo bond as will be described hereinafter.

In the invention, it is also preferable to use a metal chelate dye. The metal chelate dye is used in the ink set by the same method as in the above-described azo dye. It is preferable that such a metal chelate dye is used in a cyan ink, a light cyan ink and so on.

As the metal chelate dye, it is preferable to use a phthalocyanine dye as will be described hereinafter.

From the viewpoint of the image qualities in the mix-inkjetting part, it is preferable in the invention that a black ink has the highest dye concentration.

From the viewpoints of improvement in durability and improvement in letter qualities, it is preferable that the black ink includes an ink comprising a dye and another ink comprising a pigment dispersion. In the invention, such an ink comprising a pigment dispersion may be used together with a black ink comprising a dye. Alternatively, it may be used alone.

From the viewpoints of fastness and fastness to ozone gas, it is preferable that the dye to be used in the invention is a dye having an oxidation potential nobler than 1.0 V (vs. SCE), still preferably nobler than 1.1 V (vs. SCE) and particularly preferably nobler than 1.15 V (vs. SCE). Concerning the dye type, an azo dye with a specific structure fulfilling the above requirements in physical properties is favorable.

The oxidation potential level (Eox) employed in the invention can be easily measured by a person skilled in the art. Methods for measuring it are described in, for example, P. Delahay, *New Instrumental Methods in Electrochemistry* (1954 , Interscience Publishers) A. J. Bard et al., *Electrochemical Methods* (1980, John Wiley & Sons) , Akiya Fujishima et al., *Denki Kagaku Sokutei-ho* (1984, Gihodo Shuppan), etc.

More specifically speaking, the oxidation potential is determined by dissolving a test sample at a concentration of from 1x10⁻² to 1x10⁻⁶ mol/l in a solvent such as dimethylformamide or acetonitrile containing a supporting electrolyte such as sodium perchlorate or tetrapropylammonium perchlorate and measuring as a value to SCE (saturated Calomel electrode) with the use of a cyclic voltammetry or the like. Although this value sometimes deviates about several 10 mV due to a potential difference between solutions or the solution resistance of the sample solution, the reproducibility of the potential can be assured by adding a standard (for example, hydroquinone).

To unambiguously define the potential, the oxidation potential of a dye is defined in the invention as a value (vs. SCE) measured in dimethylformamide containing 0.1 mol/1 of tetrapropylammonium perchlorate as a supporting electrolyte (dye concentration: 0.001 mol/1).

The Eox (oxidation potential) value stands for easiness of electron transfer from a sample to an electrode. A sample having a larger Eox (i.e., a nobler oxidation potential) has the less easiness of electron transfer toward an electrode, in other words, it is less oxidized. Concerning the structure of a compound, the nobility of oxidation potential is elevated by introducing an electron-withdrawing group but lowered by introducing an electron-donating group. In the invention, it is desirable to achieve a nobler oxidation potential by introducing an electron-withdrawing group into the dye skeleton to thereby lower the reactivity with ozone which is an electrophile.

Dyes which are preferable as the dye to be used in the ink or ink set according to the invention are those represented by the following formulae.

Formula (1) (A-N=N-B)ₙL

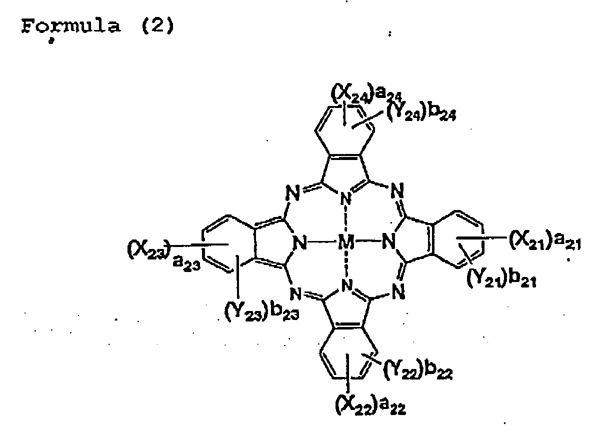

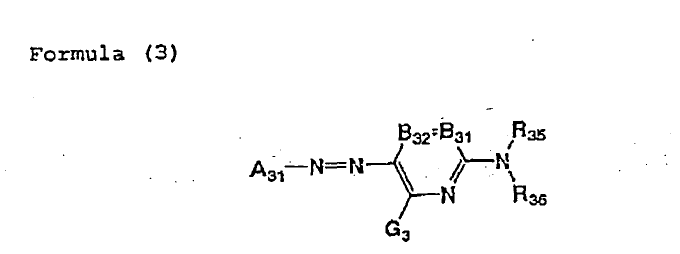

Formula (4) A₄₁-N=N-B₄₁-N=N-C₄₁

In the formula (1) , A and B independently represent each an optionally substituted heterocyclic group; L represents a hydrogen atom, a simple bond or a divalent linking group; and n is 1 or 2, provided that in the case where n is 1, L represents a hydrogen atom and A and B are both monovalent heterocyclic groups; in the case where n is 2, L is a simple bond or a divalent linking group and one of A and B is a monovalent heterocyclic group while the other is a divalent heterocyclic group; and in the case where n is 2, A' s maybe either the same or different and B's may be either the same or different too.

In the formula (2), X₂₁, X₂₂, X₂₃ and X₂₄ independently represent each -SO-Z₂, -SO₂-Z₂, -SO₂NR₂₁R₂₂, a sulfo group, -CONR₂₁R₂₂ or -COOR₂₁.

Z₂ independently represent each a substituted or unsubstituted alkyl group, a substituted or unsubstituted cycloalkyl group, a substituted or unsubstituted alkenyl group, a substituted or unsubstituted aralkyl group, a substituted or unsubstituted aryl group or a substituted or unsubstituted heterocyclic group. R₂₁ and R₂₂ independently represent each a hydrogen atom, a substituted or unsubstituted alkyl group, a substituted or unsubstituted cycloalkyl group, a substituted or unsubstituted alkenyl group, a substituted or unsubstituted aralkyl group, a substituted or unsubstituted aryl group or a substituted or unsubstituted heterocyclic group. Y₂₁, Y₂₂, Y₂₃ and Y₂₄ independently represent each a monovalent substituent.

a₂₁ to a₂₄ and b₂₁ to b₂₄ respectively represent the numbers of substituents of X₂₁ to X₂₄ and Y₂₁ to Y₂₄. a₂₁ to a₂₄ independently represent each a number of from 0 to 4, provided that they do not represent 0 at the same time. b₂₁ to b₂₄ independently represent each a number of from 0 to 4. In the case where a₂₁ to a₂₄ and b₂₁ to b₂₄ are 2 or more, then plural X₂₁' s to X₂₄' s and Y₂₁' s to Y₂₄' s maybe each the same or different . M represents a hydrogen atom, a metal atom or oxide, hydroxide or halide thereof.

In the formula (3) , A₃₁ represents a residue of a 5-membered heterocyclic diazo component A₃₁-N₂-.

B₃₁ and B₃₂ represent each =CR₃₁- or -CR₃₂=, or one of them represents a nitrogen atom while the other represents =CR₃₁-or -CR₃₂=. R₃₅ and R₃₆ independently represent each a hydrogen atom, an aliphatic group, an aromatic group, a heterocyclic group, an acyl group, an alkoxycarbonyl group, an aryloxycarbonyl group, a carbamoyl group, an alkyl- or arylsulfonyl group or a sulfamoyl group each optionally having a substituent.

G₃, R₃₁ and R₃₂ independently represent each a hydrogen atom, a halogen atom, an aliphatic group, an aromatic group, a heterocyclic group, a cyano group, a carboxy group, a carbamoyl group, an alkoxycarbonyl group, an aryloxycarbonyl group, a heterocyclic oxycarbonyl group, an acyl group, a hydroxy group, an alkoxy group, an aryloxy group, a heterocyclic oxy group, a silyloxy group, an acyloxy group, a carbamoyloxy group, an alkoxycarbonyloxy group, an aryloxycarbonyloxy group, an amino group (including an arylamino group and a heterocyclic amino group), an acylamino group, an ureido group, a sulfamoylamino group, an alkoxycarbonylamino group, an aryloxycarbonylamino group, an alkyl- or arylsulfonylamino group, a heterocyclic sulfonylamino group, a nitro group, an alkyl- and aryl thio group, an alkyl- and arylsulfonyl group, a heterocyclic sulfonyl group, an alkyl- and aryl sulfinyl group, a heterocyclic sulfinyl group, a sulfamoyl group, a sulfo group or a heterocyclic thio group each optionally having a substituent.

R₃₁ and R₃₅ or R₃₅ and R₃₆ may be boned together to form a 5- or 6-membered ring.

In the formula (4), A₄₁, B₄₁ and C₄₁ independently represent each an optionally substituted aromatic group or an optionally substituted heterocyclic group.

Among the dyes represented by the formula (2), those represented by the following formula (5) are particularly preferable.

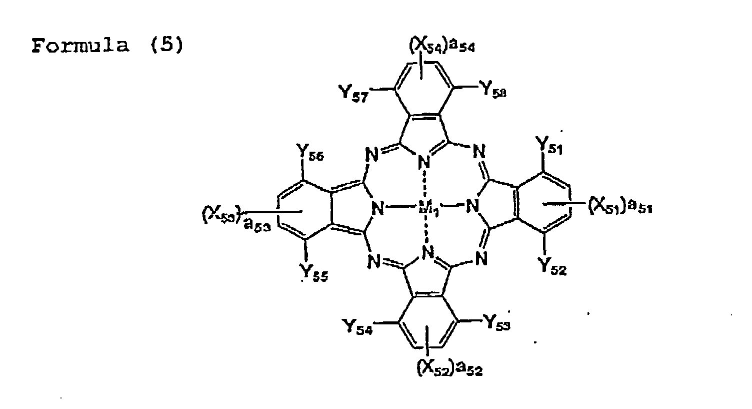

In formula (5), X₅₁ to X₅₄, Y₅₁ to Y₅₄ and M₁ respectively have the same meanings as the definitions of X₂₁ to X₂₄ and Y₂₁, to Y₂₄ and M in the above formula (2). a₅₁ to a₅₉ independently represent each an integer of 1 or 2.

Next, the above formulae (1) to (5) will be illustrated in detail.

### [Dye represented by formula (1)]

The dye represented by the formula (1) is preferably a yellow dye.

From the viewpoints of fastness, in particular fatness to ozone gas, it is preferable that the yellow dye fulfills the following requirement. That is, the reflection density of an image printed on a reflective medium with the use of the ink is measured through a status A filter and a point showing a reflection density (D_{B}) in the yellow region of 0.90 to 1.10 is specified as the initial density of the ink, Next, this print is forcedly discolored using an ozone discoloration test machine capable of continuously generating 5 ppm of ozone and the time (t) until the reflection density amounts to 80% of the initial density is measured. Thus, it is preferable that the forced discoloration kinetic constant (k) determined from the time (t) is 5.0x10⁻² (hour⁻¹) or less, still preferably 3.0x10⁻² (hour⁻¹) or less and still preferably 1.0x10⁻² (hour⁻¹) or less.

The reflection density is a value measured using a reflection densitometer (X-rite 310 TR) with a status A filter (blue). The forced discoloration kinetic constant (k) is a value determined from the residual ratio =exp(-ket), i.e., k=(-1n0.8)/t.

It is also preferable that the dye to be used in the invention has a favorable color hue as well as a favorable fastness. In particular, it is preferable that the dye shows a clear cut-off in the longer wavelength range in its absorption spectrum. Thus, it is preferable to use a yellow dye having its λmax of from 390 nm to 470 nm and having a ratio I between the absorbance I at λmax and the absorbance I at λmax+70 nm, i.e., I (λmax+70 nm) /I (λmax) of 0.20 or less, still preferably 0.15 or less and still preferably 0.10 or less. The absorption wavelength and the absorbance as defined herein are values determined in a solvent (water or ethyl acetate).

In the formula (1) , A and B independently represent each an optionally substituted heterocyclic group. As the above-described heterocyclic group, a heterocycle comprising a 5-membered ring or a 6-membered ring is preferable. It may have either a monocyclic structure or a polycyclic structure having 2 or more rings fused to each other. Itmaybe an aromatic heterocycle or a non-aromatic heterocycle. As the hetero atom constituting the heterocycle, N, O and S atoms are preferable.

L represents a hydrogen atom, a simple bond or a divalent linking group, n is 1 or 2, provided that in the case where n is 1, L represents a hydrogen atomandAand B are bothmonovalent heterocyclic groups, in the case where n is 2, L represents a simple bond or a divalent linking group and one of A and B is a monovalent heterocyclic group while the other is a divalent heterocyclic group, and in the case where n is 2, A's may be either the same or different and B's may be either the same or different too.

Preferable examples of the heterocycle represented by A in the above-described formula (1) include 5-pyrazolone, pyrazole, triazole, oxazolone, isoxazolone, barbituric acid, pyridone, pyridine, rhodanine, pyrazolidindione, pyrazopyridone, meldrum acid and fused heterocyclic groups in which an aromatic hydrocarbon ring or another heterocycle is further fused to these heterocyclic groups. Among all, 5-pyrazolone, 5-aminopyrazole, pyridone, 2,6-diaminopyridine and pyrazoles are preferable and 5-aminopyrazole, 2-hydroxy-6-pyridone and pyrazolotriazole are particularly preferable.

Examples of the heterocyclic group represented by B include pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene,pyrazole,imidazole,benzimidazole, triazole, oxazole, isoxazole, benzoxazole, thiazole, benzothiazole, isothiazolie, benzisothiazole, thiadiazole, benzisoxazole, pyrrolidine, piperidine, piperazine, imidazolidine, thiazoline and so on. Amongall, pyridine, quinoline, thiophene, benzothiophene, pyrazole, imidazole, benzimidazole, triazole, oxazole, isoxazole, benzoxazole, thiazole, benzothiazole, isothiazole, benzisothiazole, thiadiazole and benzisoxazole are preferable. Quinoline, thiophene, pyrazole, thiazole, benzoxazole, benzisoxazole, isothiazole, imidazole, benzothiazole and thiadiazole are still preferable. Pyrazole, benzothiazole, imidazole, 1,2,4-thiadiazole and 1,3,4-thiadiazole are particularly preferable.

Examples of the substituents attached to A and B include halogen atoms, alkyl groups, cycloalkyl groups, aralkyl groups, alkenyl groups, alkynyl groups, aryl groups, heterocyclic groups, a cyano group, a hydroxyl group, a nitro group, alkoxy groups, aryloxy groups, a silyloxy group, heterocyclic oxy groups, acyloxy groups, a carbamoyloxy group, alkoxycarbonyloxy groups, aryloxycarbonyloxy groups, an amino group, acylamino groups, an aminocarbonylamino group, alkoxycarbonylamino groups, aryloxycarbonylamino groups, a sulfamoylamino group, alkyl- and arylsulfonylamino groups, a mercapto group, alkylthio groups, arylthio groups, heterocyclic thio groups, a sulfamoyl group, alkyl- and arylsulfinyl groups, alkyl- and arylsulfonyl groups, acyl groups, aryloxycarbonyl groups, alkoxycarbonyl groups, a carbamoyl group, an imido group, a phosphino group, a phosphinyl group, a phosphinyloxy group, a phosphinylamino group, a silyl group and the following ionic hydrophilic groups.

Examples of the divalent linking group represented by L include alkylene groups, arylene groups, heterocyclic residues, -CO-, -SOₙ- (n being 0, 1 or 2) , -NR- (R being a hydrogen atom, an alkyl group or an aryl group) , -O- and divalent groups formed by combining these linking groups which may further have a substituent cited as substituents attached to A and B or the following ionic hydrophilic group.

In the case of using the dye of the formula (1) as a water-soluble dye, it preferably has at least one ionic hydrophilic group in its molecule. Examples of the ionic hydrophilic group include sulfo group, carboxyl group, phosphono group, quaternary ammonium groups, etc. As the ionic hydrophilic group as described above, carboxyl group, phosphono group and sulfo group are preferable and carboxyl group and sulfo group are still preferable. It is preferable that at least one of the substituents is a carboxyl group. These carboxyl group, phosphono group and sulfo group may be in the form of a salt. Examples of the counter ion forming the salt include ammonium ion, alkali metal ions (for example, lithium ion, sodium ion and potassium ion) and organic cations (for example, tetramethylammonium ion, tetramethylguanidium ion and tetramethylphosphonium). Among these counter ions, alkali metal salts are preferable.

Among the dyes represented by the following formula (1), dyes wherein the part A-N=N-B corresponds to the following formulae (1-A) , (1-B) and (1-C) are preferable.

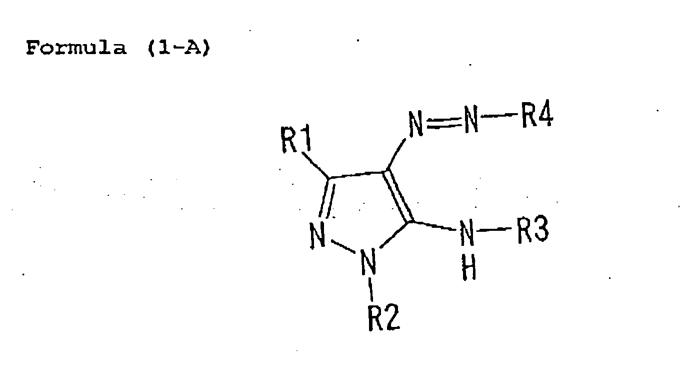

In the formula (1-A) , R1 and R3 represent each a hydrogen atom, a cyano group, an alkyl group, a cycloalkyl group, an aralkyl group, an alkoxy group, an alkylthio group, an arylthio group, an aryl group or an ionichydrophilic group; R2 represents a hydrogen atom, an alkyl group, a cycloalkyl group, an aralkyl group, a carbamoyl group, an acyl group, an aryl group or heterocyclic group; and R4 represents a heterocyclic group.

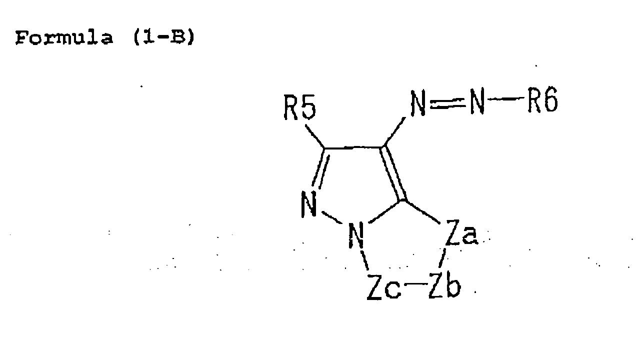

In the formula (1-B), R5 represents a hydrogen atom, a cyano group, an alkyl group, a cycloalkyl group, an aralkyl group, an alkoxy group, an alkylthio group, an arylthio group, an aryl group or an ionic hydrophilic group; Za represents -N=, -NH- or -C(R11)=; Zb and Zc independently represent each -N= pr -C(R11)=; R11 represents a hydrogen atom or a nonmetal substituent; and R6 represents a heterocyclic group.

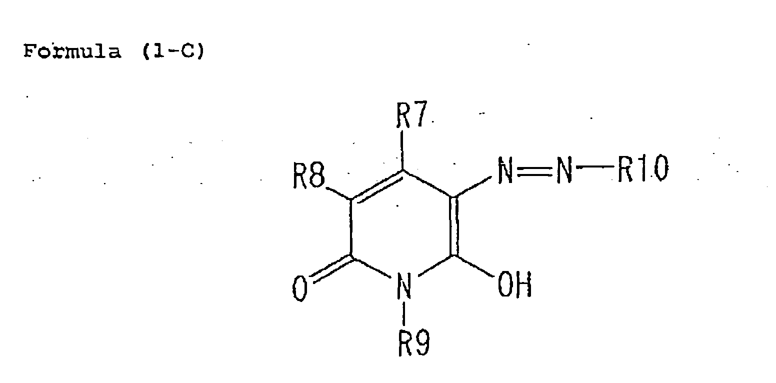

In the formula (1-C) , R7 and R9 independently represent each a hydrogen atom, a cyano group, an alkyl group, a cycloalkyl group, an aralkyl group, an alkoxy group, an alkylthio group, an arylthio group, an aryl group or an ionic hydrophilic group; R8 represents a hydrogen atom, a halogen atom, an alkyl group, an alkoxy group, an aryl group, an aryloxy group, a cyano group, an acylamino group, a sulfonylamino group, an alkoxycarbonylamino group, an ureido group, an alkylthio group, an arylthio group, an alkoxycarbonyl group, a carbamoyl group, a sulfamoyl group, a sulfonyl group, an acyl group, an alkylamino group, an arylamino group, a hydroxy group or an ionic hydrophilic group; and R10 represents a heterocyclic group.

In the above formulae (1-A) , (1-B) and (1-C) , the alkyl groups represented by R1, R2, R3, R5, R7, R8 and R9 include alkyl groups having substituents and unsubstituted alkyl groups. As the above-described alkyl groups, alkyl groups having from 1 to 20 carbon atoms are preferable. Examples of the above-described substituents include hydroxy group, alkoxy groups, cyano group , halogen atoms and ionic hydrophilic groups. Examples of the above-described alkyl groups include methyl, ethyl, butyl, isopropyl, t-butyl, hydroxyethyl, methoxyethyl, cyanoethyl, trifluoromethyl, 3-sulfopropyl and 4-sulfobutyl.

The cycloalkyl groups represented by R1, R2, R3, R5, R7, R8 and R9 include cycloalkyl groups having substituents and unsubstituted cycloalkyl groups. As the above-described cycloalkyl groups, cycloalkyl groups having from 5 to 12 carbon atoms are preferable. Examples of the above-described substituents include ionic hydrophilic groups. Examples of the above-described cycloalkyl groups include cyclohexyl. The aralkyl groups represented by R1, R2, R3, R5, R7, R8 and R9 include aralkyl groups having substituents and unsubstituted aralkyl groups. As the above-describedaralkyl groups, aralkyl groups having from 7 to 20 carbon atoms are preferable. Examples of the above-described substituents include ionic hydrophilic groups. Examples of the above-described aralkyl groups include benzyl and 2-phenethyl.

The aryl groups represented by R1, R2, R3, R5, R7 and R9 include aryl groups having substituents and unsubstituted aryl groups. As the above-described aryl groups, aryl groups having from 6 to 20 carbon atoms are preferable. Examples of the above-described substituents include hydroxy group, alkyl groups, alkoxy groups, halogen atoms, cyano group, carbamoyl group, sulfamoyl group, alkylamino groups, acylamino groups and ionic hydrophilic groups. Examples of the above-described aryl groups include phenyl, p-tolyl, p-methoxyphenyl, o-chlorophenyl and m-(3-sulfopropylamino)phenyl.

The alkylthio groups represented by R1, R2, R3, R5, R7, R8 and R9 include alkylthio groups having substituents and unsubstituted alkylthio groups. As the above-described alkylthio groups, alkylthio groups having from 1 to 20 carbon atoms are preferable. Examples of the above-described substituents include ionic hydrophilic groups. Examples of the above-described alkylthio groups include methylthio and ethylthio. The arylthio groups represented by R1, R2, R3, R5, R7; R8 and R9 include arylthio groups having substituents and unsubstituted arylthio groups. As the above-described arylthio groups, arylthio groups having from 6 to 20 carbon atoms are preferable. Examples of the above-described substituents are the same as those cited above with regard to the substitutents of the aryl groups. Examples of the above-described arylthio groups include phenylthio and p-tolylthio groups.

As the heterocyclic group represented by R2, a 5-membered or 6-membered heterocycle is preferable. Such a heterocyclic group may be further fused. Preferable examples of the hetero atom constituting the heteroaycle include N, S and O. The heterocyclic group may be an aromatic heterocycle or a non-aromatic heterocycle. The above-described heterocyclic group may be further substituted. Examples of the substituent are the same as those ci ted above with regard to the substitutents of the aryl groups. A 6-membered nitrogen-containing aromatic heterocycle is preferred and still preferable examples thereof include triazine, pyrimidine and phthalazine.

Examples of the halogen atom represented by R8 include fluorine, chlorine and bromine atoms. The alkoxy groups represented by R1, R3, R5 and R8 include alkoxy groups having substituents and unsubstituted alkoxy groups. As the above-described alkoxy groups, alkoxy groups having from 1 to 20 carbon atoms are preferable. Examples of the above-described substituents include hydroxy group and ioni c hydrophilic groups. Examples of the above-described alkoxy groups include methoxy, ethoxy, isopropoxy, methoxyethoxy, hydroxyethoxy and 3-carboxypropoxy.

The aryloxy group represented by R8 includes aryloxy groups having substituents and unsubstituted aryloxy groups. As the above-described aryloxy group, aryloxy groups having from 6 to 20 carbon atoms are preferable. Examples of the above-described substituents are the same as those cited above with regard to the substituents of the aryl groups. Examples of the above-described aryloxy group include phenoxy, p-methoxyphenoxy and o-methoxyphenoxy. The acylamino group represented by R8 includes acylamino groups having substituents and unsubstituted acylamino groups. As the above-described acylamino group, acylamino groups having from 2 to 20 carbon atoms are preferable. Examples of the above-described substituents are the same as those cited above with regard to the substituents of the aryl groups. Examples of the above-described acylamino group include acetamido, propionamido, benzamido and 3,5-disulfobenzamido.

The sulfonylamino group represented by R8 includes alkylsulfonylamino groups, arylsulfonylamino groups and heterocyclic sulfonylamino groups and the alkyl, aryl and heterocyclic moieites thereof may further have a substituent. Examples of the above-described substituents are the same as those cited above with regard to the substituents of the aryl groups. As the above-described sulfonylamino group, sulfonylamino groups having from 1 to 20 carbon atoms are preferable. Examples of the above-described sulfonylamino group include methylsulfonylamino and ethylsulfonylamino. The alkoxycarbonylamino group represented by R8 includes alkoxycarbonylamino groups having substituents and unsubstituted alkoxycarbonylamino groups. As the above-described alkoxycarbonylamino group, alkoxycarbonylamino groups having from 2 to 20 carbon atoms are preferable. Examples of the above-described substituents include ionic hydrophilic groups. Examples of the above-described alkoxycarbonylamino group include ethoxycarbonylamino.

The ureido group represented by R8 includes ureido groups having substituents and unsubstituted ureido groups. As the above-described ureido group, ureido groups having from 1 to 20 carbon atoms arepreferable. Examples of the above-described substituents include alkyl groups and aryl groups. Examples of the above-described ureido group include 3-methylureido, 3,3-dimethylureido and 3-phenylureido.

The alkoxycarbonyl groups represented by R7, R8 and R9 include alkoxycarbonyl groups having substituents and unsubstituted alkoxycarbonyl groups. As the above-described alkoxycarbonyl groups, alkoxycarbonyl groups having from 2 to 20 carbon atoms are preferable. Examples of the above-described substituents include and ionic hydrophilic groups. Examples of the above-described alkoxycarbonyl groups include methoxycarbonyl and ethoxycarbonyl.

The carbamoyl groups represented by R2, R7, R8 and R9 include carbamoyl groups having substituents and unsubstituted carbamoyl group. Examples of the above-described substituents include alkyl groups. Examples of the above-described carbamoyl groups includemethylcarbamoyl and dimethylcarbamoyl groups.

The sulfamoyl group represented by R8 includes sulfamoyl groups having substituents and unsubstituted sulfamoyl group. Examples of the above-described substituents include alkyl groups. Examples of the above-described sulfamoyl group include dimethylsulfamoyl and di-(2-hydroxyethyl)sulfamoyl groups.

The sulfonyl group represented by R8 includes alkylsulfonyl groups, arylsulfonyl groups and heterocyclic sulfonyl groups which may further have a substituent. Examples of the above-described substituents include ionic hydrophilic groups. Examples of the above-described sulfonyl group include methylsulfonyl and phenylsulfonyl.

The acyl groups represented by R2 and R8 include acyl groups having substituents and unsubstituted acyl groups. As the above-described acyl groups, acyl groups having from 1 to 20carbonatomsarepreferable. Examples of the above-described substituents include ionic hydrophilic groups. Examples of the above-described acyl groups include acetyl and benzoyl.

The amino group represented by R8 includes amino groups having substituents and unsubstituted amino group. Examples of the above-described substituents include alkyl groups, aryl groups and heterocyclic groups. Examples of the above-described ami no group include methylamino, diethylamino, aniline and 2-chloroanilino.

The heterocyclic groups represented by R4, R6 and R10 are the same as the optionally substituted heterocyclic groups representedbyB in the formula (1). Preferable examples, still preferable examples and particularly preferable examples thereof are also the same as those cited above. Examples of the substituents include ionichydrophilic groups, alkyl groups having from 1 to 12 carbon atoms, aryl groups, alkyl- or arylthio groups, halogen atoms, cyano group, sulfamoyl group, sulfonamino group, carbamoyl group and acylamino groups and the above-described alkyl groups, aryl groups, etc. may further have a substituent.

In the above-described formula (1-B), Za represents -N=, - NH- or -C(R11)=; Zb and Zc independently represent each -N= or -C (RII) =; and R11 represents a hydrogen atom or a nonmetal substituent. As the nonmetal substituent represented by R11, cyano group, cycloalkyl groups, aralkyl groups, aryl groups, alkylthio groups, arylthio groups or ionic hydrophilic groups are preferable. The above-described substituents are respectively the same as the substituents represented by R1 and preferable examples thereof are also the same. Examples of the skeleton of the heterocycle consisting of two 2-membered rings in the above formula (1-B) are as follows:

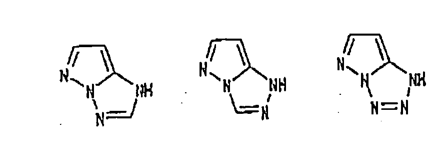

In the case where each substituent as described above may further have a substituent, examples of the substituents are the same as those of the substituents optionally attached to the heterocycles A and B in the above-described formula (1).

Among the above-described formulae (1-A) , (1-B) and (1 -C) , the formula (1-A) is preferable. Among all, compounds represented by the following formula (1-A1) are particularly preferable.

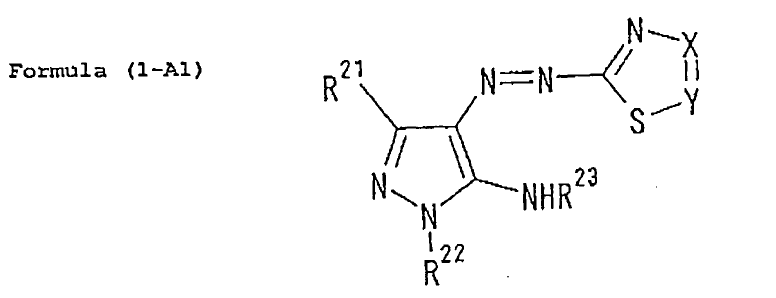

In the formula (1-A1) , R²¹ and R²³ represent each a hydrogen atom, an alkyl group, a cycloalkyl group, an aralkyl group, an alkoxy group or an aryl group. R²² represents a hydrogen atom, an aryl group or a heterocyclic group. One of X and Y represents a nitrogen atom while the other represents -CR²⁴. R²⁴ represents a hydrogen atom, a halogen atom, a cyano group, an alkyl group, an alkylthio group, an alkylsulfonyl group, an alkylsulfinyl group, an alkyloxycarbonyl group, a carbamoyl group, an alkoxy group, an aryl group, an arylthio group, an arylsulfonyl group, an arylsulfinyl group, an aryloxy group or an acylamino group, Among all, a hydrogen atom, an alkyl group, an alkyl- and arylthio group and an aryl group are preferable and a hydrogen atom, an alkylthio group and an aryl group are particularly preferable. Each substituent may further have a substituent.

As examples of the dye to be used in the invention, those described in Japanese PatentApplication 2003-286844, Japanese Patent Application 2002-211683, Japanese Patent Application 2002-124832, JP-A-2003-128953 and JP-A-2003-41160 can be cited, though dyes usable in the invention are not restricted thereto. These compounds can be synthesized by reference to the above patent documents and JP-A-2-24191 and JP-A-2001-279145.

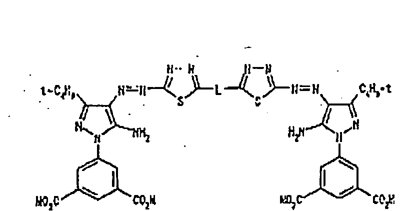

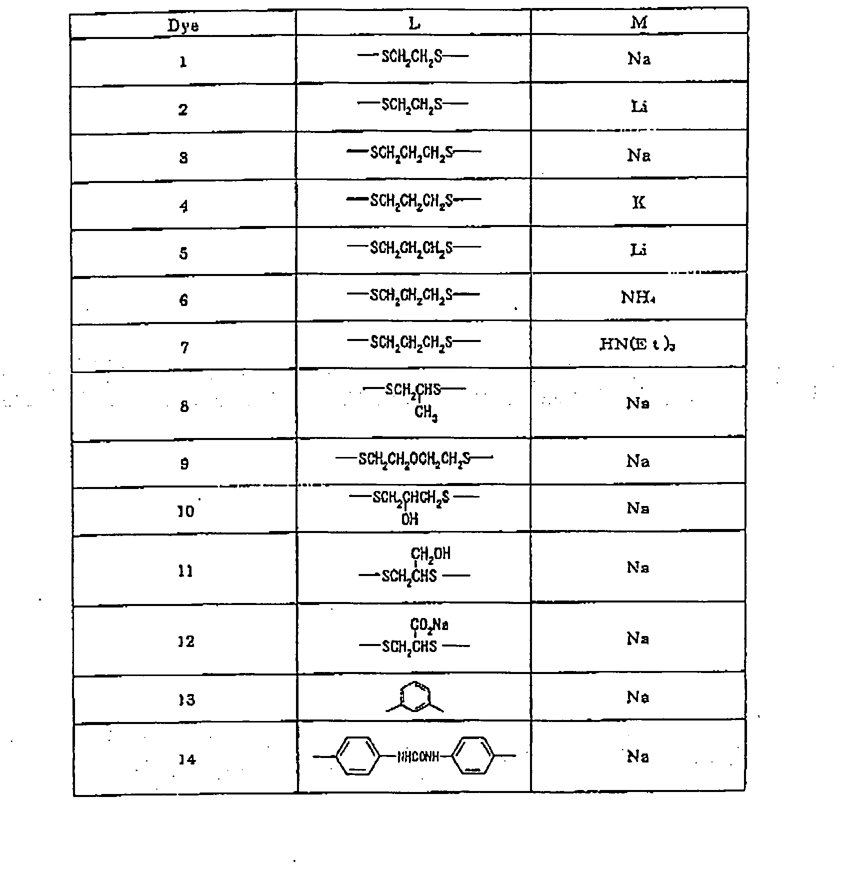

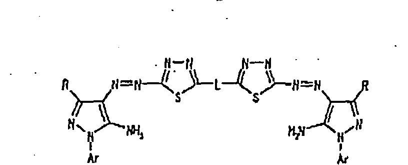

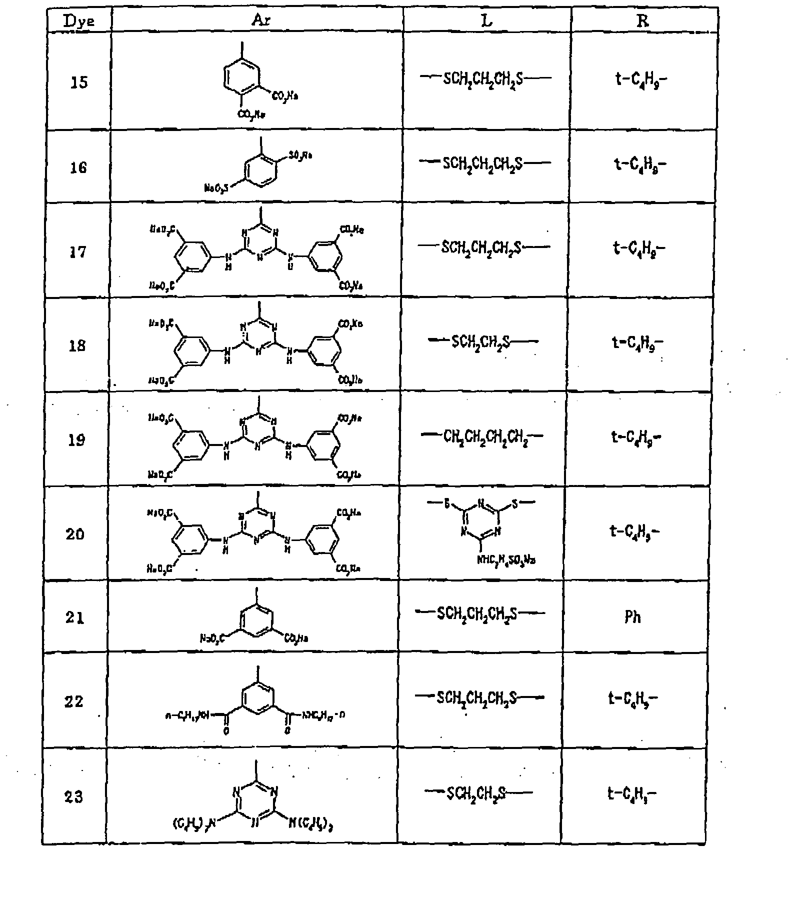

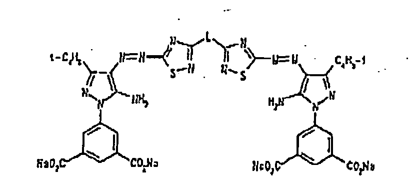

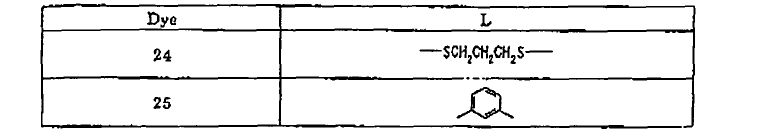

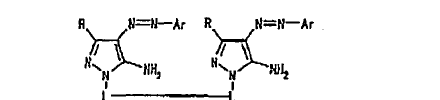

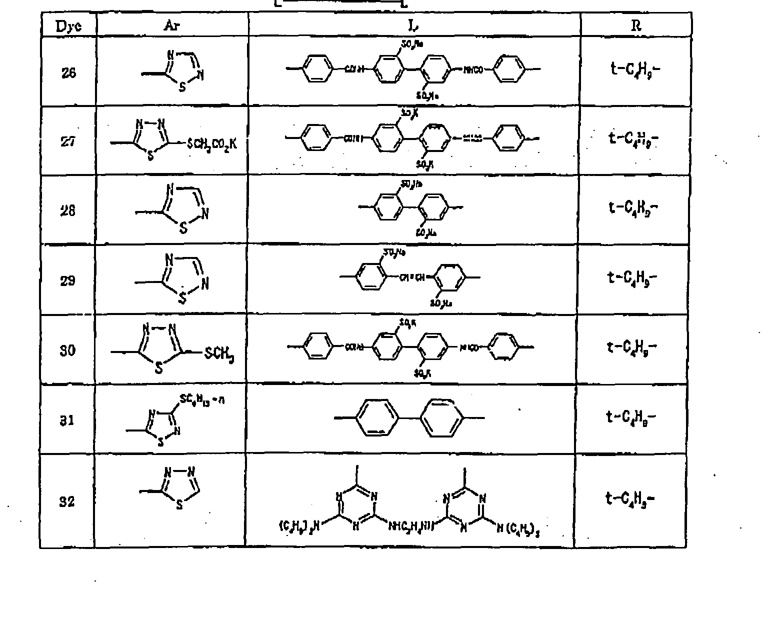

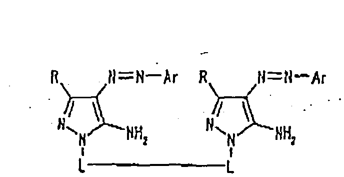

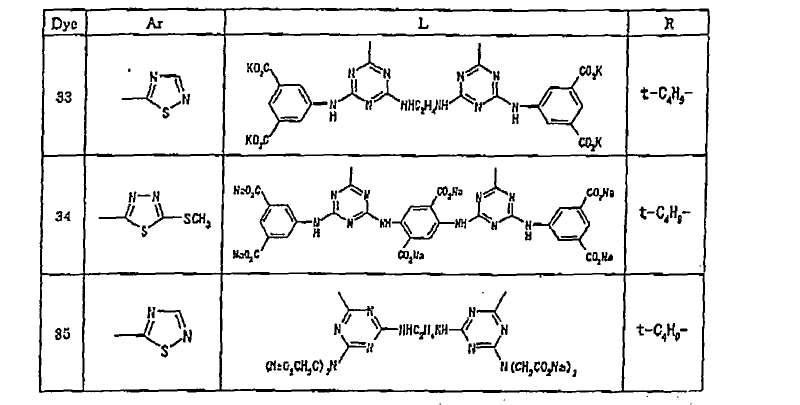

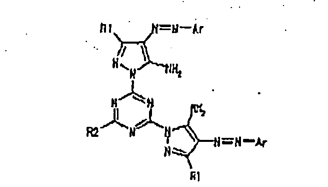

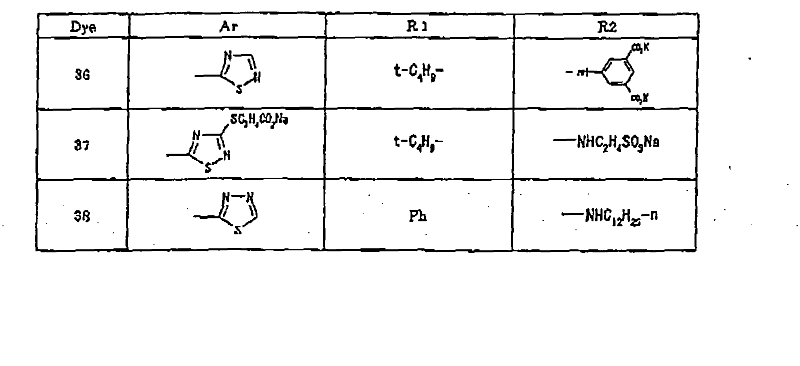

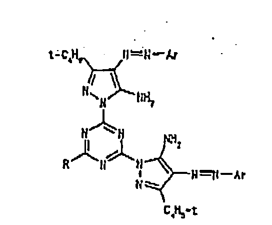

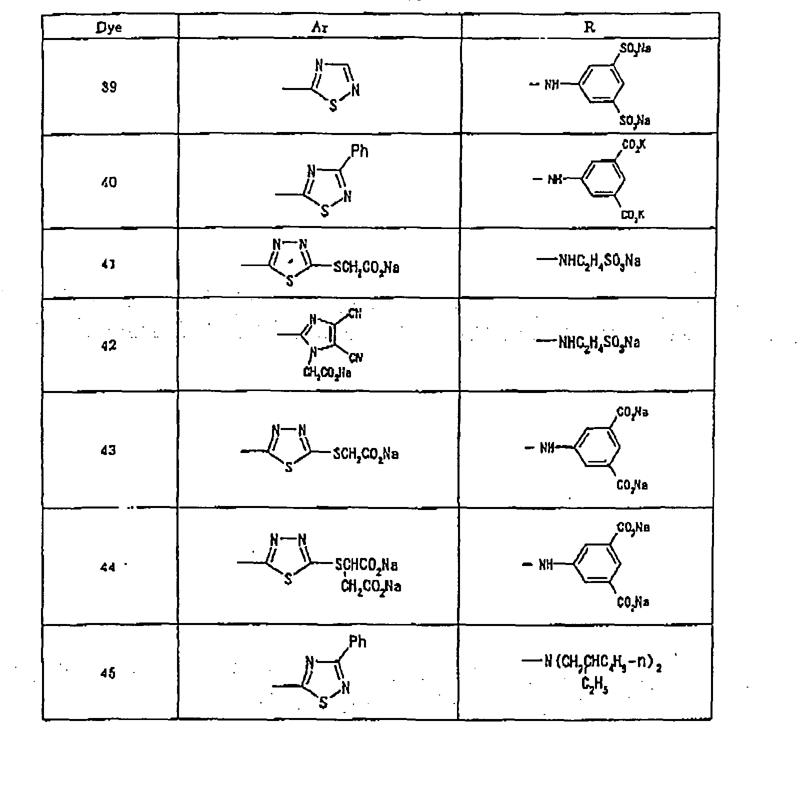

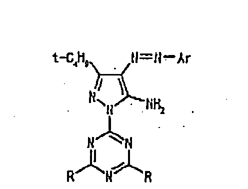

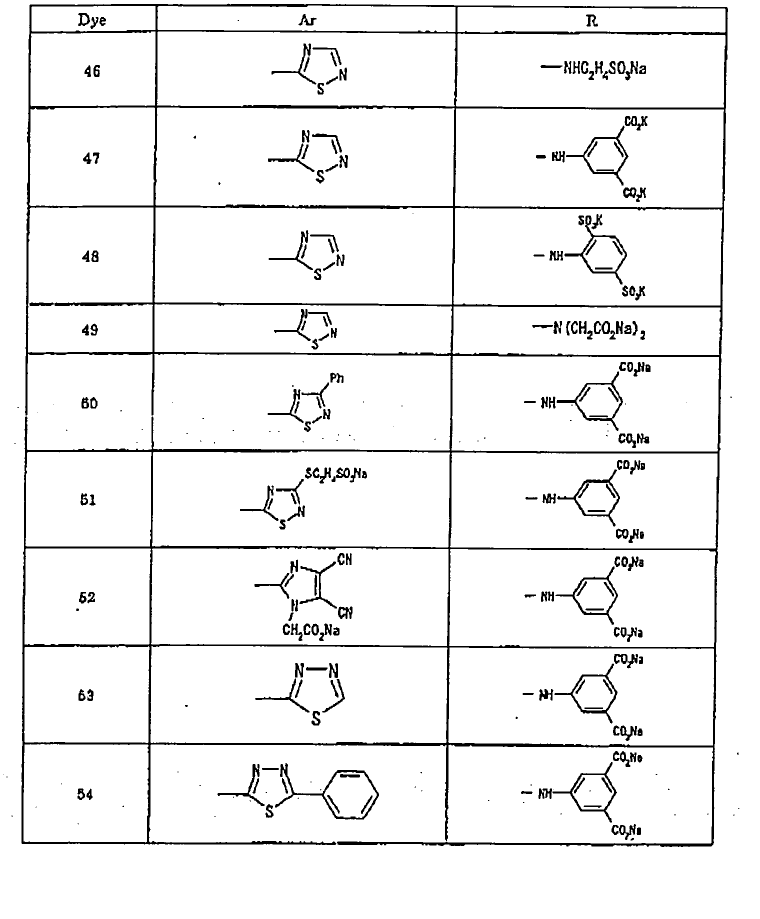

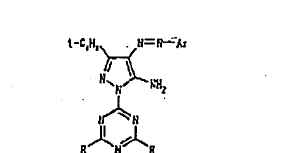

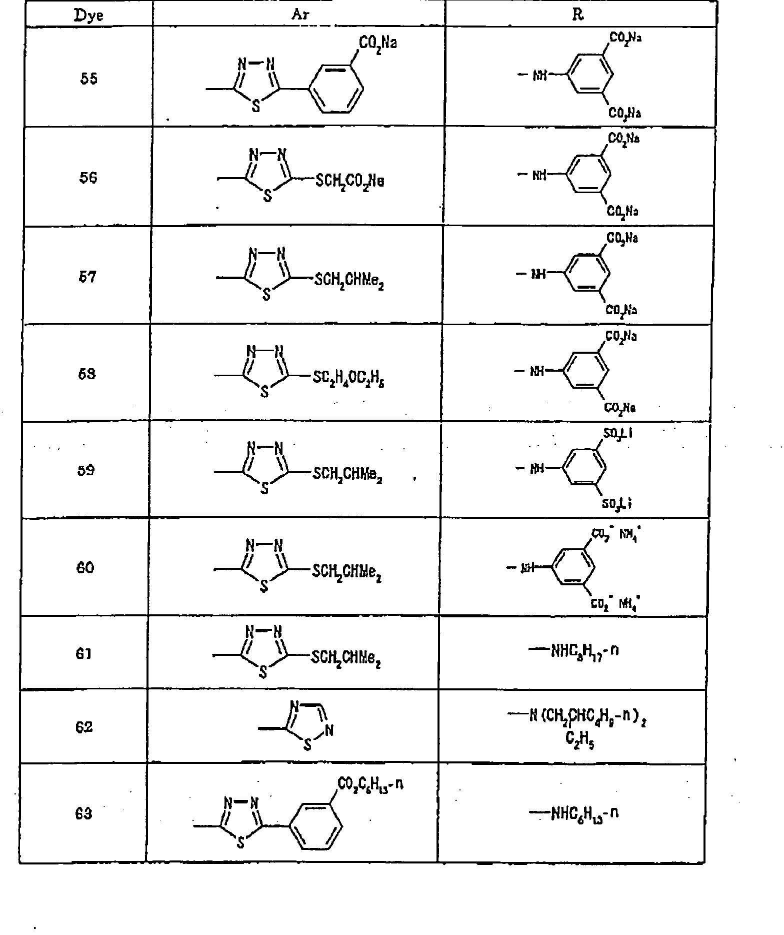

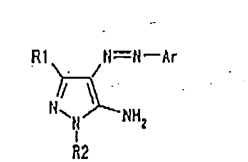

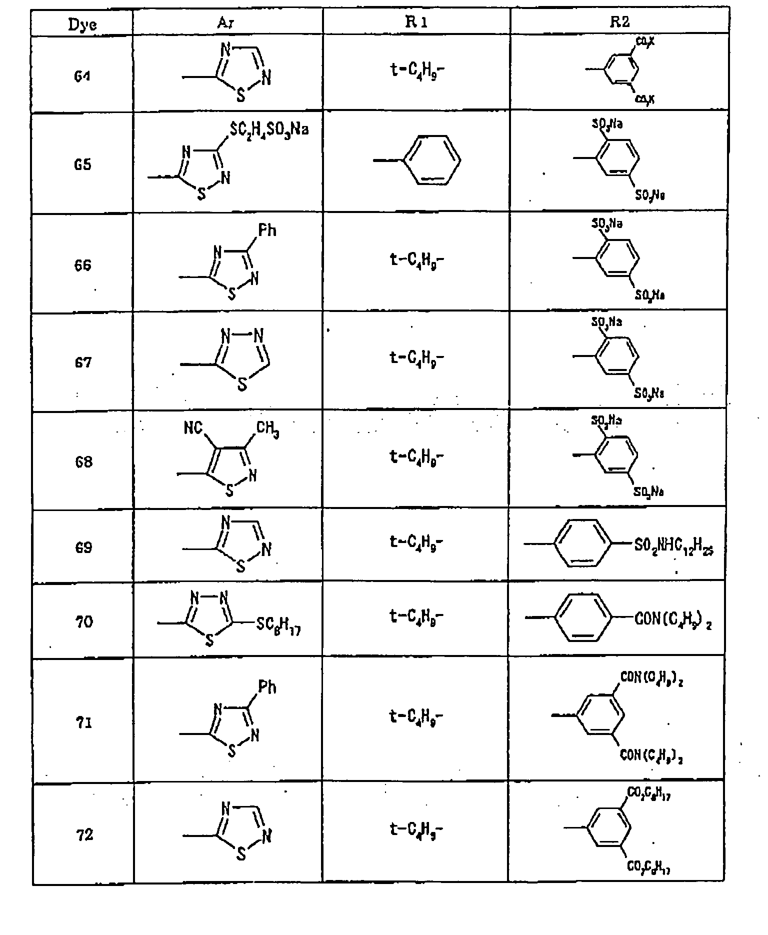

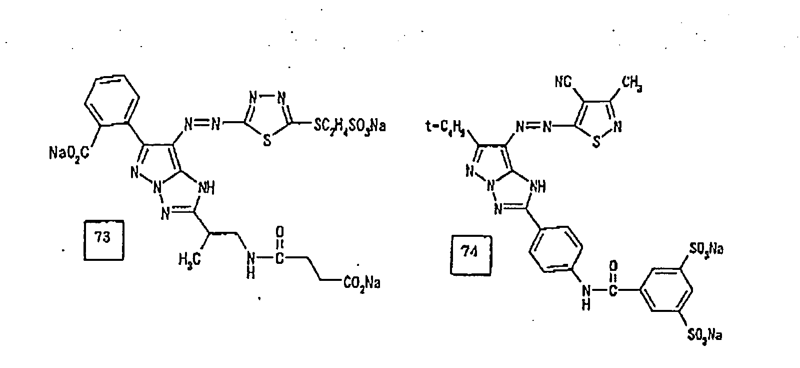

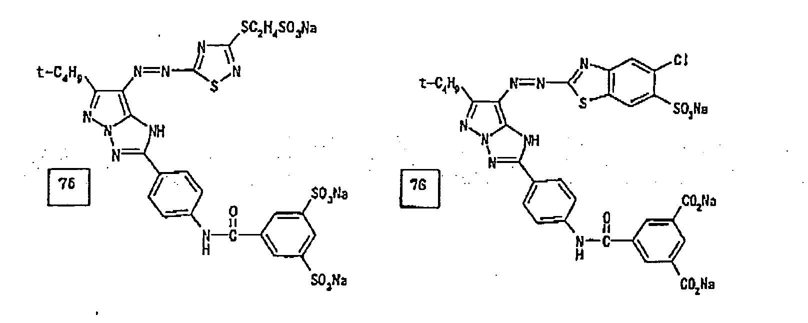

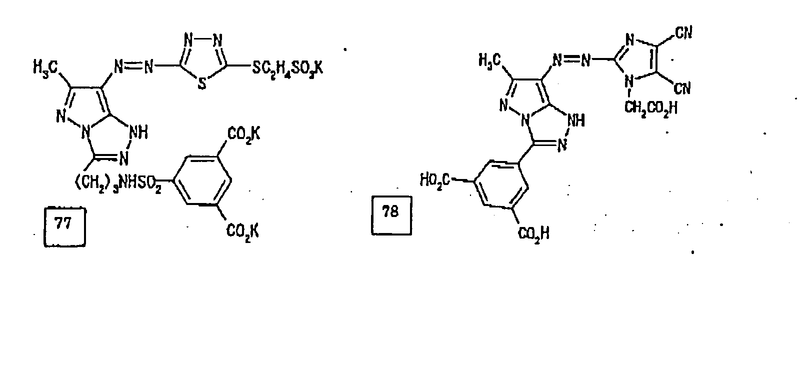

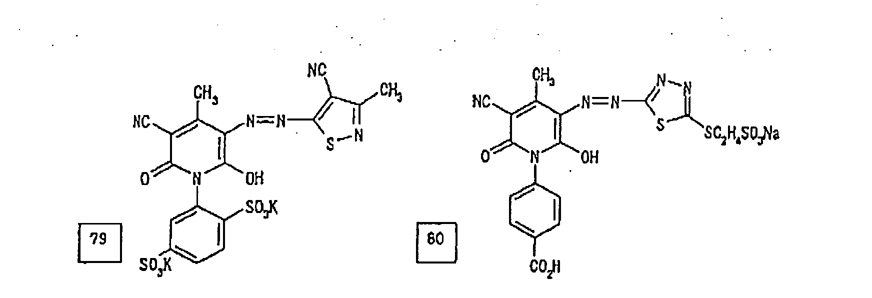

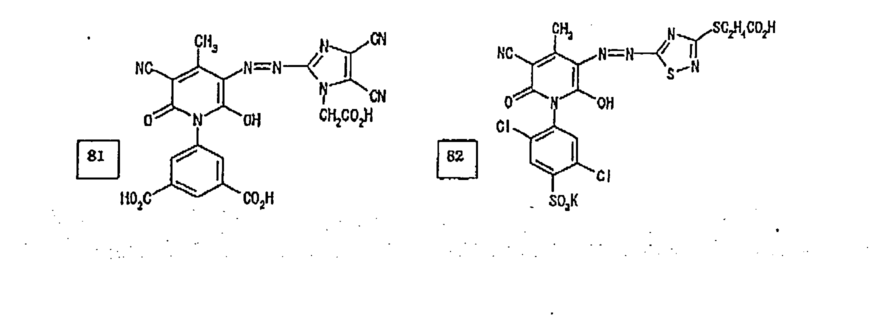

In the invention, it is preferable that the dye represented by the formula (1) is contained in an amount of from 0.2 to 20% by mass, still preferably from 0.5 to 15% by mass, in a yellow ink.

### [Dye represented by formula (2)]

The dye represented by the formula (2) is preferably a cyan dye.

This dye is characterized in that the number andpositions of substituents can be specified, compared with phthalocyanine dyes employed in the conventional inkjet inks which are derived by sulfonating unsubstituted phthalocyanine and thus in the form of mixtures wherein the number and positions of substi tuents cannot be specified.

As a cyan ink containing such a dye, following embodiments are favorable.
1) A cyan ink having a light-resistance expressed in the residual color ratio of 90% or more, when measured at Xe 1.1 W/m (intermittent) on an Epson PM photographic image-receiver paper provided with a TAG filter for 3 days.
2) A cyan ink having a residual dye ratio (density after discoloration/initial density x 100) of 60% ormore, preferably 80% or more, in a monochromic part printed by using the monochromic (cyan) ink to give a cyan reflection density of 0.9 to 1.1 with the use of a status A filter and storing in an environment having 5 ppm of ozone for 24 hours.
3) A cyan ink showing a Cu ion amount flowing into water of 20% or less, based on the whole dye, after discoloring under the conditions as defined in the above 2).
4) A cyan ink capable of penetrating into a specific image receiver paper to show an ink penetration level of 30% or more of the image receiver layer.

In the formula (2), X₂₁, X₂₂, X₂₃ and X₂₄ independently represent each -SO-Z₂, -SO₂-Z₂, -SO₂NR₂₁R₂₂, a sulfo group, -CONR₂₁R₂₂ or -COOR₂₁. Among these substituents, -SO-Z₂, -SO₂-Z₂, -SO₂N₂₁R₂₂ and -CONR₂₁R₂₂ are preferable and -SO-Z₂ and -SO₂-Z₂ are still preferable, and -SO₂-Z₂ is most desirable. In the case where one of a₂₁ to a₂₄, which respectively represent the numbers of substituents, is 2 or more, then plural X_{21'}s to X₂₄' s may be each the same or different and independently represent any of the above groups . X₂₁, X₂₂, X₂₃ and X₂₄ may represent the same substituent. Alternatively, X₂₁, X₂₂, X₂₃ and X₂₄ may be substituents of the same type but partly differ from each other, for example, X₂₁, X₂₂, X₂₃ and X₂₄ being all -SO₂Z₂' s but having different Z₂'s from each other. It is also possible that X₂₁, X₂₂, X₂₃ and X₂₄ are different substituents such as -SO₂-Z₂ and -SO₂NR₂₁R₂₂.

The above-described Z₂ independently represent each a substituted or unsubstituted alkyl group, a substituted or unsubstituted cycloalkyl group, a substituted or unsubstituted alkenyl group, a substituted or unsubstituted aralkyl group, a substituted or unsubstituted aryl group or a substituted or unsubstituted heterocyclic group. Substituted or unsubstituted alkyl groups, substituted or unsubstituted aryl groups and substituted or unsubstituted heterocyclic groups are preferable and, among all, substituted alkyl groups, substituted aryl groups and substituted heterocyclic groups are most desirable.

The above-described R₂₁ and R₂₂ independently represent each a hydrogen atom, a substituted or unsubstitutedalkyl group, a substituted or unsubstituted cycloalkyl group, a substituted or unsubstituted alkenyl group, a substituted or unsubstituted aralkyl group, a substituted or unsubstituted aryl group or a substituted or unsubstituted heterocyclic group. Among all, hydrogen atom, substituted or unsubstituted alkyl groups, substituted or unsubstituted aryl groups and substituted or unsubstituted heterocyclic groups are preferable and hydrogen atom, substituted alkyl groups, substituted aryl groups and substituted heterocyclic groups are still preferable. It is not preferable that R₂₁ and R₂₂ are both hydrogen atoms.

As the substituted or unsubstituted alkyl groups represented by R₂₁, R₂₂ and Z₂, alkyl groups having from 1 to 30 carbon atoms are preferable. In order to improve the solubility of the dye and the ink stability, branched alkyl groups are still preferable and those having an asymmetric carbon atom (employed as a racemate) are particularly preferable. As examples of the substituents, citation may be made of those which will be cited hereinafter as substituents with regard to Z₂, R₂₁, R₂₂, Y₂₁, Y₂₂, Y₂₃ and Y₂₄ in the case of having substituents. Among all, hydroxyl group, ether groups, ester groups, cyano group, amido group and sulfonamido group are particularly preferable, since these groups elevate association properties of the dye and thus improve the fastness. Moreover, these substituents may have halogen atoms or ionic hydrophilic groups. Carbon atoms in a substituent are excluded from the carbon atom number of an alkyl group, the same applies to other groups.

As the substituted or unsubstituted cycloalkyl groups represented by R₂₁, R₂₂ and Z₂, cycloalkyl groups having from 5 to 30 carbon atoms are preferable. In order to improve the solubility of the dye and the ink stability, cyclcalkyl groups having an asymmetric carbon atom (employed as a racemate) are particularly preferable. As examples of the substituents, citation may be made of those which will be cited hereinafter as substituents with regard to Z₂, R₂₁, R₂₂, Y_{21,} Y₂₂, Y₂₃ and Y₂₄ in the case of having substituents . Among all, hydroxyl group, ether groups, ester groups, cyano group, amido group and sulfonamido group are particularly preferable, since these groups elevate association properties of the dye and thus improve the fastness. Moreover, these substituents may have halogen atoms or ionic hydrophilic groups.

As the substituted or unsubstituted alkenyl groups represented by R₂₁, R₂₂ and Z₂, alkenyl groups having from 2 to 30 carbon atoms are preferable. In order to improve the solubility of the dye and the ink stability, branched alkenyl groups are preferable and those having an asymmetric carbon atom (employed as a racemate) are particularly preferable. As examples of the substituents, citation may be made of those which will be cited hereinafter as substituents with regard to Z₂, R₂₁, R₂₂, Y₂₁, Y₂₂, Y₂₃ and Y₂₄ in the case of having substituents. Among all, hydroxyl group, ether groups, ester groups, cyano group, amido group and sulfonamido group are particularly preferable, since these groups elevate association properties of the dye and thus improve the fastness. Moreover, these substituents may have halogen atoms or ionic hydrophilic groups.

As the substituted or unsubstituted aralkyl groups represented by R₂₁, R₂₂ and Z₂, aralkyl groups having from 7 to 30 carbon atoms are preferable. In order to improve the solubility of the dye and the ink stability, branched aralkyl groups are preferable and those having an asymmetric carbon atom (employed as a racemate) are particularly preferable. As examples of the substituents, citation may be made of those which will be cited hereinafter as substituents with regard to Z₂, R₂₁, R₂₂, Y₂₁, Y₂₂, Y₂₃ and Y₂₄ in the case of having substituents. Among all, hydroxyl group, ether groups, ester groups, cyano group, amido group and sulfonamido group are particularly preferable, since these groups elevate association properties of the dye and thus improve the fastness. Moreover, these substituents may have halogen atoms or ionic hydrophilic groups.

As the substituted or unsubstituted aryl groups represented by R₂₁, R₂₂ and Z₂, aryl groups having from 6 to 30 carbon atoms are preferable. As examples of the subs ti tuents , citation may be made of those which will be cited hereinafter as substituents with regard to Z₂, R₂₁, R₂₂, Y₂₁, Y₂₂, Y₂₃ and Y₂₄ in the case of having substituents. Among all, electron-withdrawing groups are particularly preferable since the oxidation potential of the dye can be made nobler and the fastness can be improved thereby. As the electron-withdrawing groups, those having a positive Hammett's constant σp may be cited. Among all, halogen atoms, heterocyclic groups, cyano group, carboxyl group, acylamino groups, sulfonamido group, sulfamoyl group, Carbamoyl group, sulfonyl group, imido group, acyl groups, sulfo group and quaternary ammonium groups are preferable. In particular, cyano group, carboxyl group, sulfamoyl group, carbamoyl group, sulfonyl group, imido group, acyl groups, sulfo group and quaternary ammonium groups are preferable therefor.

As the heterocyclic groups represented by R₂₁, R₂₂ and Z₂, 5- or 6-membered heterocyclic groups are preferable and they may be further fused together. Either aromatic heterocyclic groups or non-aromatic heterocyclic groups are usable. Next, examples of the heterocyclic groups represented by R₂₁, R₂₂ and Z₂, will be presented in as heterocycles while showing no substitution site, the substitution site is not specifically restricted. In the case of pyridine, for example, it may be substituted at the 2-, 3- or 4-position. Examples thereof include pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, thiadiazole, isoxazole, benzisoxazole, pyrrolidine, piperidine, piperazine, imidazolidine, thiazoline and so on. Among all, aromatic heterocyclic groups are preferable and preferable example will be cited as in the above case: pyridine, pyrazine, pyrimidine, pyridazine, triazine, pyrazole, imidazole, benzimidazole, triazole, thiazole, benzothiazole, isothiazole, benzisothiazole and thiadiazole. These heterocyclic groups may have a substituent. As examples of the substituents, citation may be made of those which will be cited hereinafter as substituents with regard to Z₂, R₂₁, R₂₂, Y₂₁, Y₂₂, Y₂₃ and Y₂₄ in the case of having substituents. Preferable substituents are the same as those cited above as preferable examples of the substituents of aryl groups, while still preferable substituents are also the same as those cited above as still preferable examples of the substituents of aryl groups.

Y₂₁, Y₂₂, Y₂₃ and Y₂₄ independently represent each a hydrogen atom, a halogen atom, an alkyl group, a cycloalkyl group, an alkenyl group, an aralkyl group, an aryl group, a heterocyclic group, a cyano group, a hydroxyl group, a nitro group, an amino group, an alkylamino group, an alkoxy group, an aryloxy group, an acylamino group, an arylamino group, an ureido group, a sulfamoylamino group, an alkylthio group, an arylthio group, an alkoxycarbonylamino group, a sulfonamido group, a carbamoyl group, a sulfamoyl group, a sulfonyl group, an alkoxycarbonyl group, a heterocyclic oxy group, an azo group, an acyloxy group, a carbamoyloxy group, a silyloxy group, an aryloxycarbonyl group, an aryloxycarbonylamino group, an imido group, a heterocyclic thio group, a phosphoryl group, an acyl group a carboxyl group or a sulfo group. Each group may further have a substituent.

Among all, hydrogen atom, halogen atoms, alkyl groups, aryl groups, cyano group, alkoxy groups, amido group, ureido group, sulfonamido group, carbamoyl group, sulfamoyl group, alkoxycarbonyl groups, carboxyl group and sulfo group are preferable. Inparticular, hydrogen atom, halogen atoms, cyano group, carboxyl group and sulfo group are preferable and hydrogen atom is most desirable.

In the case where Z₂, R₂₁, R₂₂, Y₂₁, Y₂₂, Y₂₃ and Y₂₄ are groups which may further have a substituent, examples of the substituent are as follows.

Linear or branched alkyl groups having from 1 to 12 carbon atoms, linear or branched aralkyl groups having from 7 to 18 carbon atoms, linear or branched-alkynyl groups having from 2 to 12 carbon atoms, linear or branched cycloalkyl groups having from 3 to 12 carbon atoms and linear or branched cycloalkenyl groups having from 3 to 12 carbon atoms (to improve the solubility of the dye and the ink stability, such groups as described above having a branched chain being preferred and those having an asymmetric carbon atom being still preferred; specific examples of these groups including methyl, ethyl, propyl, isopropyl, sec-butyl, t-butyl, 2-ethylhexyl, 2-methylsulfonylethyl, 3-phenoxypropyl, trifluoromethyl and cyclopentyl), halogen atoms (for example, chlorine atomandbromine atom) , aryl groups (for example, phenyl, 4-t-butyl phenyl and 2,4-di-t-amylphenyl), heterocyclic groups (for example, imidazolyl, pyrazolyl, triazolyl, 2-furyl, 2-thienyl, 2-pyrimidinyl and 2-benzothiazolyl), cyano group, hydroxyl group, nitro group, carboxy group, amino group, alkyloxy groups (for example, methoxy, ethoxy, 2-methoxyethoxy and 2-methansulfonylethoxy), aryloxy groups (for example, phenoxy, 2-methylphenoxy, 4-t-butylphenoxy, 3-nitrophenoxy, 3-t-butyloxycarbamoylphenoxy and 3-methoxycarbamoyl), acylamino groups (for example, acetamido, benzamido and 4-(3-t-butyl-4-hydroxyphenoxy)butanamido), alkylamino groups (for example, methylamino, butylamino, diethylamino and methylbutylamino), aniline groups (for example, phenylamino and 2-chloroanilino) , ureido groups (for example, phenylureido, methylureido and N,N-dibutylureido), sulfamoylamino groups (for example, N,N-dipropylsulfamoylamino), alkylthio groups (for example, methylthio, octylthio and 2-phenoxyethylthio), arylthio groups (for example, phenylthio, 2-butoxy-5-t-octylphenylthio and 2-carboxyphenylthio), alkyloxycarbonylamino groups (for example, methoxycarbonylamino), sulfonamido groups (for example, methanesulfonamido, benzenesulfonamido and p-toluenesulfonamido), carbamoyl groups (for example, N-ethylcarbamoyl and N,N-diLbutylcarbamoyl), sulfamoyl groups (for example, N-ethylsulfamoyl, N,N-dipropylsulfamoyl and N-phenylsulfamoyl) , sulfonyl groups (for example, methanesulfonyl, octanesulfonyl, benzenesulfonyl and toluenesulfonyl), alkyloxycarbonyl groups (for example, methoxycarbonyl and butyloxycarbonyl) , heterocyclic oxy groups (for example, 1-phenyltetrazol-5-oxy and 2-tetrahydropyranyloxy) , azo groups (for example, phenylazo, 4-methoxyphenylazo, 4-pivaloylaminophenylazo and 2-hydrox-4-propanoylphenylazo) , acyloxy groups (for example, acetoxy), carbamoyloxy groups (for example, N-methylcarbamoyloxy and N-phenylcarbamoyloxy), silyloxy groups (for example, trimethylsilyloxy and dibutylmethylsilyloxy) , aryloxycarbonylamino groups (for example, phenoxycarbonylamino), imido groups (for example, N-succinimido and N-phthalimido), heterocyclic thio groups (for example, 2-benzothiazolylthio, 2,4-di-phenoxy-1,3,5-triazole-6-thio and 2-pyridylthio), sulfinyl groups (for example, 3-phenoxypropylsulfinyl), phosphonyl groups (for example, phenoxyphosphonyl, octyloxyphosphonyl and phenylphosphonyl), aryloxycarbonyl groups (for example, phenoxycarbonyl) , acyl groups (for example, acetyl, 3-phenylpropanoyl and benzoyl) and ionic hydrophilic groups (for example, carboxyl group, sulfo group, phosphono group and quaternary ammonium group).

In the case where the phthalocyanine dye represented by the above formula (2) is soluble in water, it is preferable that this dye has an ionic hydrophilic group. Examples of the ionic hydrophilic group include sulfo group, carboxyl group, phosphono group, quaternary ammonium groups, etc. As the ionic hydrophilic group as described above, carboxyl group, phosphono group and sulfo group are preferable and carboxyl group and sulfo group are still preferable. These carboxyl group, phosphono group and sulfo group may be in the form of a salt. Examples of the counter ion forming the salt include ammonium ion, alkali metal ions (for example, lithium ion, sodium ion and potassium ion) and organic cations (for example, tetramethylammonium ion, tetramethylguanidium ion and tetramethylphosphonium). Among these counter ions, alkali metal salts are preferable. In particular, lithium salts are still preferable since they can elevate the solubility of a dye and improve ink stability.

Concerning the number of the ionic hydrophilic groups, it is preferable that a phthalocyanine dye has at least 2 ionic hydrophilic groups, still preferably at least 2 sulfo groups and/or carboxyl groups, per molecule.

a₂₁ to a₂₄ and b₂₁ to b₂₄ stand for respectively the numbers of the substituents X₂₁ to X₂₄ and Y₂₁ to Y₂₄. a₂₁ to a₂₄ independently represent each an integer of from 0 to 4, provided that all of them do not represent 0 at the same time. b₂₁ to b₂₄ independently represent each an integer of from 0 to 4. In the case where any of a₂₁ to a₂₄ and b₂₁ to b₂₄ is an integer of 2 or more, the corresponding one of X₂₁ to X₂₄ and Y₂₁ to Y₂₄ occurs in a plural number and these substituents may be either the same or different.

a₂₁ and b₂₁ fulfill the relationship a₂₁+b₂₁=4 . It is still preferable that a₂₁ is 1 or 2 while b₂₁ is 3 or 2. In the most desirable combination among all, a₂₁ is 1 and b₂₁ is 3.

The same relationship as a₂₁ with b₂₁ applies to each of the combinations of a₂₂ with b₂₂, a₂₃ with b₂₃ and a₂₄ with b₂₄. Preferable combinations are also the same.

M represents a hydrogen atom or a metal element or its oxide, hydroxide or halide.

Preferable examples of M include a hydrogen atom and metal elements such as Li, Na, K, Mg, Ti, Zr, V, Nb, Ta, Cr, Mo, W, Mn, Fe, Co, Ni, Ru, Rh, Pd, Os, Ir, Pt, Cu, Ag, Au, Zn, Cd, Hg, Al, Ga, In, Si, Ge, Sn, Pb, Sb, Bi, etc. Preferable examples of the oxide include VO, GeO, etc. Preferable examples of the hydroxide include Si (OH)₂, Cr (OH)₂, Sn (OF)₂, etc. Preferable examples of the halide include AlCl, SiCl₂, VCl, VCl₂, VOCl, FeCl, CaCl, ZrCl, etc. Among all, Cu, Ni, Zn and Al are preferable and Cu is most desirable.

Furthermore, Pc (phthalocyanine) rings may form a dimer (for example, Pc-M-L-M-Pc) or a trimer via L (a divalent linking group) and M' s in such a case may be either the same or different.

As the divalent linking group represented by L, an oxy group -O-, a thio group -S-, a carbonyl group -CO-, a sulfonyl group -SO₂-, an imino group -NH-, a methylene group -CH₂- and a group formed by combining them are preferable.

Concerning the combination of preferable substituents in the compound represented by the above-described formula (2) , it is favorable that at least one of the substituents is selected from the above-described preferable groups. A compound having a larger number of substituents selected from the above-described preferable groups is still preferable and a compound all of the substituents of which are selected from the above-described preferable ones is most desirable.

Among phthalocyanine dyes represented by the above-described formula (2), a phthalocyanine dye having a structure represented by the above formula (5) is still preferable. Next, the phthalocyanine dye represented by the formula (5) will be described in detail.

In the above-described formula (5) , X₅₁ to X₅₄ and Y₅₁ to Y₅₄ respectively have the same meanings as X₂₁ to X₂₄ and Y₂₁ to Y₂₄ in the formula (2). M₁ has the same meaning as M in the formula (2) and preferable examples thereof are also the same.

In the formula (5), a₅₁ to a₅₄ independently represent each an integer of 1 or 2. It is preferable that the following relationship 4≦a₅₁+a₅₂+a₅₃+a₅₄≦6 is satisfied. In a still preferable case, a₅₁=a₅₂=a₅₃=a₅₄=1.

X₅₁, X₅₂, X₅₃ and X₅₄ may be all the same substituents. It is also possible that X₅₁, X_{52,} X₅₃ and X₅₄ are all substituents of the same type but have different parts, for example, X₅₁, X₅₂, X₅₃ and X₅₄ are all -SO₂-Z' s but contain various Z's. Alternatively, they may contain substituents different from each other such as -SO₂-Z and -SO₂NR₅₁R₅₂.

Among phthalocyanine dyes represented by the formula (5), particularly preferable combinations of substituents are as follows.

It is preferable that X₅₁ to 7C₅₄ independently represent each -SO-Zₛ, -SO₂-Z₅, -SO₂NR₅₁R₅₂ or -CONR₅₁R₅₂, still preferably -SO₂-Z₅ or -SO₂NR₅₁NR₅₂ and -SO₂-Z₅ is most desirable.

Z₅'s independently 'represent each a substituted or unsubstituted alkyl group, a substituted or unsubstituted aryl group or a substituted or unsubstituted heterocyclic group. In particular, a substituted alkyl group, a substituted aryl group and a substituted heterocycle group are preferable. In order to improve the solubility of the dye and the ink stability, substituents having an asymmetric carbon atom (employed as a racemate) are particularly preferable. In order to enhance association properties and improve fastness, it is preferable to employ substituents having hydroxyl group, ether groups, ester groups, cyano group, amido group or sulfonamido group.

It is preferable that R₅₁ and R₅₂ independently represent eachahydrogenatom, a substituted or unsubstituted alkyl group, a substituted or unsubstituted aryl group or a substituted or unsubstituted heterocyclic group. Among all, a hydrogen atom, a substituted alkyl group, a substituted aryl group and a substituted heterocyclic group are still preferable, provided that it is not preferable that F₅₁ and R₅₂ are both hydrogen atoms. In order to improve the solubility of the dye and the ink stability, substituents having an asymmetric carbon atom (employed as a racemate) are particularly preferable. In order to enhance association properties and improve fastness, it is preferable to employ substituents having hydroxyl group, ether groups, ester groups, cyano group, amido group or sulfonamido group.

Y₅₁ to Y₅₈ independently represent preferably each a hydrogen atom, a halogen atom, an alkyl group, an aryl group, a cyano group, an alkoxy group, an amido group, an ureido group, a sulfonamido group, a carbamoyl group, a sulfamoyl group, an alkoxycarbonyl group, a carboxyl-group or a sulfo group. A hydrogen atom, a halogen atom, a cyano group, a carboxyl group or a sulfo group is still preferable and a hydrogen atom is most desirable.

a₅₁ to a₅₄ independently represent preferably each 1 or 2 and it is still preferable that they all represent 1.

M₁ represents a hydrogen atom, ametal element or its oxide, hydroxide or halide. In particular, Cu, Ni, zn and Al are preferable. Among all, Cu is most desirable therefor.

In the case where the phthalocyanine dye represented by the above-described formula (5) is soluble in water, it is preferable that this dye has an ionic hydrophilic group. Examples of the ionic hydrophilic group include sulfo group, carboxyl group, phosphono group, quaternary ammonium groups, etc. As the ionic hydrophilic group as described above, carboxyl group, phosphono group and sulfo group are preferable and carboxyl group and sulfo group are still preferable. These carboxyl group, phosphono group and sulfo group may be in the form of a salt. Examples of the counter ion forming the salt include ammonium ion, alkali metal ions (for example, lithium ion, sodium ion and potassium ion) and organic cations (for example, tetramethylammonium ion, tetramethylguanidium ion and tetramethylphosphonium). Among these counter ions, alkali metal salts are preferable. In particular, lithium salts are still preferable since they can elevate the solubility of a dye and improve ink stability.

Concerning the number of the ionic hydrophilic groups, it is preferable that a phthalocyanine dye has at least 2 ionic hydrophilic groups, still preferably at least 2 sulfo groups and/or carboxyl groups, per molecule.

Concerning the combination of preferable substituents in the compound represented by the above-described formula (5) , it is favorable that at least one of the substituents is selected from the above-described preferable groups . A compound having a larger number of substituents selected from the above-described preferable groups is still preferable and a compound all of the substituents of which are selected from the above-described preferable ones is most desirable.

Concerning the chemical structure of the phthalocyanine dye according to the invention, it is preferable to introduce at least one electron-withdrawing group such as sulfinyl group, sulfonyl group or sulfamoyl group into each of the 4 benzene rings of phthalocyanine so as to give a sum of σp's of the substituents in the whole phthalocyanine skeleton of 1.6 or more.

Next, Hammett's substituent constant σp will be illustrated. Hammett's rule, which is an empirical rule proposed in 1935 by L.P. Hammett for quantitatively discussing the effect of a substituent on a reaction or equilibrium of a benzene derivative, has been widely accepted as reasonable today. Substituent' s constants determined by Hammett' s rule include σp and σm. These parameters are generally reported in detail in a large number of publications, for example, J.A. Dean, *Lange's Handbook of Chemistry,* 12th ed., 1979 (Mc Graw-Hill) and *Kagaku* no *Ryoiki,* extra issue No. 122, pp. 96-103, 1979 (Nankodo).

It is generally unavoidable that the phthalocyanine derivative represented by the above-described formula (2) occurs as a mixture of analogs differing in the introduction sites and number of the substituents Xn (n=1 to 4) and Ym (m=1 to 4) depending on the synthesis method. In the formula, therefore, such an analog mixture is frequently represented in the statistically averaged state. In the invention, these analog mixtures are classified into the following 3 types and thus it is found out that specific mixtures are particularly preferable. That is to say, phthalocyanine dye analog mixtures represented by the above-described formulae (2) and (5) are classified and defined in the following 3 types depending on the positions of substituents. The positions of Y₅₁, Y₅₂, Y₅₃, Y₅₄, Y₅₅, Y₅₆, Y₅₇ and Y₅₈ in the formula (5) are referred to respectively as the 1-, 4-, 5-, 8-, 9-, 12-, 13-and 16-positions.
(1) β-position substitution type: phthalocyanine dyes having specific substituents at the 2- and/or 3-positions, the 6- and/or 7-positions, the 10- and/or 11-positions, the 14-and/or 15-positions.
(2) α-position substitution type: phthalocyanine dyes having specific substituents at the 1- and/or 4-positions, the 5- and/or 8-positsons, the 9- and/or 12 -positions, the 13- and/or 16-positions.
(3) α,β-mixed position substitution type: phthalocyanine dyes having specific substituents at the 1- to 16-positions without any recognizable pattern.

In illustrating phthalocyanine dye derivatives having different structures (in particular, different substitution positions) herein, use is made of the above classification into the β-posit-ion substitution type, the α-position substitution type and the α,β-mixed position substitution type as defined above.

The phthalocyanine derivatives to be used in the invention can be synthesized by combining methods described or cited in, for example, Shirai and Kobayashi, *Futaroshianin Kagaku to Kino,* pp.1-62 (IPC), C.C. Lezonff and A.B.P. Lever, *Phthalocyanines-Properties* and Applications, pp. 1-54 (VCH) and so on, or methods similar thereto.

The phthalocyanine compound represented by the formula (2) according to the invent! on can be synthesized via sulfonation, sulfonyl chloridation or amidation of an unsubstituted phthalocyanine compound, as reported in International Publication 00/17275, International Publication 00/08103, International Publication 00/08101, International Publication 98/41853, JP-A-10-36471, etc. In such a case, sulfonation may occur at any position of the phthalocyanine nucleus and the number of groups to be sulfonated can be hardly controlled. In the case of introducing sulfo group under such reaction conditions, therefore, the positions and number of the sulfo groups introduced cannot be specified and thus a mixture of analogs differing from each other in the number and positions of substituents are obtained. To synthesize a dye starting from this mixture, it is therefore impossible to specify the number or substitution positions of sulfamoyl substituents on the heterocycle. As a result, the dye is obtained as a mixture of the α, β - mixed position substitution type containing several compounds differing from each other in the number and positions of substituents.

As discussed above, nobler oxidation potential is achieved and ozone resistance is improved by introducing a large number of electron-withdrawing groups such as sulfamoyl group into the phthalocyanine nucleus. According to the synthesis method as described above, contamination with a phthalocyanine dye having a smaller number of electron-withdrawing groups introduced (i.e. , having a less noble oxidation potential) is unavoidable. To improve the ozone resistance, it is therefore favorable to employ a synthesis method whereby the formation of a compound having a less noble oxidation potential can be inhibited.

The phthalocyanine compound according to the invention represented by the formula (5) can be derived from a tetrasulfophthalocyanine compound which is obtained by reacting a phthalonitrile compound (compound P) represented by the following formula and/or a diiminoisoindoline derivative (compound Q) with a metal derivative represented by the formula (6) or reacting a 4-sulfophthalocyanine derivative (compound R) with a metal derivative represented by the formula (6).

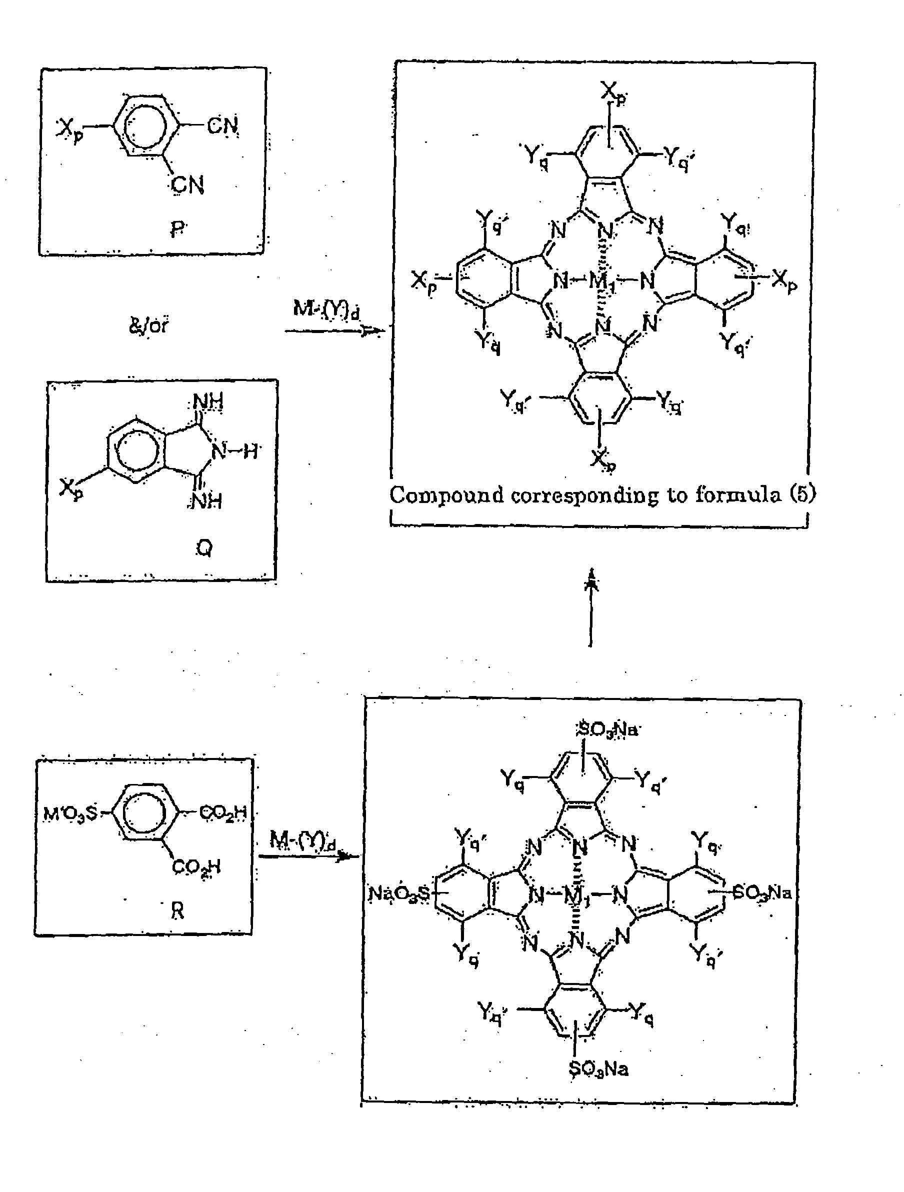

In the above formulae, Xp corresponds to X₅₁, X₅₂, X₅₃ or X₅₄ in the above-described formula (5).Yq and Yq' correspond respectively to Y₅₁, Y₅₂, Y₅₃, Y₅₄, Y₅₅, Y₅₆, Y₅₇ or Y₅₈ in the formula (5). In compound R, M' represents a cation.

As examples of the cation represented by M', citation may be made of alkali metal ions such as Li, Na and K and organic cations such as triethylammonium ion and pyridinium ion.

Formula (6) : M- (Y) d

In the formula (6), M has the same meaning as M in the above formula (2) and M₁ in the above formula (5) ; Y represents a monovalent or divalent ligand such as a halogen atom, acetate anion, acetylacetonate or oxygen; and d is an integer of from 1 to 4.

According to the above-described synthesis method, therefore, a definite number of desired substituents can be exclusively introduced. In the case where it is intended to introduce a large number of electron-withdrawing groups to make oxidation potential nobler as in the invention, the above-described synthesis method is much superior to the method as described above for synthesizing a phthalocyanine compound of the formula (2).

The phthalocyanine compound represented by the above-described formula (5) usually occurs as a mixture of compounds represented by the following formulae (a) -1 to (a) -4 which are isomers differing in the Xp substitution position, i.e., the β-position substitution type.

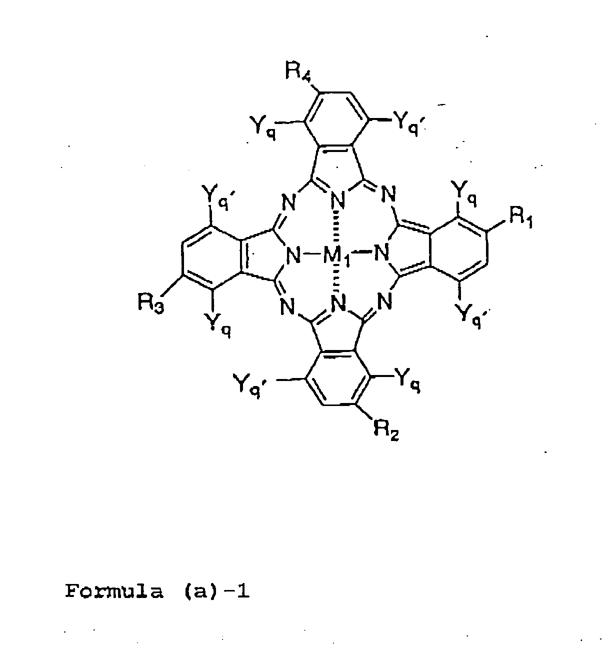

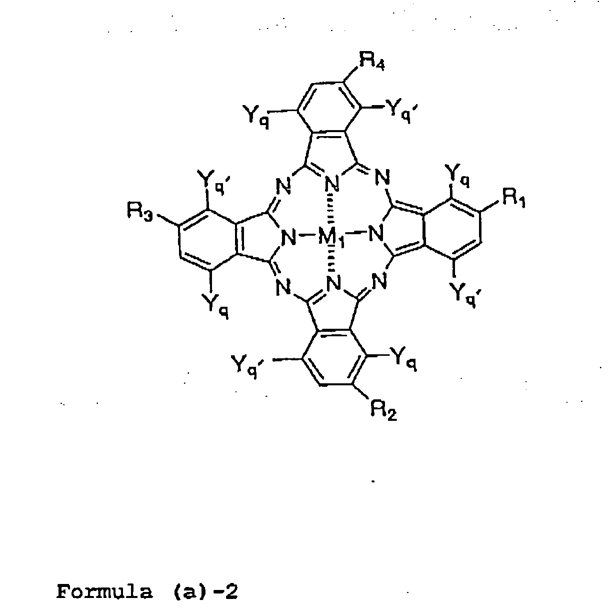

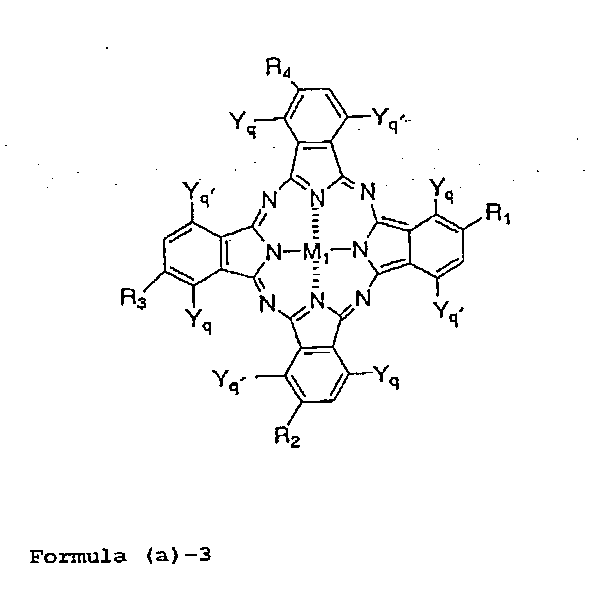

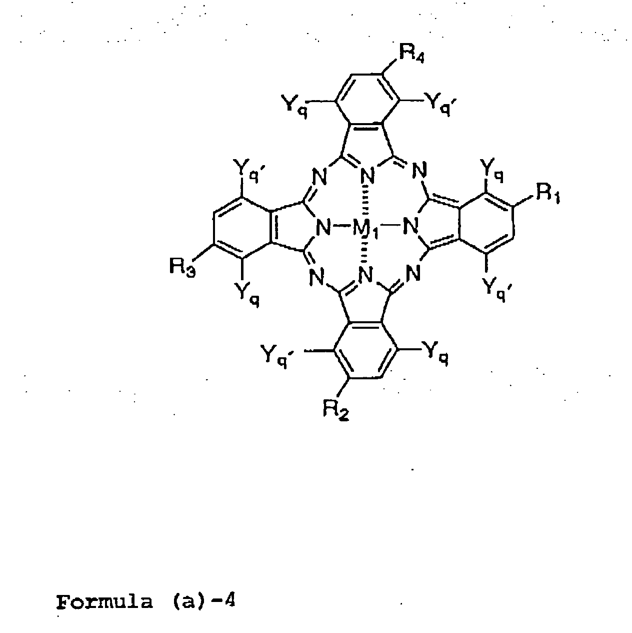

When Xp's which are all the same are used in the above synthesismethod, aβ-position substitution typephthalocyanine dye wherein X₅₁, X₅₂, X₅₃ and X₅₄ are all the same can be obtained. When different Xp's are used combinedly, a dye having substituents of the same type but differing in parts or a dye having substituents different from each other can be obtained. Among the dyes of the formula (5), these dyes having electron-withdrawing groups different from each other are particularly preferable, since the solubility and association properties of the dyes and ink stability with the passage of time, etc. can be controlled.

Although the detailed reason therefor is still unknown, the β-position substitution type is obviously superior in color hue, light-fastness, ozone gas resistance, etc. to the α,β-mixed position substitution type.

Next, example compounds I-1 to I-12 and compounds 101 to 190 will be cited as specific examples of the phthalocyanine dyes represented by the above-described formulae (2) and (5), though the phthalocyanines usable in the invention are not restricted thereto. 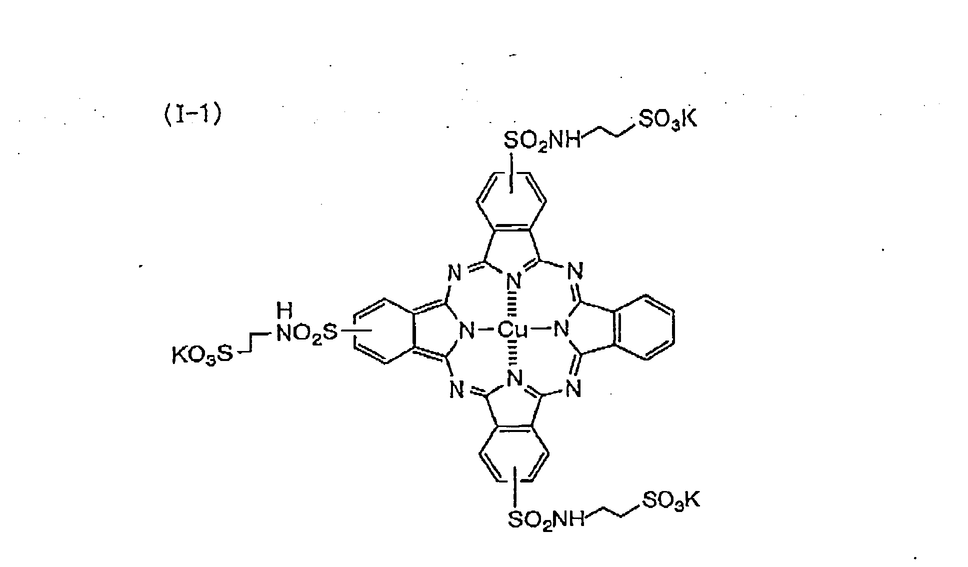 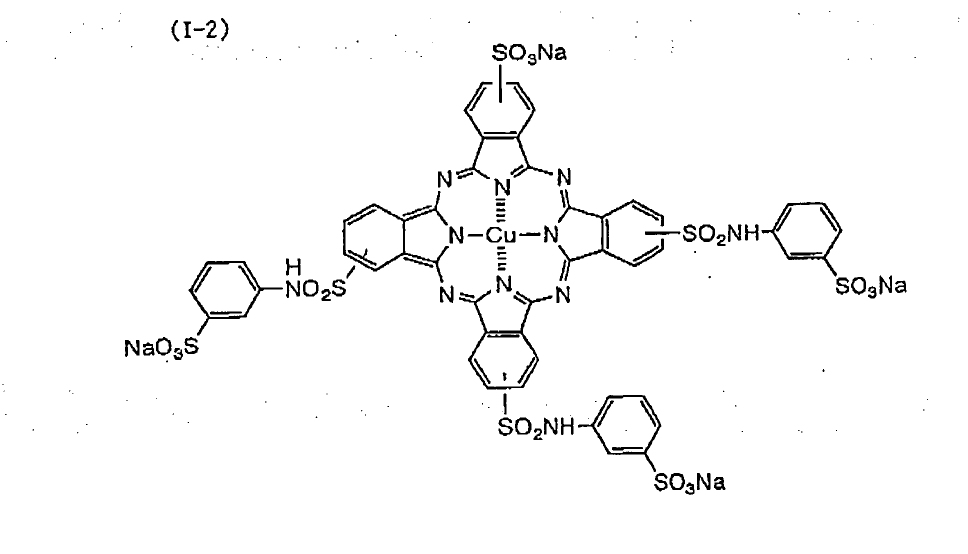 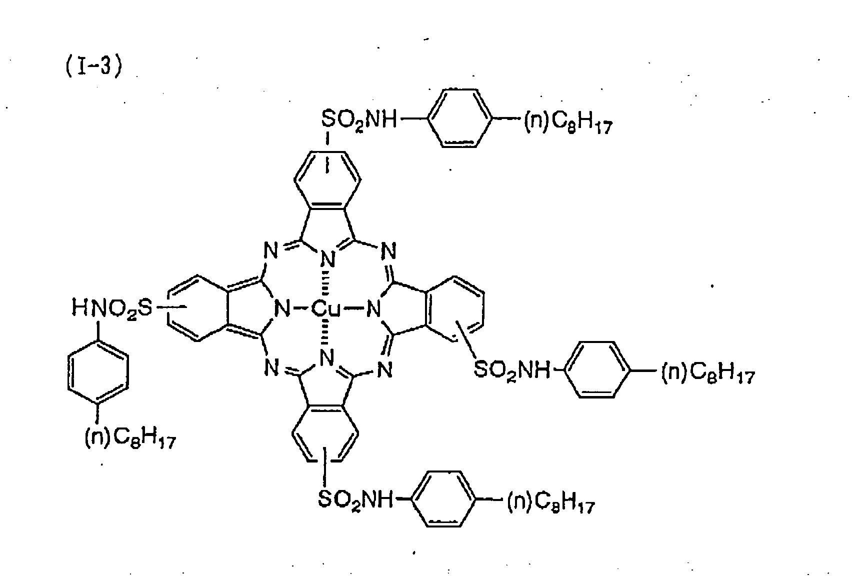 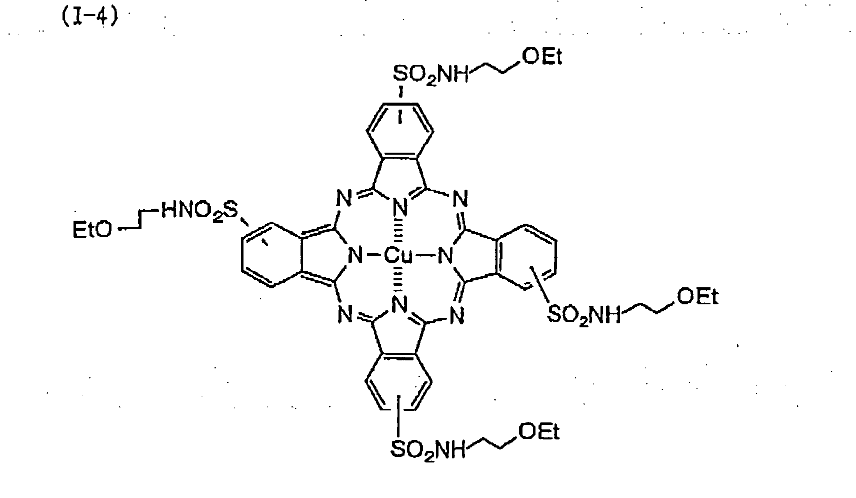 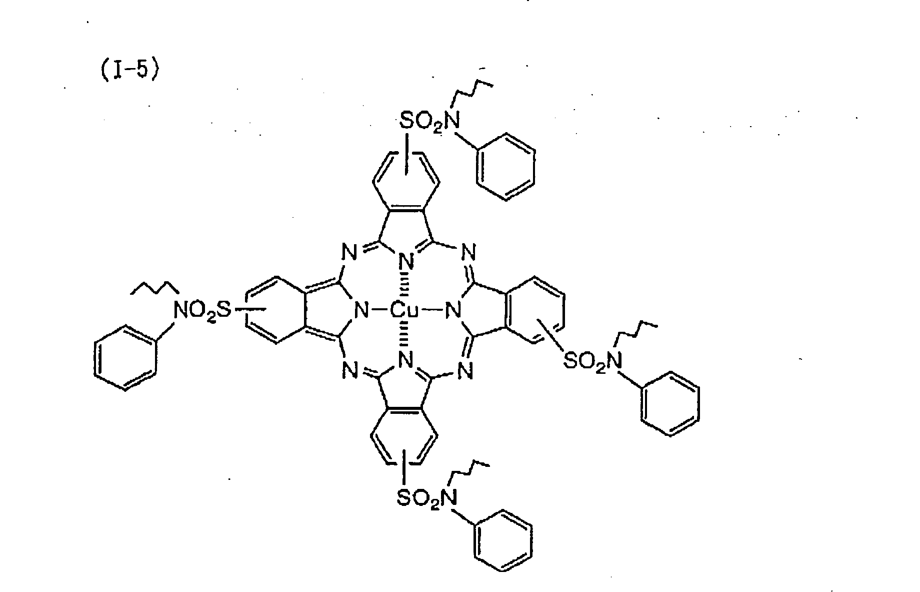 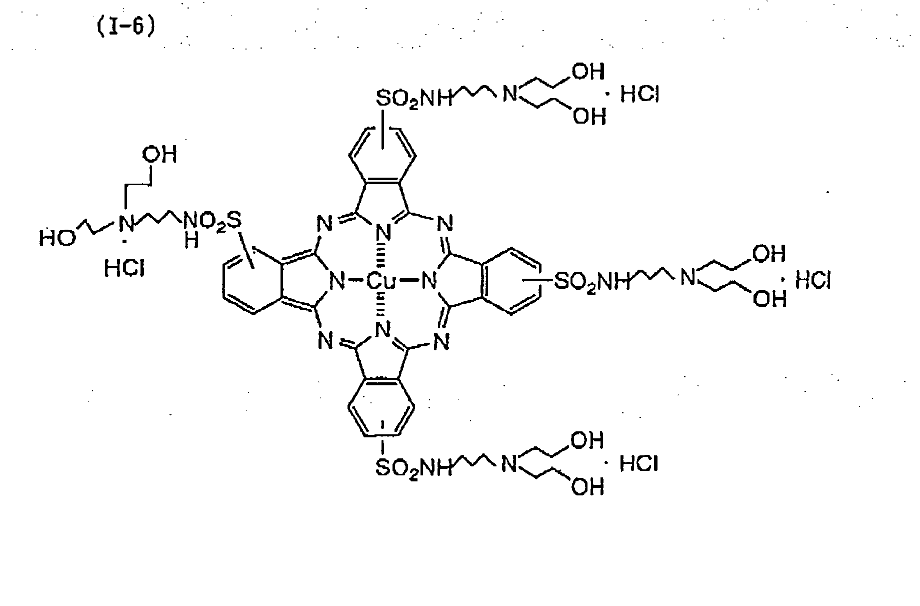 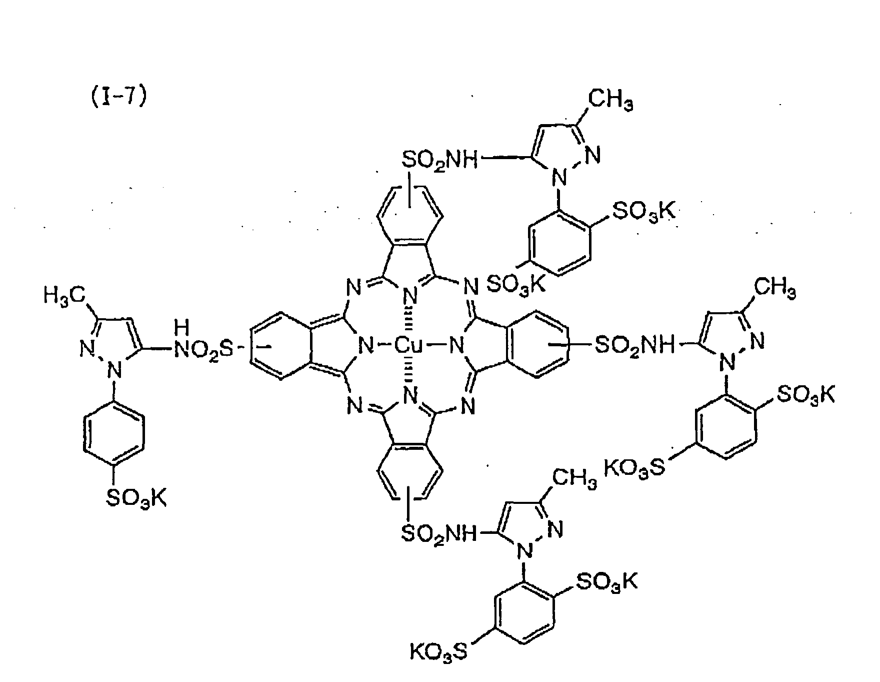 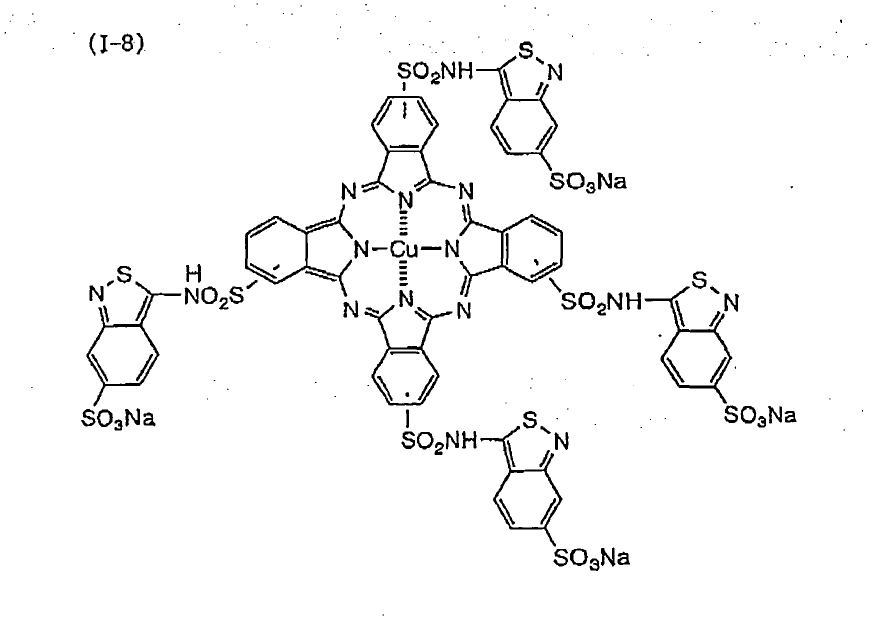 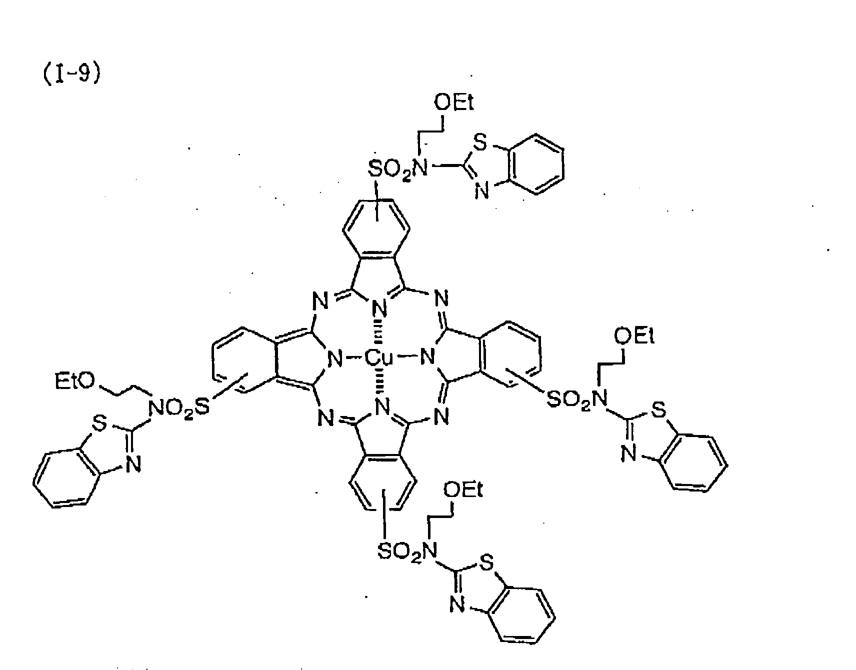 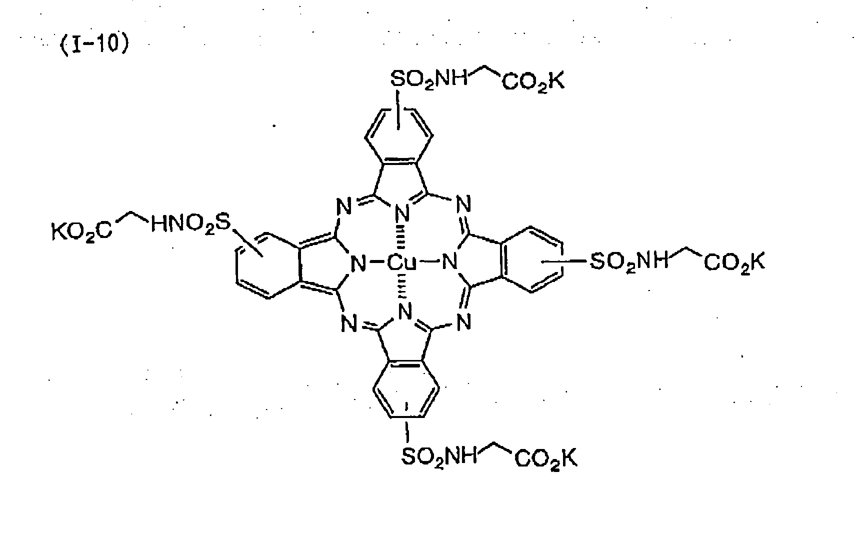 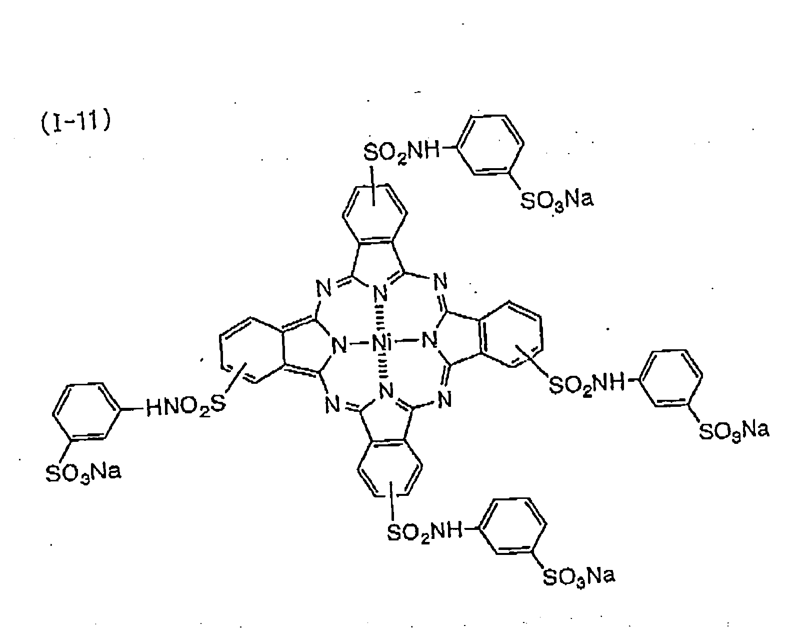 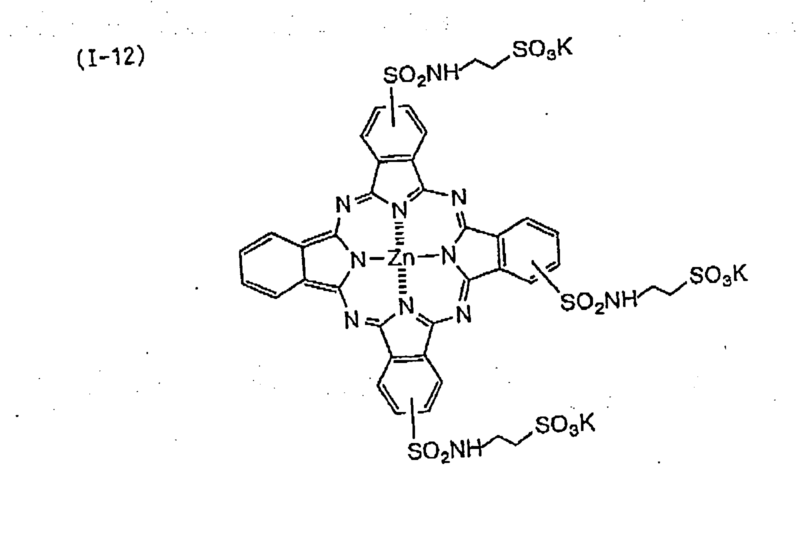 In the following tables, specific examples in each of the combinations (X₁, X₂), (Y₁₁, Y₁₂) , (Y₁₃, Y₁₄) , (Y₁₅, Y₁₆) and (Y₁₇, Y₁₈) are independent from each other and listed in random order.

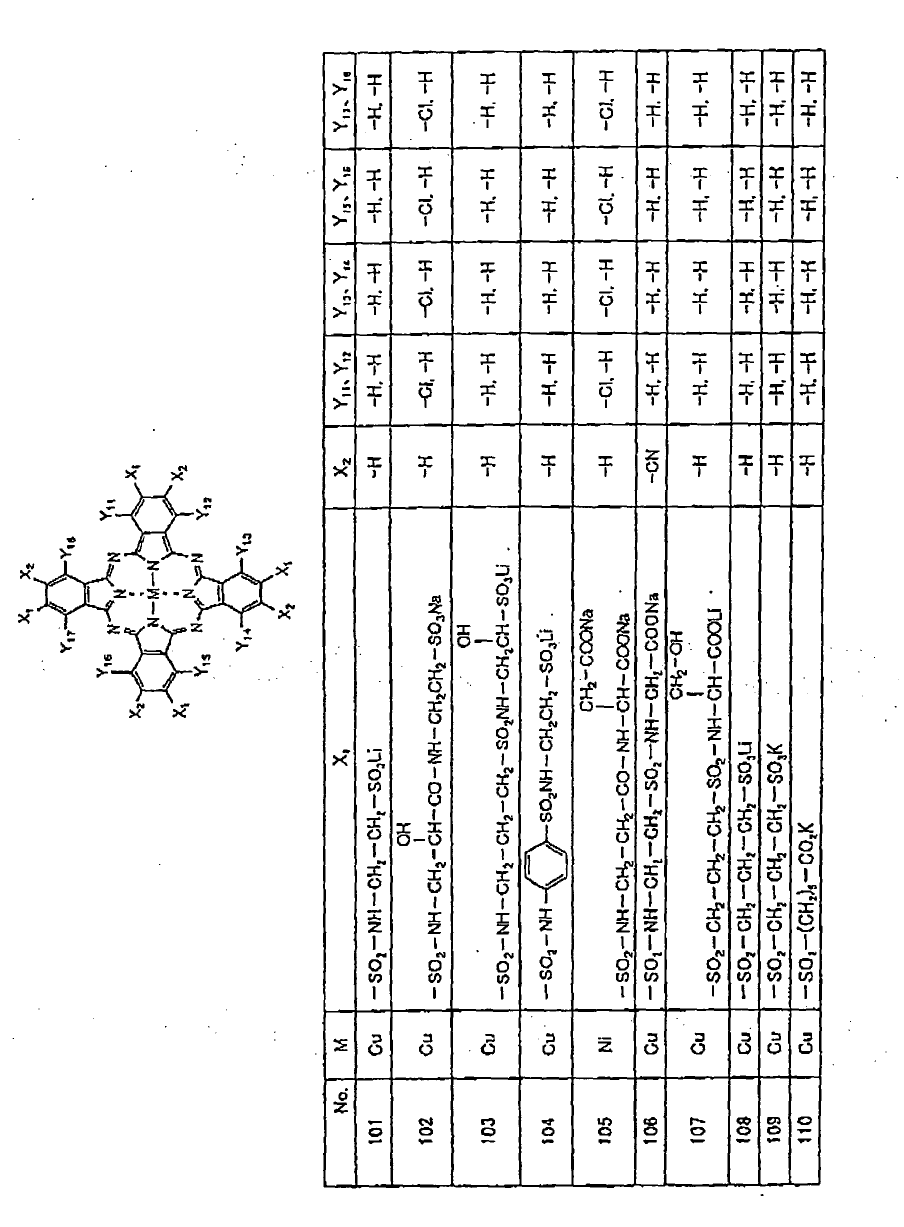

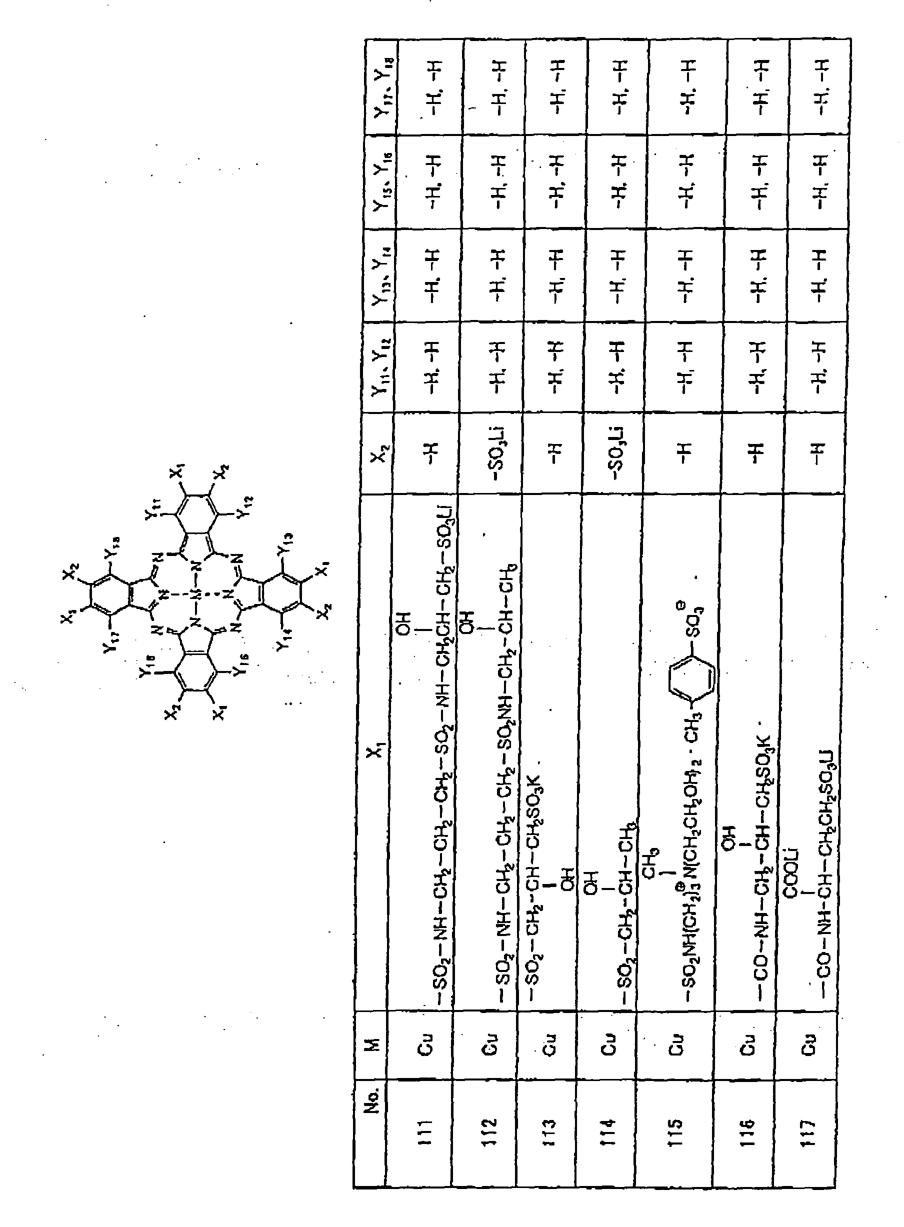

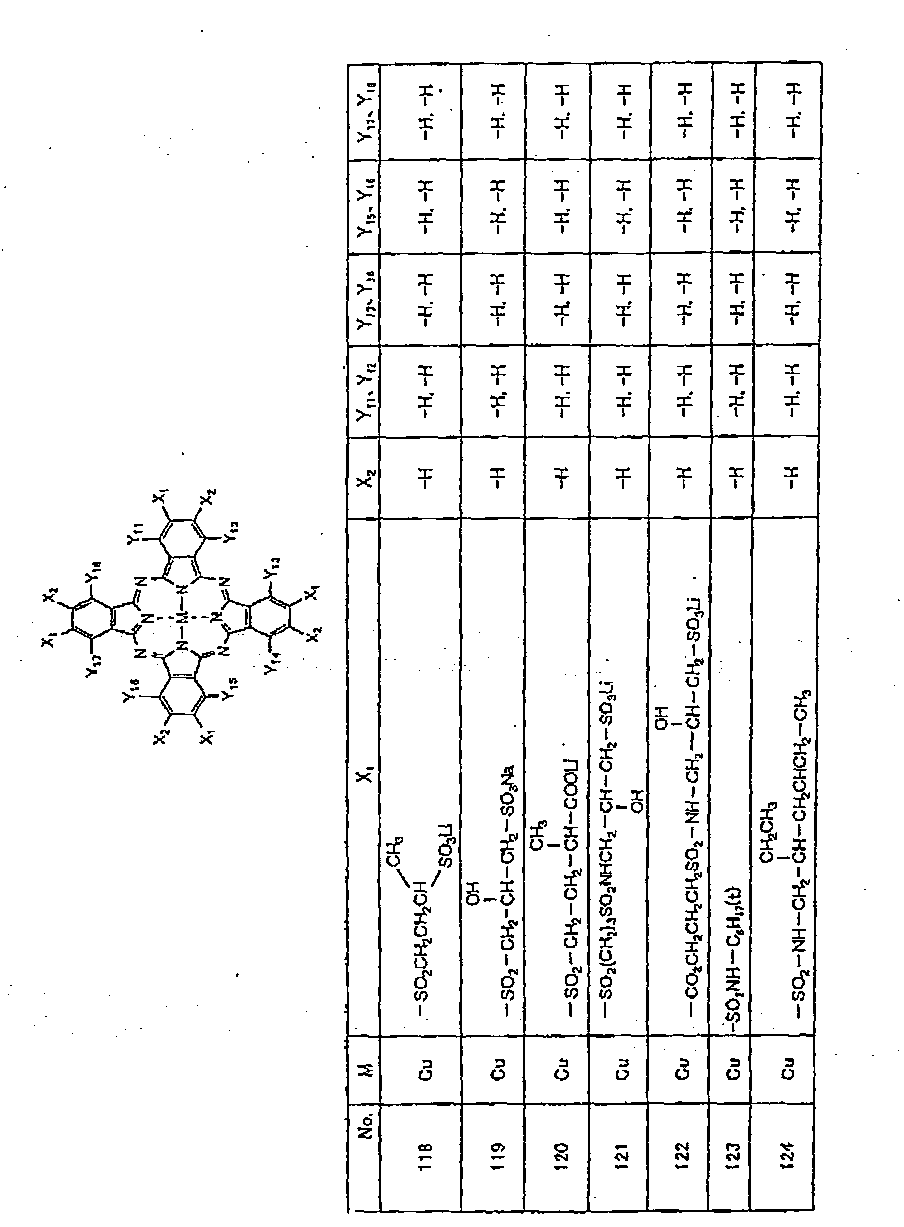

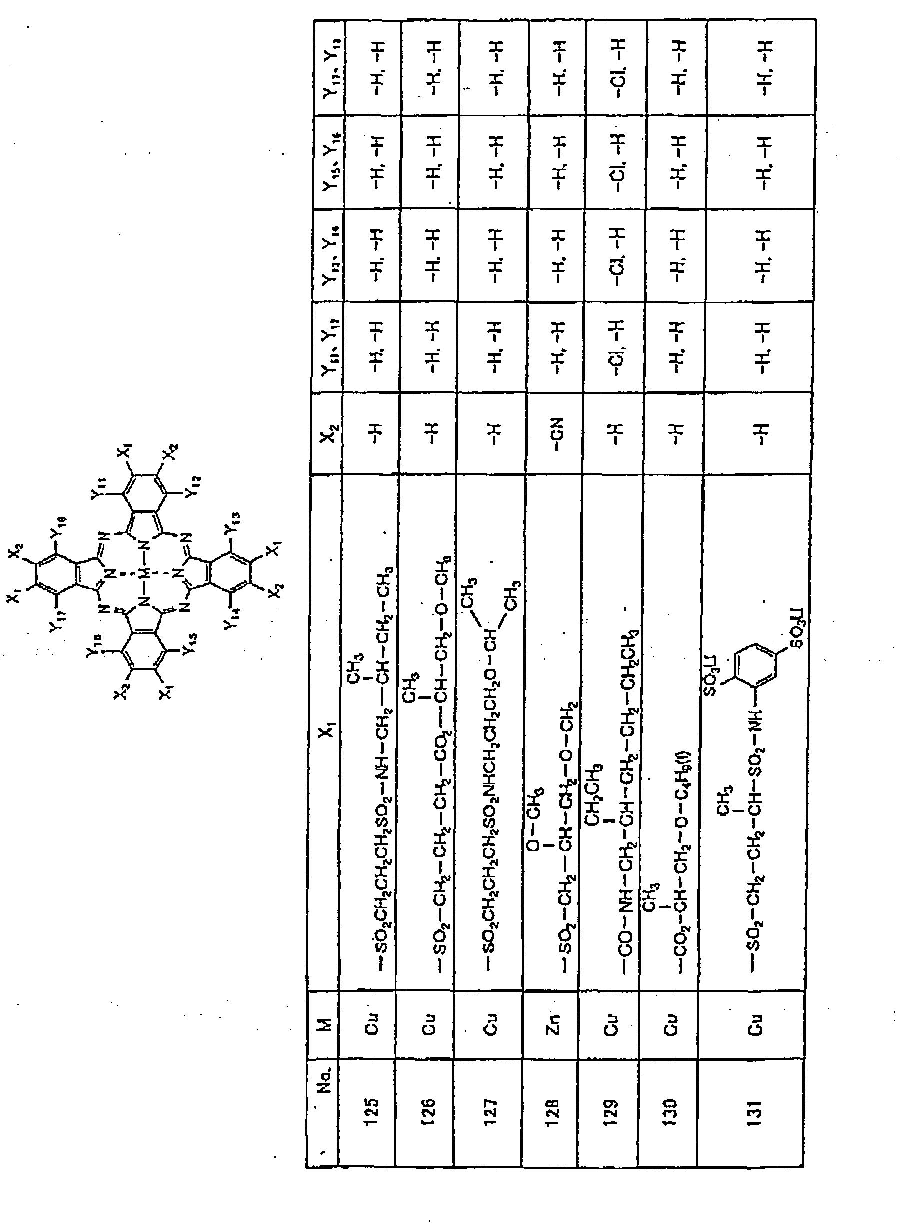

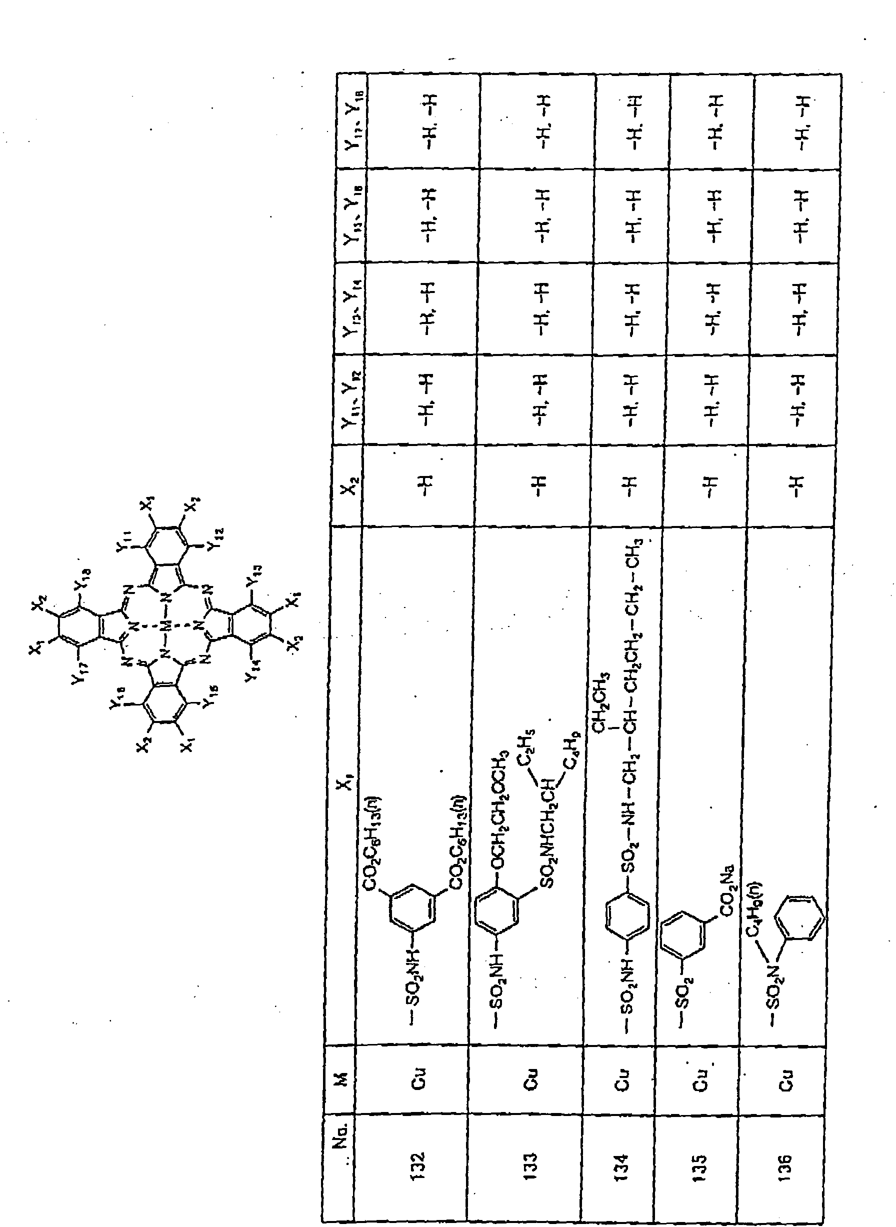

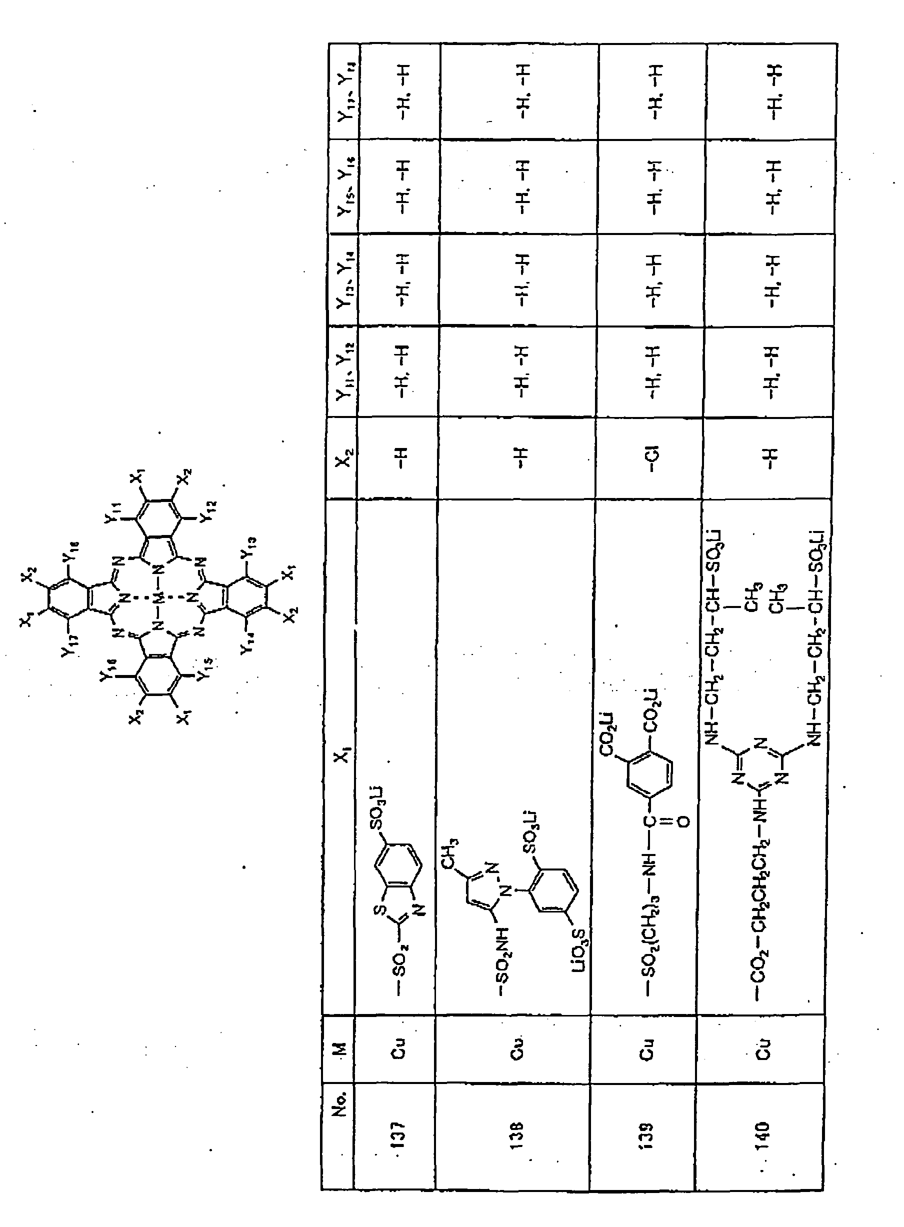

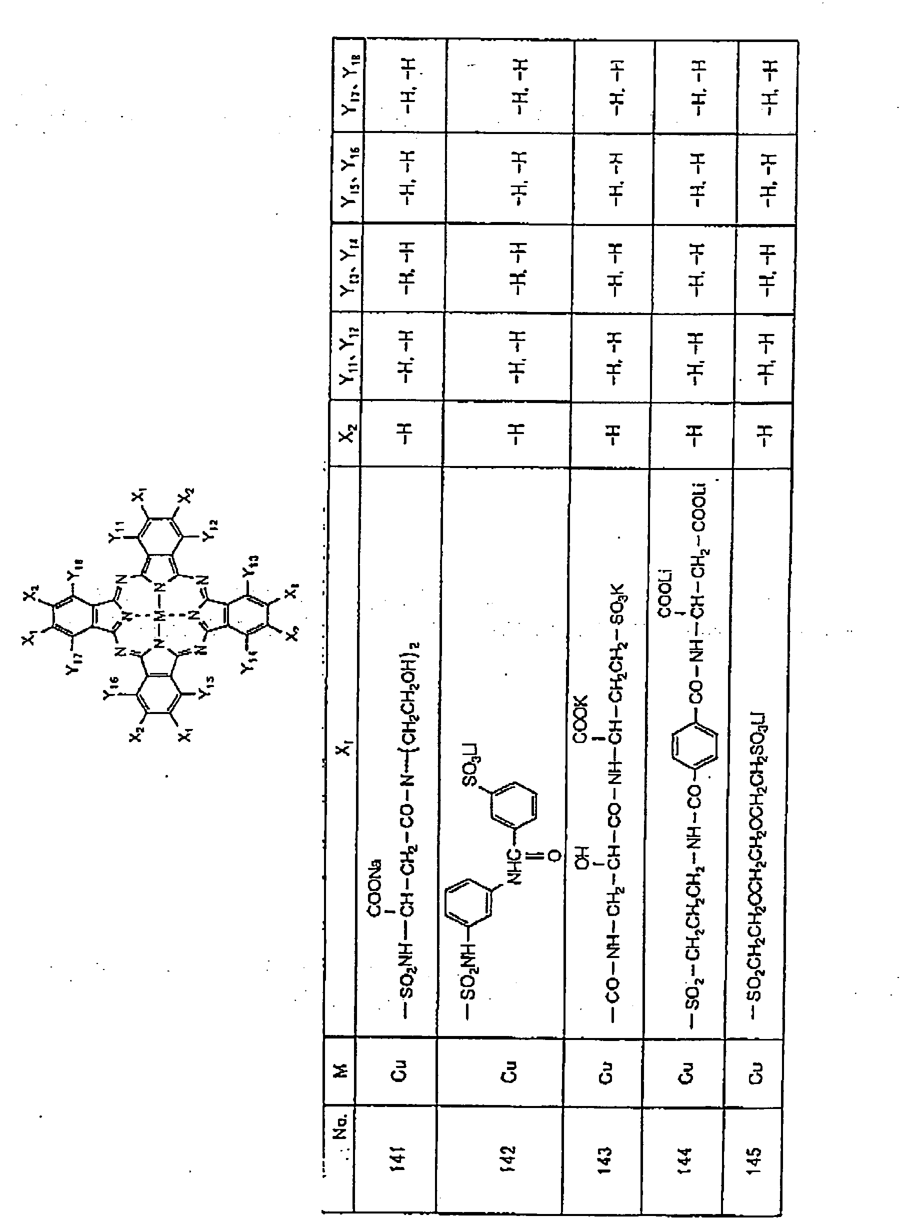

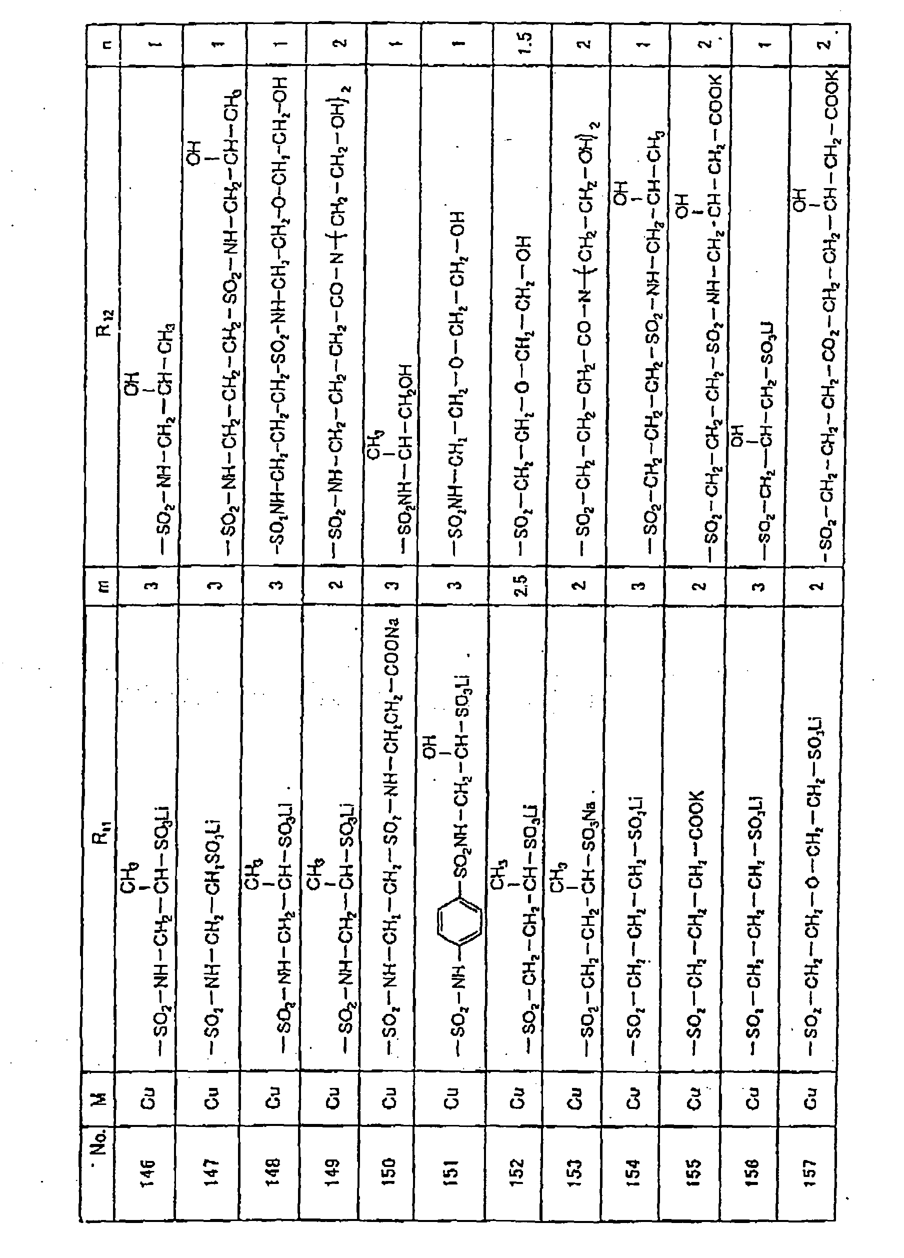

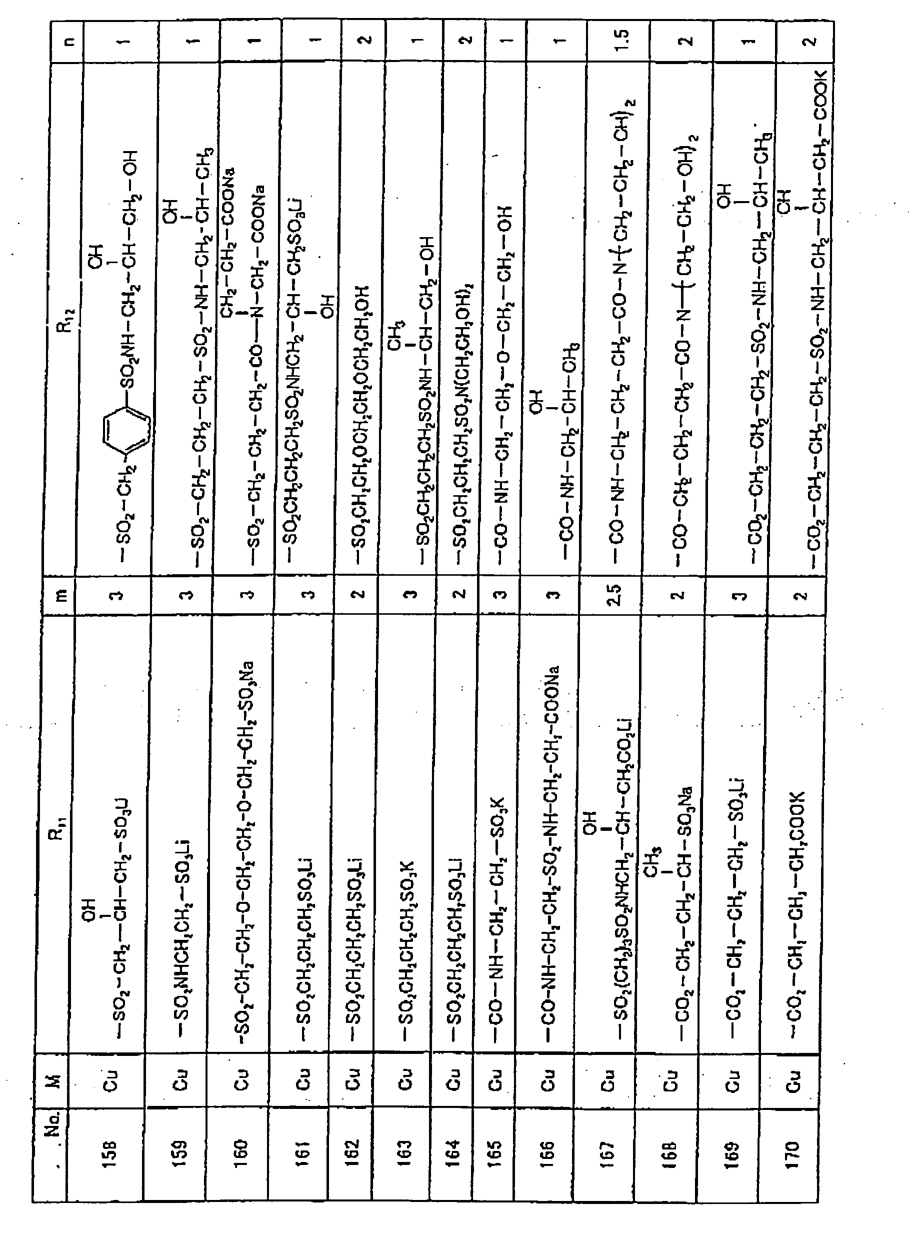

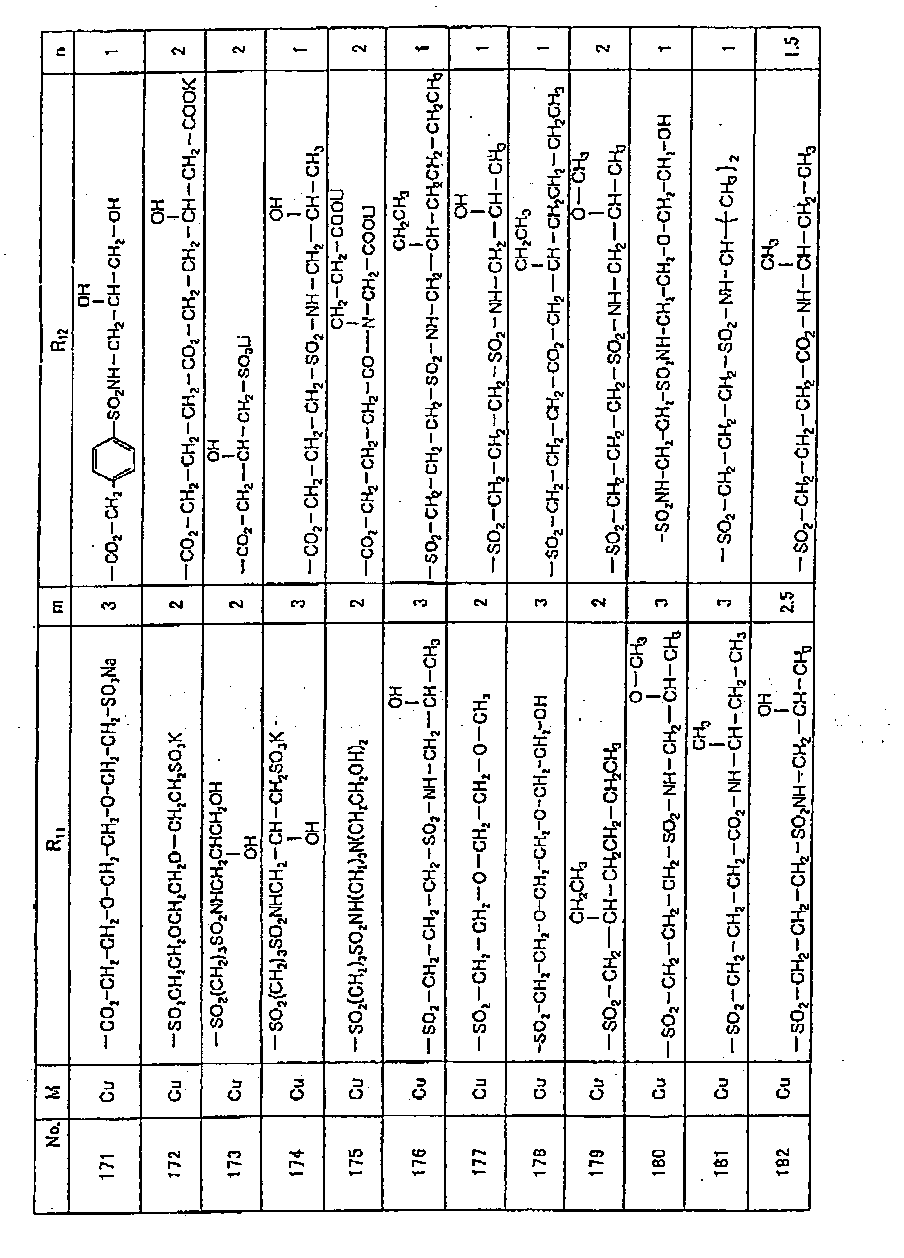

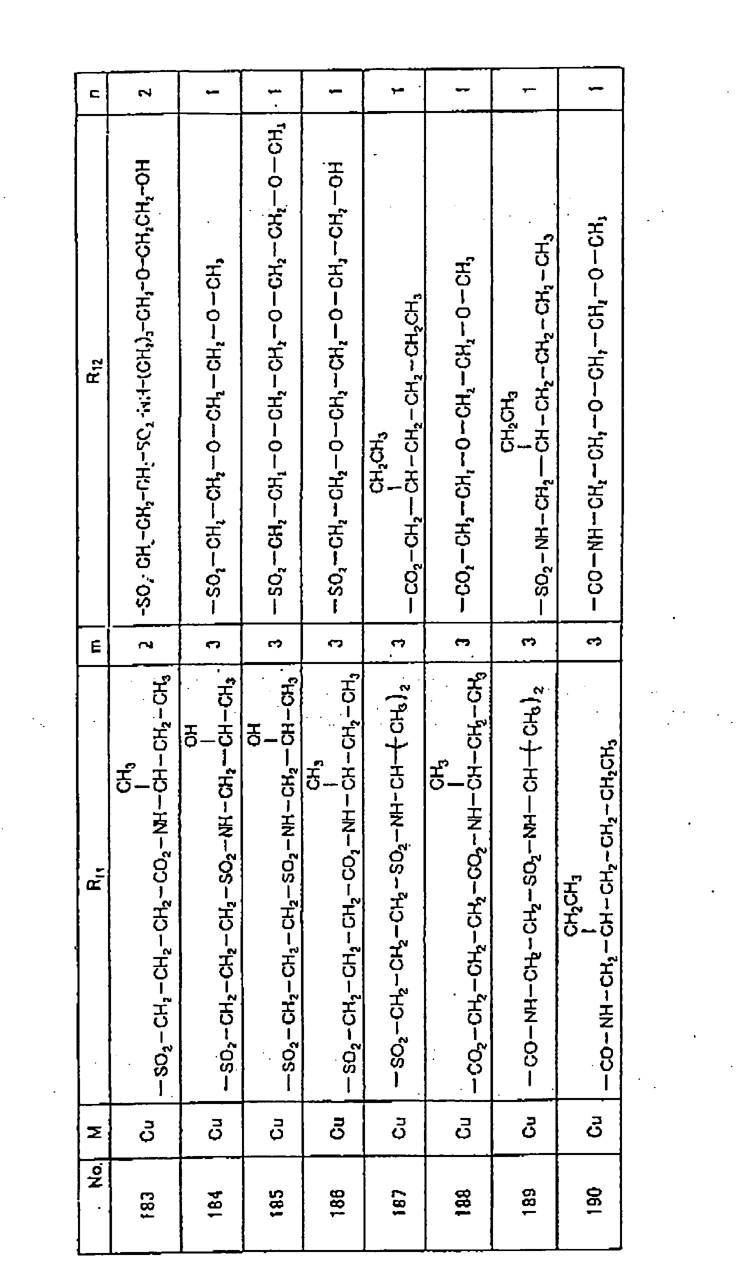

The structure of the phthalocyanine compound Nos. 146 to 190 is as follows, wherein m and n stand for each the number of substituents.

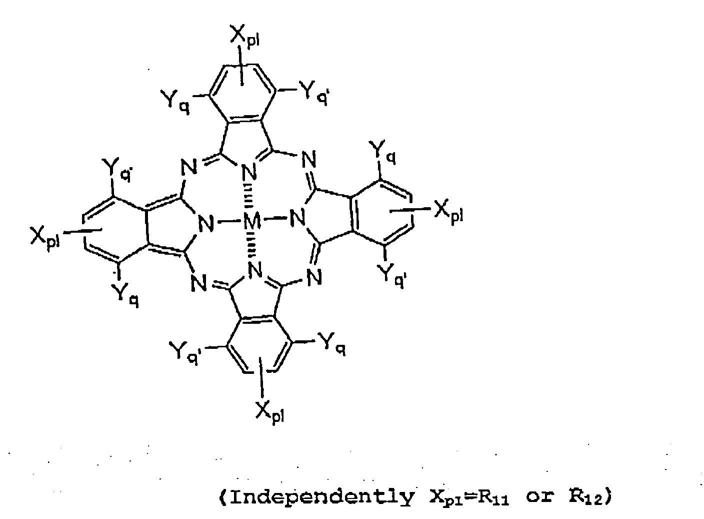

The phthalocyanine dyes represented by the above-described formula (2) can be synthesized in accordance with the patents as cited above. Also, the phthalocyanine dyes represented by the formula (5) can be synthesized by methods reported by JP-A-2001-226275, JP-A-2001-9₁6610, JP-A-2001-47013 and JP-A-2001-193638, in addition to the above-described synthesis methods. However, starting materials, dye intermediates and synthesis routes are not restricted thereto.

The inkjet ink set according to the invention contains the phthalocyanine dye representedbythe formula (2) preferably in an amount of from 0.2 to 20% by mass, still preferably from 0.5 to 15% by mass in the cyan ink.

### [Dye represented by formula (3)]

The dye represented by the formula (3) is preferably a magenta dye.

The above-described dye to be used in the invention has a dye structure of having a chromophore represented by the formula: (heterocycle A) -N=N- (heterocycle B). In this structure, an aromatic nitrogen-containing 6-membered heterocycle is attached as a coupling component to at least one side of an azo group. It is preferable that the dye has a structure carrying an aromatic cyclic amino group or a heterocyclic amino group as an auxochrome. It is alto preferable to remove α-hydrogen from the azo dye to as to elevate the oxidation potential of the dye. A method of elevating the oxidation potential is described in Japanese Patent Application 2001-254878.

The forced discoloration kinetic constant of this dye to ozone gas is preferably 5.0x10⁻² [hour⁻¹] or less, still preferably 3. 0x10⁻² [hour⁻¹] or less and still preferably 1.5x10⁻²[hour⁻¹] or less.

The forced discoloration kinetic constant to ozone gas is determined as follows. Namely, the reflection density of an image printed on a reflective medium with the use of the ink alone is measured through a status A filter and a point showing a reflection density in the main spectroscopic absorption region of the ink of 0.90 to 1.10 is specified as the initial densitypointof the ink. Thus, this initial density is referred to as the starting density (=100%). Next, this print is forcedly discolored using an ozone discoloration test machine capable of continuously generating 5 mg/L of ozone and the time (t) until the reflection density amounts to 80% of the initial density is measured. Then the reciprocal number [hour⁻¹] of this time is determined and referred to as the discoloration reaction kinetic constant, assuming that the relationship between discoloration density and time follows kinetic equation of primary reaction. Accordingly, the discoloration reaction kinetic constant, which corresponds to the discoloration reaction kinetic constant in the colored region printed with the use of the ink, is employed herein as the discoloration reaction kinetic constant of the ink.

As a printed test patch, use can be made of a patch a patch having black square marks printed thereon in accordance with JIS CODE 2223, a stepwise color patch of MacBeth color chart, and other arbitrary stepwise density patches capable of giving a measurement area.

The reflection density of a reflection image (stepwise color patch) printed for measurement is a density which is measured with a densitometer provided with a status A filter fulfilling the requirement in accordance with International Standards ISOS-4 (geometrical requirements for reflection density).

In a test chamber for measuring the forced discoloration kinetic constant to ozone gas, an ozone generator (for example, a high-voltage discharge system applying volts alternative current on dry air) capable of maintaining the ozone gas concentration within the chamber continuously at 5 mg/L is provided and the exposure temperature is controlled at 25°C.

This forced discoloration kinetic constant serves as an indication of the easiness of being oxidized in oxidative atmospheres in the environment, for example, photo-chemical smog, autoexhaust, organic vapors from coated furniture surface or carpets, gases generating within frames in a light house and so on. That is to say, it is an indication wherein these oxidative atmospheres are typified by ozone gas.

From the viewpoint of color hue, it is preferable that a magenta ink with the use of this dye has λₘₐₓ or from 500 to 580 nm. It is also preferable that the magenta ink has a small half-value width in the longer wave side and the shorter wave side of the maximum absorption wavelength, i. e. , showing a sharp absorption. More specifically speaking, the absorption can be sharpened by introducing a methyl group into the α-position (for example, R₃₂ in the formula (3-A)), as reported by JP-A-2002-309133.

In the formula (3), A₃₁ represents a 5-membered heterocyclic group.

B₃₁ and B₃₂ each represents =CR₃₁- or -CR₃₂=, or one of them represents a nitrogen atom while the other represents =CR₃₁-or -CR₃₂=. R₃₅ and R₃₆ independently represent each a hydrogen atom or a substituent. The substituent is an aliphatic group, an aromatic group, a heterocyclic group, an acyl group, an alkoxycarbonyl group, an aryloxycarbonyl group, a carbamoyl group, an alkylsulfonyl group, an arylsulfonyl group or a sulfamoyl group and hydrogen atoms in each substituent may be further substituted.

G₃, R₃₁ and R₃₂ independently represent each a hydrogen atom or a substituent. The substituent is a halogen atom, an aliphatic group, an aromatic group, a heterocyclic group, a cyano group, a carboxyl group, a carbamoyl group, an alkoxycarbonyl group, an aryloxycarbonyl group, a heterocyclic oxycarbonyl group, an acyl group, a hydroxy group, an alkoxy group, an aryloxy group, a heterocyclic oxy group, a silyloxy group, an acyloxy group, a carbamoyloxy group, an alkoxycarbonyloxy group, an aryloxycarbonyloxy group, an amino group, an acylamino group, an ureido group, a sulfamoylamino group, an alkoxycarbonylamino group, an aryloxycarbonylamino group, an alkylsulfonylamino group, an arylsulfonylamino group, a heterocyclic sulfonylamino group, a nitro group, an alkylthio group, an arylthio group, a heterocyclic thio group, an alkylsulfonyl group, an arylsulfonyl group, a heterocyclic sulfonyl group, an alkylsulfinyl group, an arylsulfinyl group, a heterocyclic sulfinyl group, a sulfamoyl group or a sulfo group and hydrogen atoms in each substituent may be further substituted.

Also, R₃₁ and R₃₅ or R₃₅ and R₃₆ may be bonded to each other to form a 5- or 6-membered ring.

Next, the dye of the above-described formula (3) will be described in greater detail.

In the formula (3), A₃₁ represents a 5-membered heterocyclic group. Examples of the hetero atom in the heterocycle include N, O and S. A nitrogen-containing 5-membered heterocycle is preferable. Further, an aliphatic ring, an aromatic ring or another heterocycle may be fused to the heterocycle. Preferable examples of the heterocycle represented by A₃₁ include a pyrazole ring, an imidazole ring, a thiazole ring, an isothiazole ring, a thiadiazole ring, a benzothiazole ring, a benzooxazole ring and a benzoisothiazole ring. Each heterocyclic group may be further substituted. Among all, a pyrazole ring, an imidazole ring, an isothiazole ring, a thiadiazole ring, a benzothiazole ring, and a benzotriazole ring represented by the following formulae (a) to (g) are preferable.

In the following formulae (a) to (g) , R₃₀₇ to R₃₂₂ represent the same substituents as G₃, R₃₁ and R₃₂ in the formula (3).

Among the formulae (a) to (g), a pyrazole ring and an isothiazole ring represented by the formulae (a) and (b) are preferable and a pyrazole ring represented by the formula (a) is most desirable.

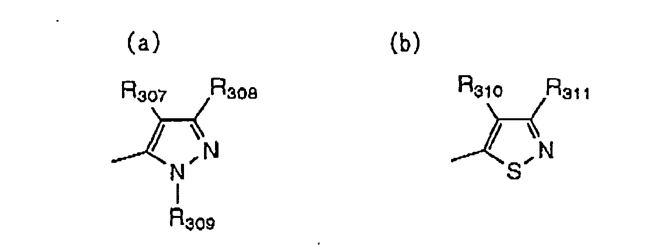

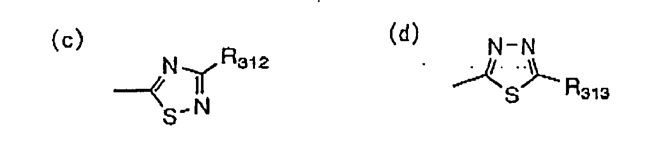

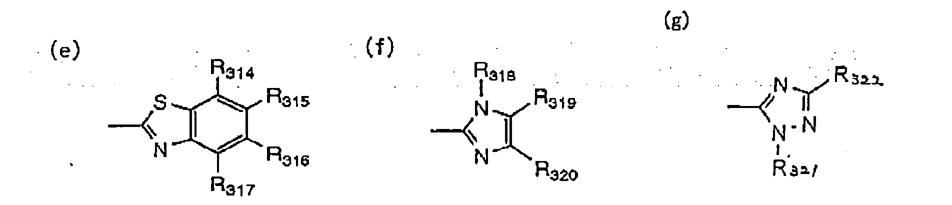

In the formula (3), B₃₁ and B₃₂ each represents =CR₃₁- or -CR₃₂=, or one of them represents a nitrogen atom while the other represents =CR₃₁- or -CR₃₂=, though it is preferable that B¹ and B² each represents =CR₃₁- or -CR₃₂=.

R₃₅ and R₃₆ independently represent each a hydrogen atom or a substituent. The substituent is an aliphatic groups an aromatic group, a heterocyclic group, an acyl group, an alkoxycarbonyl group, an aryloxycarbonyl group, a carbamoyl group, an alkylsulfonyl group, an arylsulfonyl group or a sulfamoyl group and hydrogen atoms in each substituent may be further substituted.

As preferable examples of R₃₅ and R₃₆, hydrogen atom, aliphatic groups, aromatic groups, heterocyclic groups, acyl groups, alkylsulfonyl groups and arylsulfonyl groups may be cited. Hydrogen atom, aromatic groups, heterocyclic groups, acyl groups, alkyl- or and arylsulfonyl groups are still preferable and hydrogen atom, aryl groups and heterocyclic groups are most desirable. Hydrogen atoms in each substituent maybe further substituted. However, R₃₅ and R₃₆ do not represent hydrogen atoms at the same time.

G₃, R₃₁ and R₃₂ independently represent each a hydrogen atom or a substituent. The substituent is a halogen atom, an aliphatic group, an aromatic group, a heterocyclic group, a cyano group, a carboxyl group, a carbamoyl group, an alkoxycarbonyl group, an aryloxycarbonyl group, a heterocyclic oxycarbonyl group, an acyl group, a hydroxy group, an alkoxy group, an aryloxy group, a heterocyclic oxy group, a silyloxy group, an acyloxy group, a carbamoyloxy group, an alkoxycarbonyloxy group, an aryloxycarbonyloxy group, an amino group, an acylamino group, an ureido group, a sulfamoylamino group, an alkoxycarbonylamino group, an aryloxycarbonylamino group, an alkylsulfonylamino group, an arylsulfonylamino group, a heterocyclic sulfonylamino group, a nitro group, an alkylthio group, an arylthio group, a heterocyclic thio group, an alkylsulfonyl group, an arylsulfonyl group, a heterocyclic sulfonyl group, an alkylsulfinyl group, an arylsulfinyl group, a heterocyclic sulfinyl group, a sulfamoyl group or a sulfo group and hydrogen atoms in each substituent may be further substituted.

Preferable examples of G₃ include a hydrogen atom, a halogen atom, an aliphatic group, an aromatic group, a hydroxy group, an alkoxy group, an aryloxy group, an acyloxy group, a heterocyclic oxy group, an amino group, an acylamino group, an ureido group, a sulfamoylamino group, an alkoxycarbonylamino group, an aryloxycarbonylamino group, alkyl- and arylthio groups and a heterocyclic thio groups. Still preferable examples thereof include a hydrogen atom, a halogen atom, an alkyl group, a hydroxy group an alkoxy group, an aryloxy group, an acyloxy group, an amino group and an acylamino group. Among all, a hydrogen atom, an amino group (preferably an anilino group) and an acylamino group are most desirable. Hydrogen atoms in each substituent may be further substituted.

As preferable examples of R₃₁ and R₃₂, citation can be made of hydrogen atom, alkyl groups, halogen atoms, alkoxycarbonyl groups, carboxyl group, carbamoyl group, hydroxy group, alkoxy groups and cyano group. Hydrogen atoms in each substituent may be further substituted.

Also R₃₁ and R₃₅ or R₃₅ and R₃₆ may be bonded to each other to form a 5- or 6-membered ring.

In the case where A₃₁ has a substituent or a substituent R₃₁, R₃₂, R₃₅, R₃₆ or G₃ further has a substituent, examples of such substituents are the same as those cited above with regard to G₃, R₃₁ and R₃₂

In the case where the dye according to the invention is a water-soluble dye, it preferably has an ionic hydrophilic group as a substituent on any of A₃₁, R₃₁, R₃₂, R₃₅, R₃₅ and G₃. Examples of the ionic hydrophilic group include sulfo group, carboxyl group, phosphono group, quaternary ammonium groups, etc. As the ionic hydrophilic group as described above, carboxyl group, phosphono group and sulfo group are preferable and carboxyl group and sulfo group are still preferable. These carboxyl group, phosphono group and sulfo group may be in the form of a salt. Examples of the counter ion forming the salt include ammonium ion, alkali metal ions (for example, lithium ion, sodium ion and potassium ion) and organic cations (for example, tetramethylammoniumion, tetramethylguanidiumion and tetramethylphosphonium).

Next, terms (substituents) employed herein will be illustrated. These terms are employed in common even in different symbols in the formula (3) and the formula (3-A) which will be presented hereinafter.

Halogen atoms mean a fluorine atom, a chlorine atom and a bromine atom.

Aliphatic groups means alkyl groups, substituted alkyl groups, alkenyl groups, substituted alkenyl groups, alkynyl groups, substituted alkynyl groups, aralkyl groups and substituted aralkyl groups. The term "substituted" as used herein such as "substituted alkyl groups" means that a hydrogen atom in an "alkyl group" or the like is substituted by such a substituent as cited above with regard to G₃, R₃₁ and R₃₂, etc.

An aliphatic group may be branched or it may form a ring. It is preferable that an aliphatic group has from 1 to 20 carbon atoms, still preferably from 1 to 16 carbon atoms. It is preferable that the aryl moiety in an aralkyl group or a substituted aralkyl group is a phenyl group or a naphthyl group and a phenyl group is particularly preferable. Examples of the aliphatic group include a methyl group, an ethyl group, a butyl group, an isopropyl group, a t-butyl group, a hydroxyethyl group, a methoxyethyl group, a cyanoethyl group, a trifluoromethyl group, a 3-sulfopropyl group, a 4-sulfobutyl group, a cyclohexyl group, a benzyl group, a 2-phenethyl group, a vinyl group and an allyl group.

Aromatic groups means aryl groups and substituted aryl groups. As the aryl group, a phenyl group or a naphthyl group is preferable and a phenyl group is particularly preferable. It is preferable that an aromatic group has from 6 to 20 carbon atoms, still preferably from 6 to 16 carbon atoms.

Examples of the aromatic group include a phenyl group, a p-tolyl group, a p-methoxyphenyl group, an o-chlorophenyl group and an m-(3-sufopropylamino)phenyl group.

Heterocyclic groups include substituted heterocyclic groups. In a heterocyclic group, an aliphatic ring, an aromatic ring or another heterocycle may be fused to the heterocycle. As the heterocyclic group, a 5-membered or 6-membered heterocyclic group is preferable. Examples of the substituent in the substituted heterocyclic group include aliphatic groups, halogen atoms, alkyl sulfonyl groups, arylsulfonyl groups, acyl groups, acylamino groups, sulfamoyl group, carbamoyl group, ionic hydrophilic groups and so on. Examples of the heterocyclic group include a 2-pyridyl group, a 2-thienyl group, a2 -thiazolyl group, a 2-benzothiazolyl group, a2-benzoxazolyl group and a 2-furyl group.

Carbamoyl group includes substituted carbamoyl groups. Examples of the substituent include alkyl groups. Examples of the above-described carbamoyl group include a methylcarbamoyl group and a dimethyl carbamoyl group.

Alkoxycarbonyl groups include substituted alkoxycarbonyl groups. As the above-described alkoxycarbonyl group, an alkoxycarbonyl group having from 2 to 20 carbon atoms is preferable. Examples of the substituent include ionic hydrophilic groups. Examples of the above-described alkoxycarbonyl groups include a methoxycarbonyl group and an ethoxycarbonyl group.

Aryloxycarbonyl groups include substituted aryloxycarbonyl groups. As the above-described aryloxycarbonyl group, an aryloxycarbonyl group having from 7 to 20 carbon atoms is preferable. Examples of the substituent include ionic hydrophilic groups. Examples of the above-described aryloxycarbonyl groups include a phenoxycarbonyl group.

Heterocyclic oxycarbonyl groups include substituted heterocyclic oxycarbonyl groups. Examples of the heterocycle include the heterocycles cited above with regard to the heterocyclic groups. As the above-described heterocyclic oxycarbonyl group, a heterocyclic oxycarbonyl group having from 2 to 20 carbon atoms is preferable. Examples of the substituent include ionic hydrophilic groups. Examples of the above-described heterocyclic oxycarbonyl groups include a 2-pyridyloxycarbonyl group.

Acyl groups include substituted acyl groups. As the above-described acyl group, an acyl group having from 1 to 20 carbon atoms is preferable. Examples of the substituent include ionic hydrophilic groups. Examples of the above-described acyl groups include an acetyl group and a benzoyl group.

Alkoxy groups include substituted alkoxy groups. As the above-described alkoxy group, an alkoxy group having from 1 to 20 carbon atoms is preferable. Examples of the substituent include alkoxy groups, a hydroxyl group and ionic hydrophilic groups. Examples of the above-described alkoxy groups include a methoxy group, an ethoxy group, an isopropoxy group, a methoxyethoxy group, a hydroxyethoxy group and a 3-carbopropoxy group.

Aryloxy groups include substituted aryloxy groups. As the above-described aryloxy group, an aryloxy group having from 6 to 20 carbon atoms is preferable. Examples of the substituent include alkoxy groups and ionic hydrophilic groups. Examples of the above-described aryloxy groups include a phenoxy group, a p-methoxyphenoxy group and an o-methoxyphenoxy group.

Heterocyclic oxy groups include substituted heterocyclic oxy groups. As examples of the heterocycle, the heterocycles presented above with regard to the heterocyclic groups may be cited. As the heterocyclic oxy group, a heterocyclic oxy group having from 2 to 20 carbon atoms is preferable. Examples of the substituent include alkyl groups, alkoxy groups and ionic hydrophilic groups. Examples of the above-described heterocyclic oxy groups include a 3-pyridyloxygroup and a 3-thienyloxy group.

As a silyloxy group, a silyloxy group substituted by an aliphatic group or an aromatic group having from 1 to 20 carbon atoms is preferable. Examples of the above-described silyloxy group include trimethylsilyloxy and diphenylmethylsilyloxy.

Acyloxy groups include substituted acyloxy groups. As the above-described acyloxy group, an acyloxy group having from 1 to 20 carbon atoms is preferable. Examples of the substituent include ionic hydrophilic groups. Examples of the above-described acyloxy groups include an aceotxy group and a benzoyloxy group.

Carbamoyloxy group includes substituted carbamoyloxy groups. Examples of the substituent include alkyl groups. Examples of the above-described carbamoyloxy groups include an N-methylcarbamoyloxy group.

Alkoxycarbonyloxy groups include substituted alkoxycarbonyloxy groups. As the above-described alkoxycarbonyloxy group, an alkoxycarbonyloxy group having from 2 to 20 carbon atoms is preferable. Examples of the above-described alkoxycarbonyloxy groups include a methoxycarbonyloxy group and an isopropoxycarbonyloxy group.

Aryloxycarbonyloxy groups include substituted aryloxycarbonyloxy groups. As the above-described aryloxycarbonyloxy group, an aryloxycarbonyloxy group having from 7 to 20 carbon atoms is preferable. Examples of the above-described aryloxycarbonyloxy groups include a phenoxycarbonyloxy group.

Amino group includes substituted amino groups. Examples of the substituent include alkyl groups, aryl groups and heterocyclic groups and these alkyl groups, aryl groups and heterocyclic groups may be further substituted. Alkylamino groups include substituted alkylamino, groups. As the above-described alkylamino group, an alkylamino group having from 1 to 20 carbon atoms is preferable. Examples of the substituent include ionic hydrophilic groups. Examples of the above-described alkylamino groups include a methylamino group and a diethylamine group.

Arylamino groups include substituted arylamino groups. As the above-described arylamino group, an arylamino group having from 6 to 20 carbon atoms is preferable. Examples of the substituent include halogen atoms and ionic hydrophilic groups. Examples of the above-described arylamino groups include a phenylamino group and a 2-chlorophenylamino group.

Heterocyolic amino groups include substituted heterocyclic amino groups. As examples of the heterocycle, the heterocycles presented above with regard to the heterocyclic groups may be cited. As the above-described heterocyclic amino group, a heterocyclic amino group having from 2 to 20 carbon atoms is preferable. Examples of the substituent include alkyl groups, halogen atoms and ionic hydrophilic groups.

Acylamino groups include substituted acylamino groups. As the above-described acylamino group, an acylamino group having from 2 to 20 carbon atoms is preferable. Examples of the substituent include ionic hydrophilic groups. Examples of the above-described acylamino groups include an acetylamino group, a propionylamino group, a benzoylamino group, an N-phenylacetylamino group and a 3,5-disulfobenzoylamino gxoup.

Ureido group includes substituted ureido groups. As the above-described ureido group, an ureido group having from 2 to 20 carbon atoms is preferable. Examples of the substituent include alkyl groups and aryl groups. Examples of the above-described ureido groups include a 3-methylureido group, a 3,3-dimethylureido group and a 3-phenylureido group.

Sulfamoylamino group includes substituted sulfamoylamino groups. Examples of the substituent include alkyl groups. Examples of the above-described sulfamoylamino groups include an N,N-dipropylsulfamoylamino group.

Alkoxycarbonylamino groups include substituted alkoxycarbonylamino groups. As the above-described alkoxycarbonylamino group, an alkoxycarbonylamino group having from 2 to 20 carbon atoms is preferable. Examples of the substituent include ionic hydrophilic groups. Examples of the above-described alkoxycarbonylamino groups include an ethoxycarbonylamino group.

Aryloxycarbonylamino groups include substituted aryloxycarbonylamino groups. As the above-described aryloxycarbonylamino group, an aryloxycarbonylamino group having from 7 to 20 carbon atoms is preferable. Examples of the substituent include ionic hydrophilic groups. Examples of the above-described aryloxycarbonylamino groups include a phenoxycarbonylamino group.

Alkylsulfonylamino groups and arylsulfonylamino groups include respectively substituted alkylsulfonylamino groups and substituted arylsulfonylamino groups. As the above-described alkylsulfonylamino group and arylsulfonylamino group, an alkylsulfonylamino group and an arylsulfonylamino group having from 1 to 20 carbon atoms are preferable. Examples of the substituent include ionic hydrophilic groups. Examples of the above-described alkylsulfonylamino groups and arylsulfonylamino groups include a methyl sulfonyl amino group, an N-phenyl-methylsulfonylamino group, a phenylsulfonylamino group and a 3-carboxyphenylsulfonylamino group.

Heterocyclic sulfonylamino groups include substituted heterocyclic sulfonylamino groups. As examples of the heterocycle, the heterocycles presented above with regard to the heterocyclic groups may be cited. As the above-described heterocyclic sulfonylamino group, a heterocyclic sulfonylamino group having from 1 to 12 carbon atoms is preferable- Examples of the substituent include ionic hydrophilic groups. Examples of the above-described heterocyclic sulfonylamino groups include a 2-thienylsulfonylamino group and a 3-pyridylsulfonylamino group.

Alkylthio groups, arylthio groups and heterocyclic thio groups include respectively substituted alkylthio groups, substituted arylthio groups and substituted heterocyclic thio groups. As examples of the heterocycle, the heterocycles presented above with regard to the heterocyclic groups may be cited. As the above-described alkylthio group, arylthio group and heterocyclic thio group, those having from 1 to 20 carbon atoms are preferable. Examples of the substituent include ionic hydrophilic groups. Examples of the above-described alkylthio groups, arylthio groups and heterocyclic thio groups include a methyl thio group, phenylthio group and a 2-pyridylthio group.

Alkylsulfonyl groups and arylsulfonyl groups include respectively substituted alkylsulfonyl groups and substituted arylsulfonyl groups. Examples of the alkylsulfonyl groups and arylsulfonyl groups include a methylsulfonyl group and a phenylsulfonyl group.

Heterocyclic sulfonyl groups include substituted heterocyclic sulfonyl groups. As examples of the heterocycle, the heterocycles presented above with regard to the heterocyclic groups may be cited. As the above-described heterocyclic sulfonyl group, a heterocyclic sulfonyl group having from 1 to 20 carbon atoms is preferable. Examples of the substituent include ionic hydrophilic groups. Examples of the above-described heterocyclic sulfonyl groups include a 2-thienylsulfonyl group and a 3-pyridylsulfonyl group.

Alkylsulfinyl groups and arylsulfinyl groups include respectively substituted alkylsulfinyl groups and substituted arylsulfinyl groups. Examples of the above-described alkylsulfinyl groups and arylsulfinyl groups include a methylsulfinyl group and a phenylsulfinyl group respectively.

Heterocyclic sulfinyl groups include substituted heterocyclic sulfinyl groups. As examples of the heterocycle, the heterocycles presented above with regard to the heterocyclic groups may be cited. As the above-described heterocyclic sulfinyl group, a heterocyclic sulfinyl group having from 1 to 20 carbon atoms is preferable. Examples of the substituent include ionic hydrophilic groups. Examples of the above-described heterocyclic sulfinyl groups include a 4-pyridylsulfinyl group.

Sulfamoyl group includes substituted sulfamoyl groups. Examples of the substituent include alkyl groups. Examples of the above-described sulfamoyl groups include a dimethylsulfamoyl group and a di(2-hydroxyethyl)sulfamoyl group.

In the formula (3) , a particularly preferable structure is the one represented by the following formula (3-A).

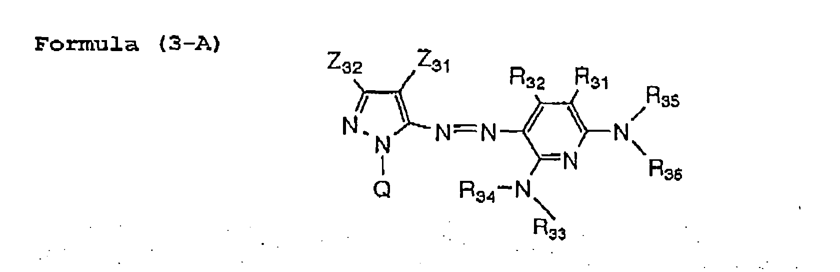

In the above formula, R₃₁, R₃₂, R₃₅ and R₃₆ have the same meaning each as defined in the formula (3).

R₃₃ and R₃₄ independently represent each a hydrogen atom or a substituent. The substituent is an aliphatic group, an aromatic group, a heterocyclic group, an acyl group, an alkoxycarbonyl group, an aryloxycarbonyl group, a carbamoyl group, an alkylsulfonyl group, an arylsulfonyl group or a sulfamoyl group. Among all, a hydrogen atom, an aromatic group, a heterocyclic group, an acyl group, an alkylsulfonyl group and an arylsulfonyl group are preferable and a hydrogen atom, an aromatic group and a heterocyclic group are still preferable.

Z₃₁ represents an electron-withdrawing group having a Hammett's substituent constant σp of 0.20 or more. It is preferable that Z₃₁ is an electron-withdrawing group having a σp of 0.30 or more, still preferably an electron-withdrawing group having a σp of 0.45 or more and particularly preferably an electron-withdrawing group having a σp of 0.60 or more, though it is desirable that the σp does not exceed 1.0. As preferable examples of the substituent, citation may be made of electron-withdrawing groups as will be described hereinafter. Among all, acyl groups having from 2 to 20 carbon atoms, alkyloxycarbonyl groups having from 2 to 20 carbon atoms, a nitro group, a cyano group, alkylsulfonyl groups having from 1 to 20 carbon atoms, arylsulfonyl groups having from 6 to 20 carbon atoms, carbamoyl groups having from 1 to 20 carbon atoms and halogenated alkyl groups having from 1 to 20 carbon atoms are preferable. Particularly preferable examples thereof include cyano groups, alkylsulfonyl groups having from 1 to 20 carbon atoms and arylsulfonyl groups having from 6 to 20 carbon atoms, and a cyano group is most desirable therefor.

Z₃₂ represents a hydrogen atom or a substituent. The substituent is an aliphatic group, an aromatic group or a heterocyclic group. It is preferable that Z₃₂ is an aliphatic group, still preferably an alkyl group having from 1 to 6 carbon atoms.

Q represents a hydrogen atom or a substituent. The substituent is an aliphatic group, an aromatic group or a heterocyclic group. Among all, it is preferable that Q is group comprising nonmetal atoms required in forming a 5- to 8-membered ring. The 5- to 8-membered ring may be substituted and it may be a saturated ring or has an unsaturated bond. Among all, an aromatic group and a heterocyclic group are preferable. Preferable examples of the nonmetal atoms include a nitrogen atom, an oxygen atom, a sulfur atom and a carbon atom. Specific examples of such a cyclic structure include a benzene ring, a cyclopentane ring, a cyclohexane ring, a cycloheptane ring, a cyclooctane ring, a cyclohexene ring, a pyridine ring, a pyrimidine ring, a pyrazine ring, a pyridazine ring, a triazine ring, an imidazole ring, a benzoimidazole ring, an oxazole ring, a benzoxazole ring, a thiazole ring, a benzothiazole ring, an oxane ring, a sulfolane ring and a thiane ring.

A hydrogen atom in each substituent illustrated in the formula (3-A) may be substituted. As examples of the substituent, the substituents described with regard to the formula (3) , the groups cited as examples of G₃, R₃₁ and R₃₂ and ionic hydrophilic groups may be cited.

Next, the Hammett's substituent constant σp used herein will be illustrated. Hammett's rule, which is an empirical rule proposed in 1935 by L.P. Hammett for quantitatively discussing the effect of a substituent on a reaction or equilibrium of a benzene derivative, has been widely accepted as reasonable today. Substituent's constants determined by Hammett's rule include σp and σm. These parameters are generally reported in detail in a large number of publications, for example, J.A. Dean, *Lange's Handbook of Chemistry,* 12th ed., 1979 (McGraw-Hill) and Kagakuno Ryoiki, extra issue No. 122, pp.96-103, 1979 (Nankodo). Although each substituent is restricted or illustrated based on the Hammett' s substituent constant σp in the present invention, it is needless to say that such substituents are not restricted to substituents having known parameters as reported in the above publications but include substituents the parameters of which seemingly fall within the range when measured in accordance with Hammett's rule. Although the compounds of the formula (3-A) according to the invention include those which are notbenzene derivatives, σp is also employed as an indication of the electron effect of each substituent regardless of the substitution position. That is to say, σp is employed in this meaning in the invention.

Examples of electron-withdrawing groups having a Hammett's substituent constant σp of 0.60 or more include a cyano group, a nitro group, alkylsulfonyl groups (for example, a methylsulfonyl group) and arylsulfonyl groups (for example, a phenylsulfonyl group).

Examples of electron-withdrawing groups having a Hammett's substituent constant op of 0.45 or more include, in addition to those cited above, acyl groups (for example, an acetyl group), alkoxycarbonyl groups (for example, a dodecyloxycarbonyl group) , aryloxycarbonyl groups (for example, an m-chlorophenoxycarbonyl) , alkylsulfinyl groups (forexample, n-propylsulfinyl), arylsulfinyl groups (for example, phenylsulfinyl), sulfamoyl groups (for example, N-ethylsulfamoyl and N,N-dimethylsulfamoyl) and halogenated alkyl groups (for example, trifluoromethyl).

Examples of electron-withdrawing groups having a Hammett' s substituent constant op of 0.30 or more include, in addition to those cited above, acyloxy groups (for example, acetoxy) , carbamoyl groups (for example, N-ethylcarbamoyl and N,N-dibutylcarbameyl) , halogenated alkoxy groups (forexample, trifluoromethyloxy) , halogenated aryloxy groups (for example, pentafluorophenyloxy), sulfonyloxy groups (for example, methylsulfonyloxy) , halogenatedalkylthiogroups (for example, difluoromethylthio) , aryl groups having 2 or more electron-withdrawing substituents having a Hammett's substituent constant σ_{P} of 0.15 or more (for example, 2,4-dinitrophenyl and pentachlorophenyl) and heterocyclic groups (for example, 2-benzoxazolyl, 2-benzothiazolyl and 1-phenyl-2-benzoimidazolyl).

Specific examples of electron-withdrawing groups having a Hammett's substituent constant σ_{P} of 0.20 or more include, in addition to those cited above, halogen atoms and so on.

Concerning the combination of preferable substituents in the azo dye represented by the above-described formula (3), it is favorable that R₃₅ and R₃₆ are each a hydrogen atom, an alkyl group, an aryl group, a heterocyclic group, a sulfonyl group or an acyl group, still preferably a hydrogen atom, an aryl group, a heterocyclic group or a sulfonyl group and a hydrogen atom, an aryl group or a heterocyclic group is most desirable, provided that R₃₅ and R₃₆ do not represent hydrogen atoms at the same time.

It is preferable that G₃ is a hydrogen atom, a halogen atom, an alkyl group, a hydroxyl group, an amino group or an acylamino group, still preferably a hydrogen atom, a halogen atom, an amino group or an acylamino group and a hydrogen atom, an amino group or an acylamino group is most desirable.

It is preferable that A₃₁ is a pyrazole ring, an imidazole ring, an isothiazole ring, a thiadiazole ring or abenzothiazole ring, still preferably a pyrazole ring or an isothiazole ring and a pyrazole ring is most desirable.

It is preferable that B₃₁ and B₃₂ are respectively =CR₃₁-and -CR₃₂= wherein R₃₁ and R₃₂ preferably represent each a hydrogen atom, an alkyl group, a halogen atom, a cyano group, a carbamoyl group, a carboxyl group, a hydroxyl group, an alkoxy group or an alkoxycarbonyl group, still preferably a hydrogen atom, an alkyl group, a carboxyl group, a cyano group or a carbamoyl group.

Concerning the combination of preferable substituents in the compound represented by the above-described formula (3), it is favorable that at least one of the substituents is selected from the above-described preferable groups. A compound having a larger number of substituents selected from the above-described preferable groups is still preferable and a compound all of the substituents of which are selected from the above-described preferable ones is most desirable.

Next, specific examples of the azo dye represented by the above-described formula (3) will be presented, though the azo dye to be used in the invention is not restricted thereto.

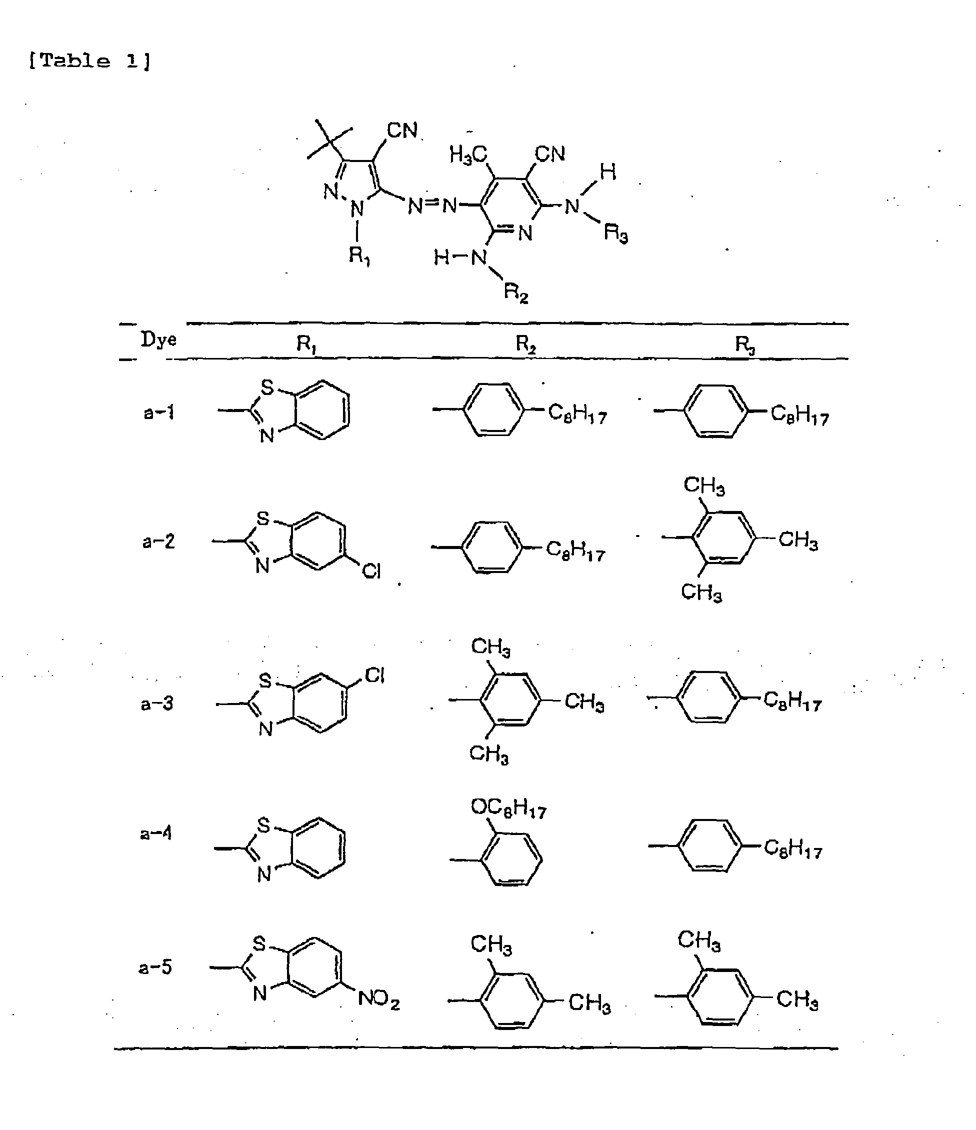

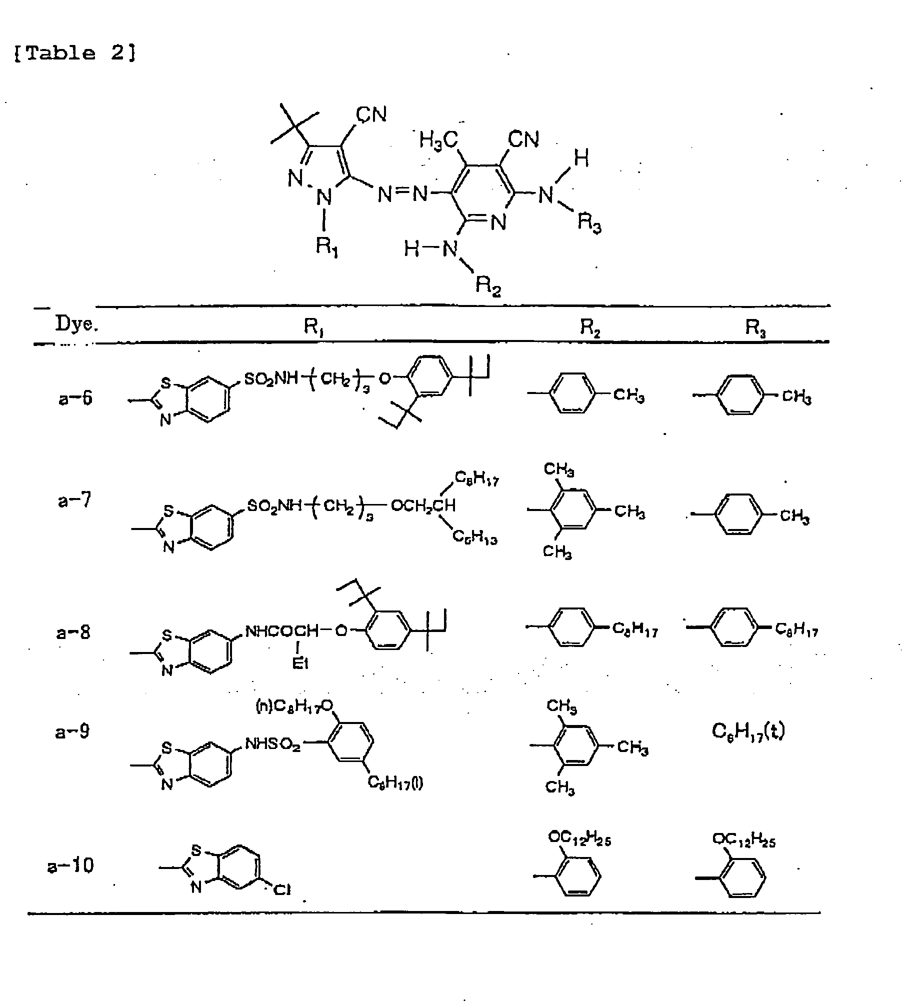

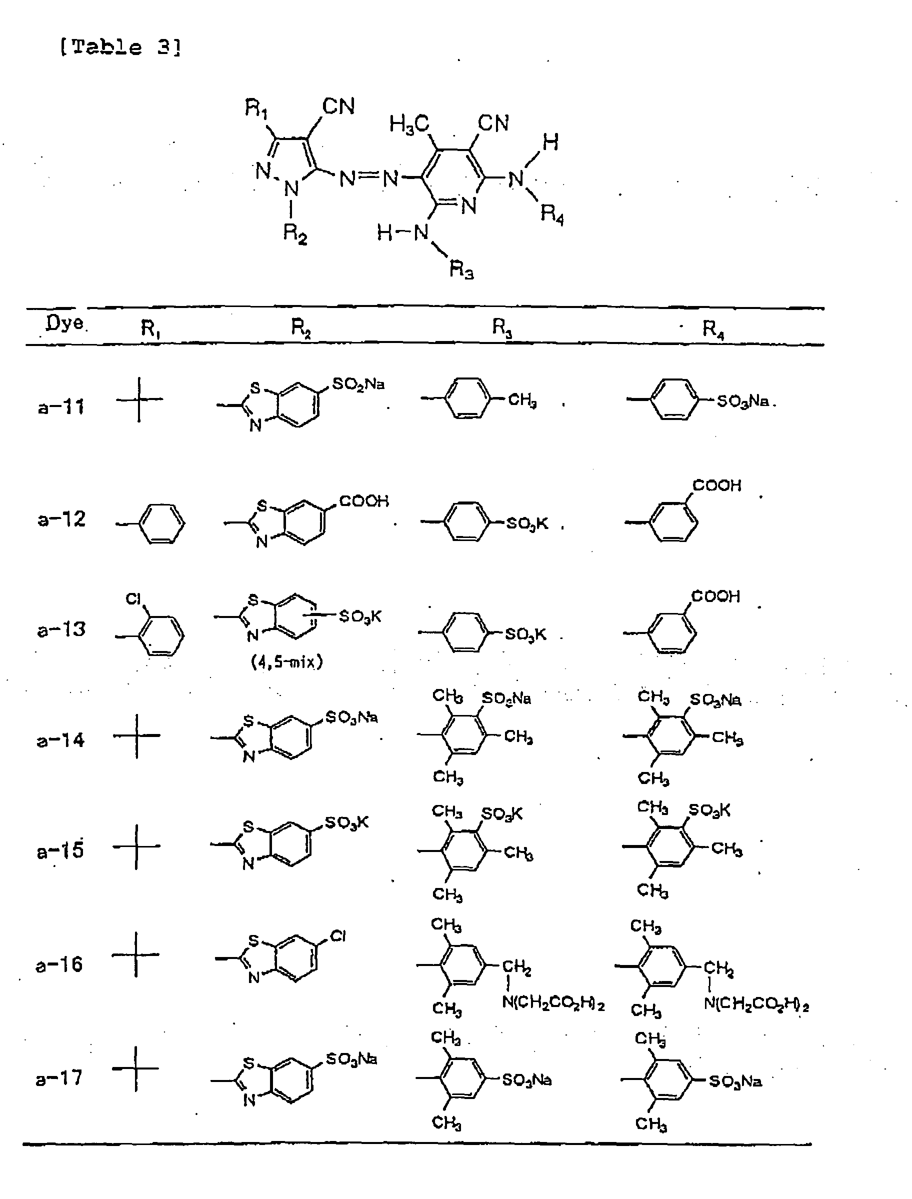

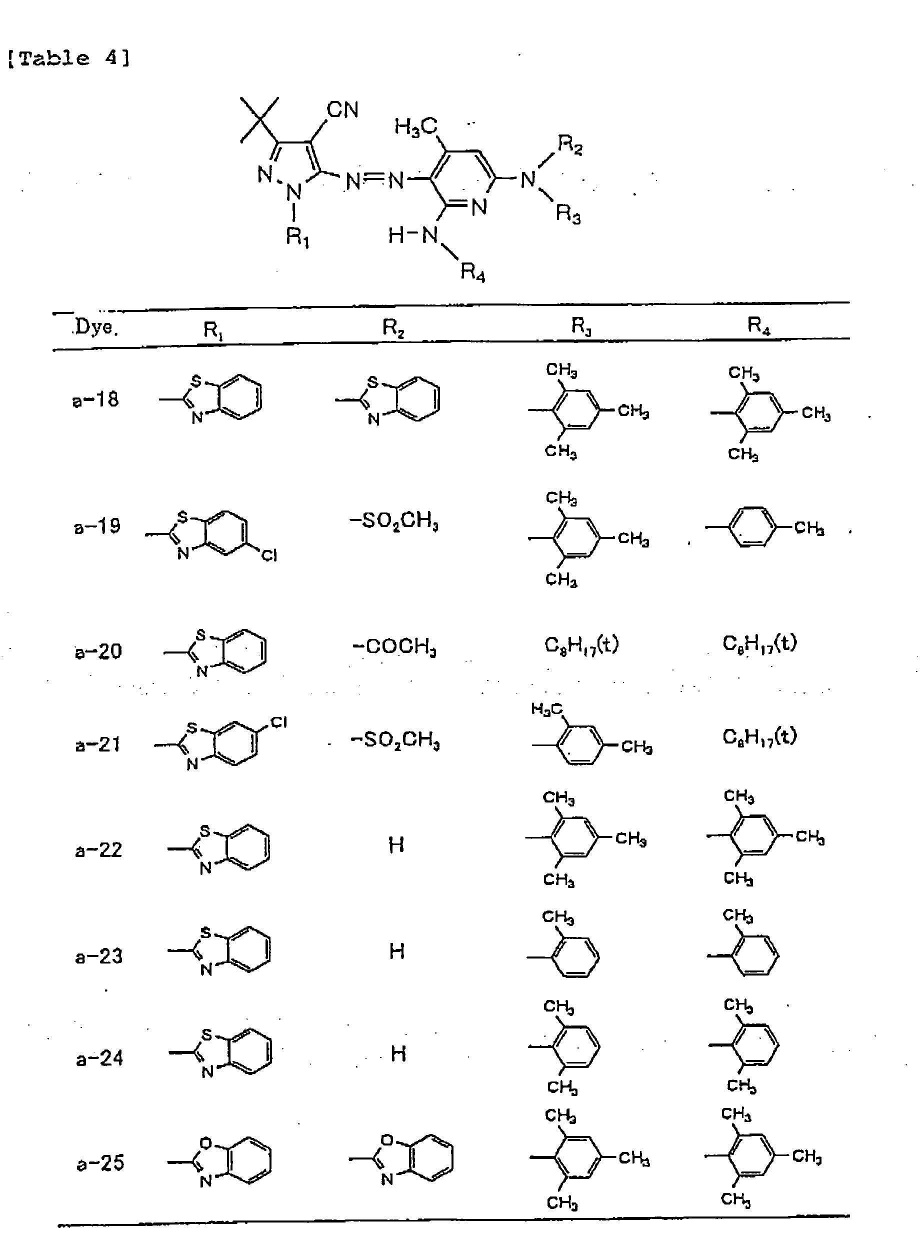

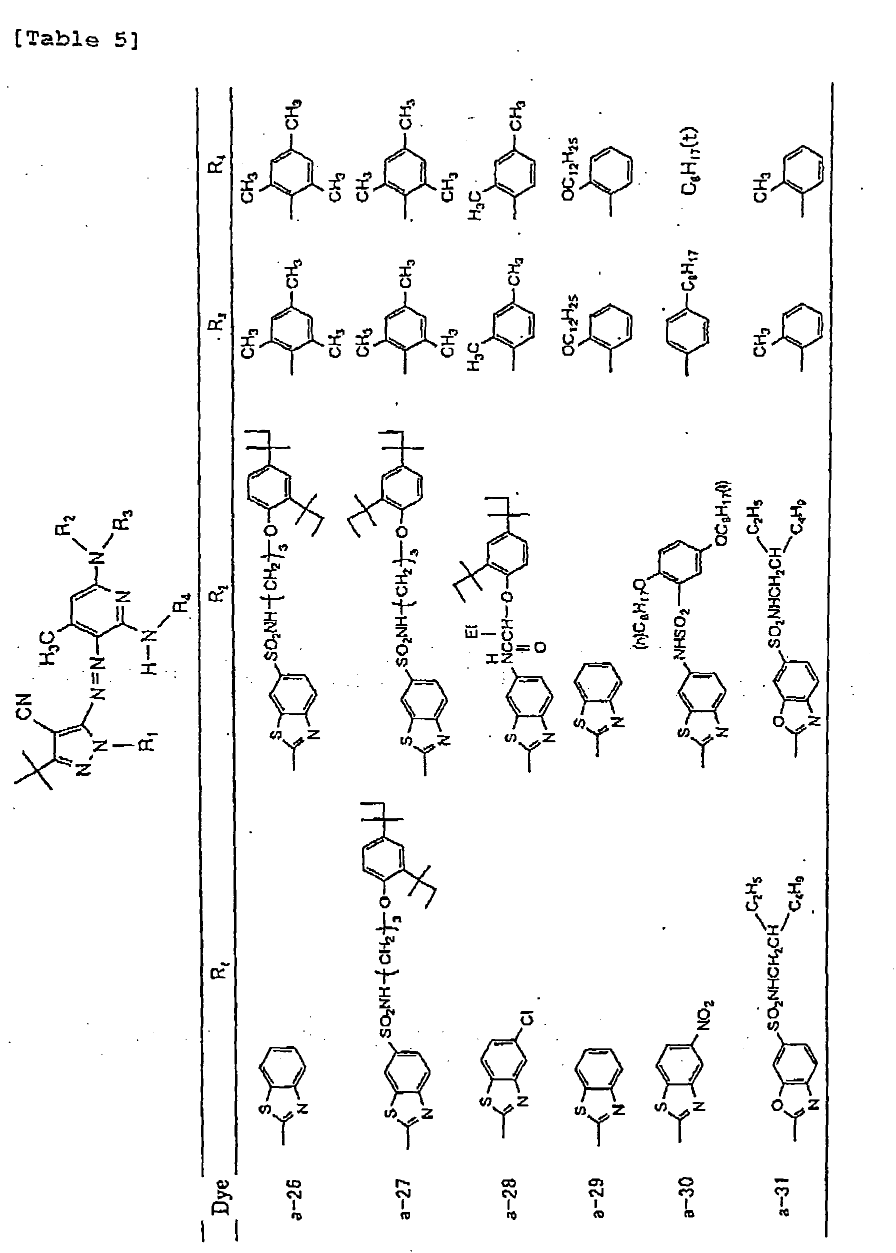

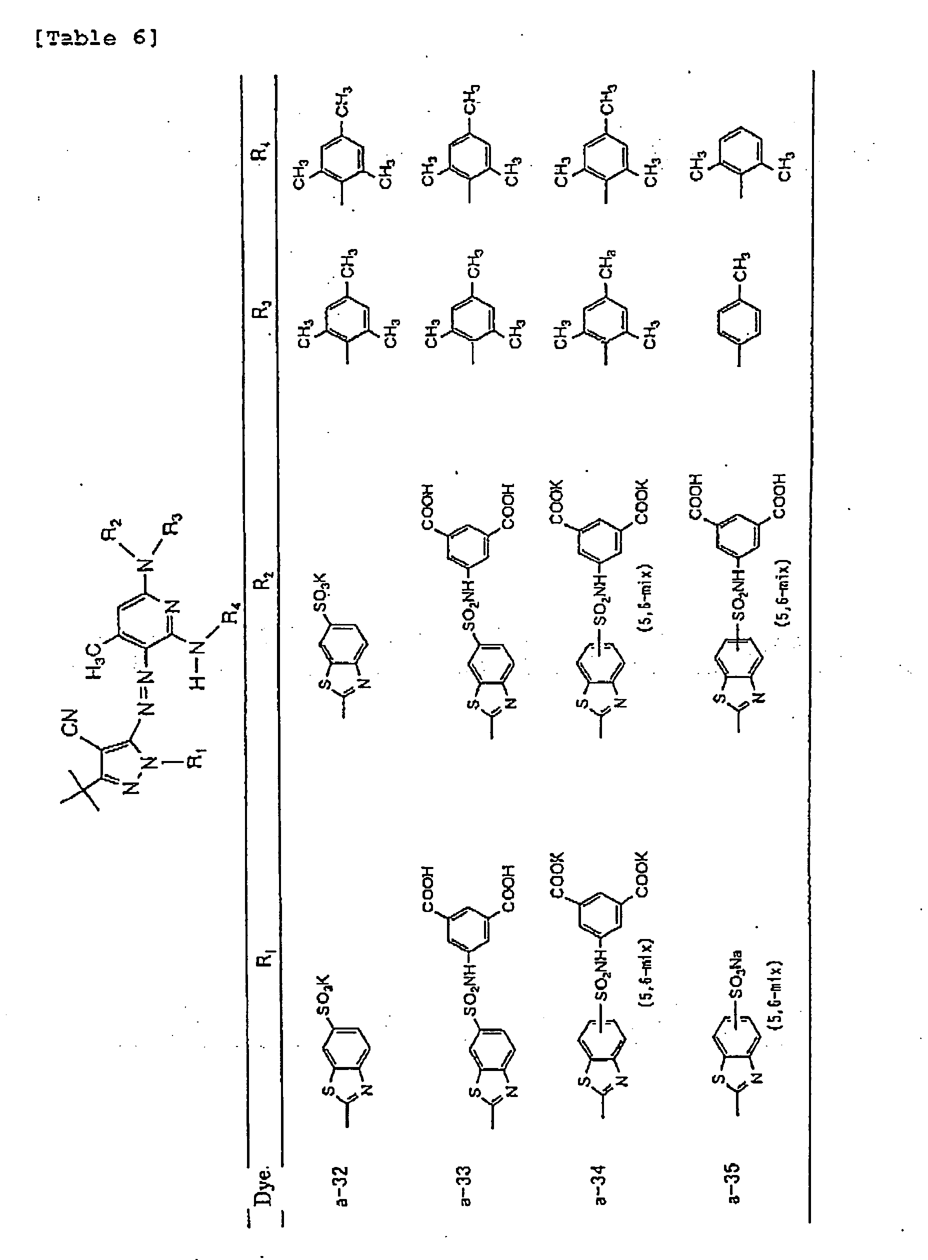

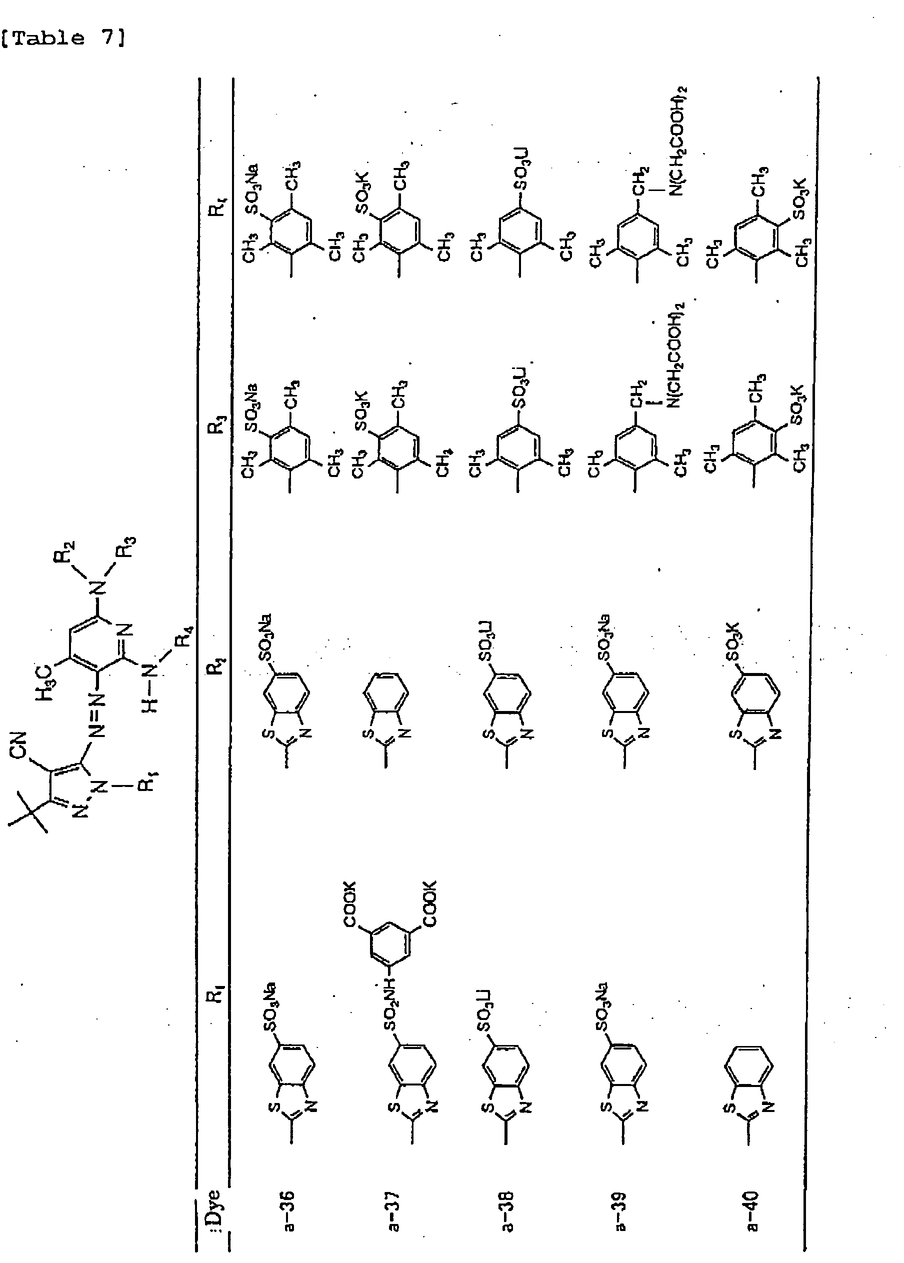

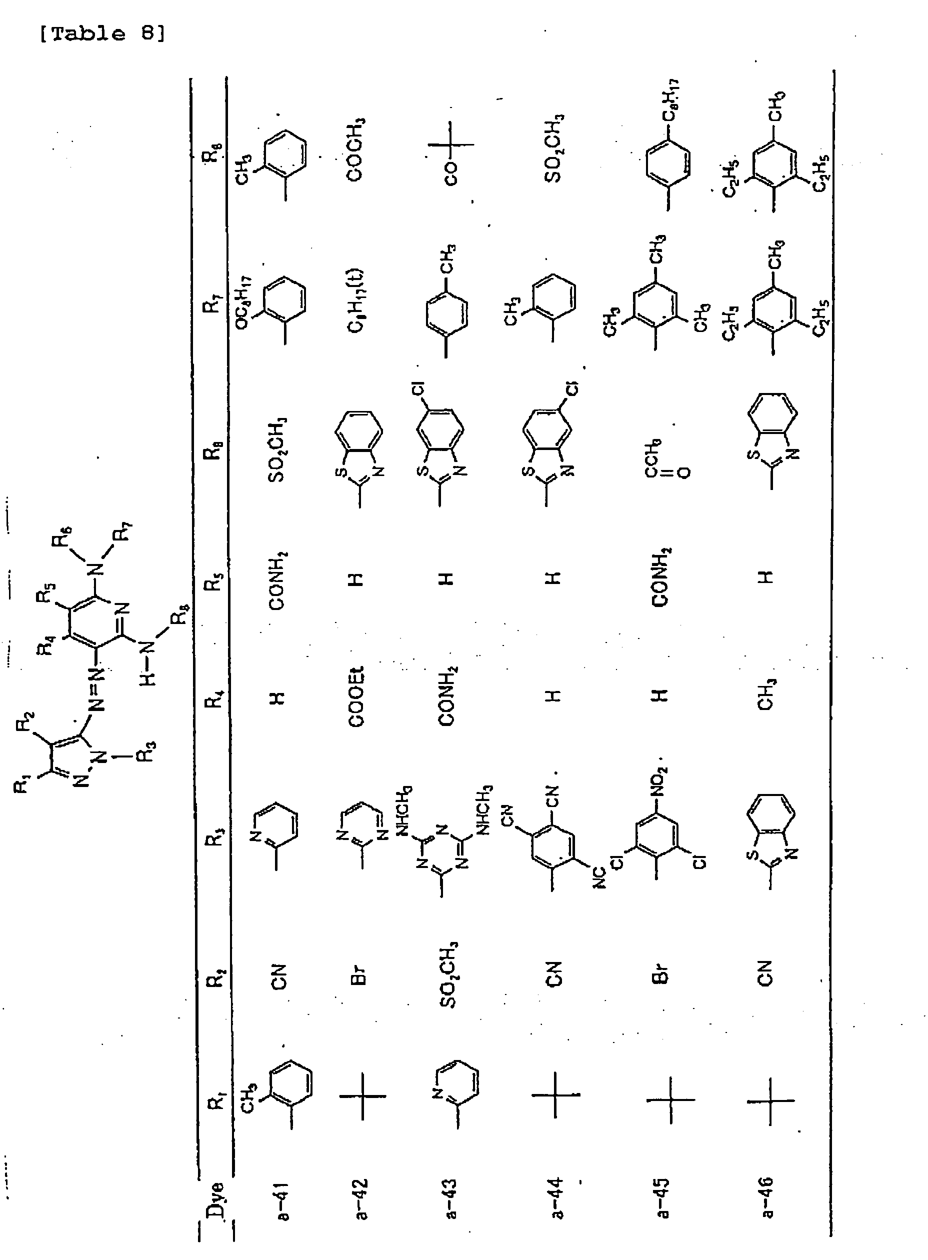

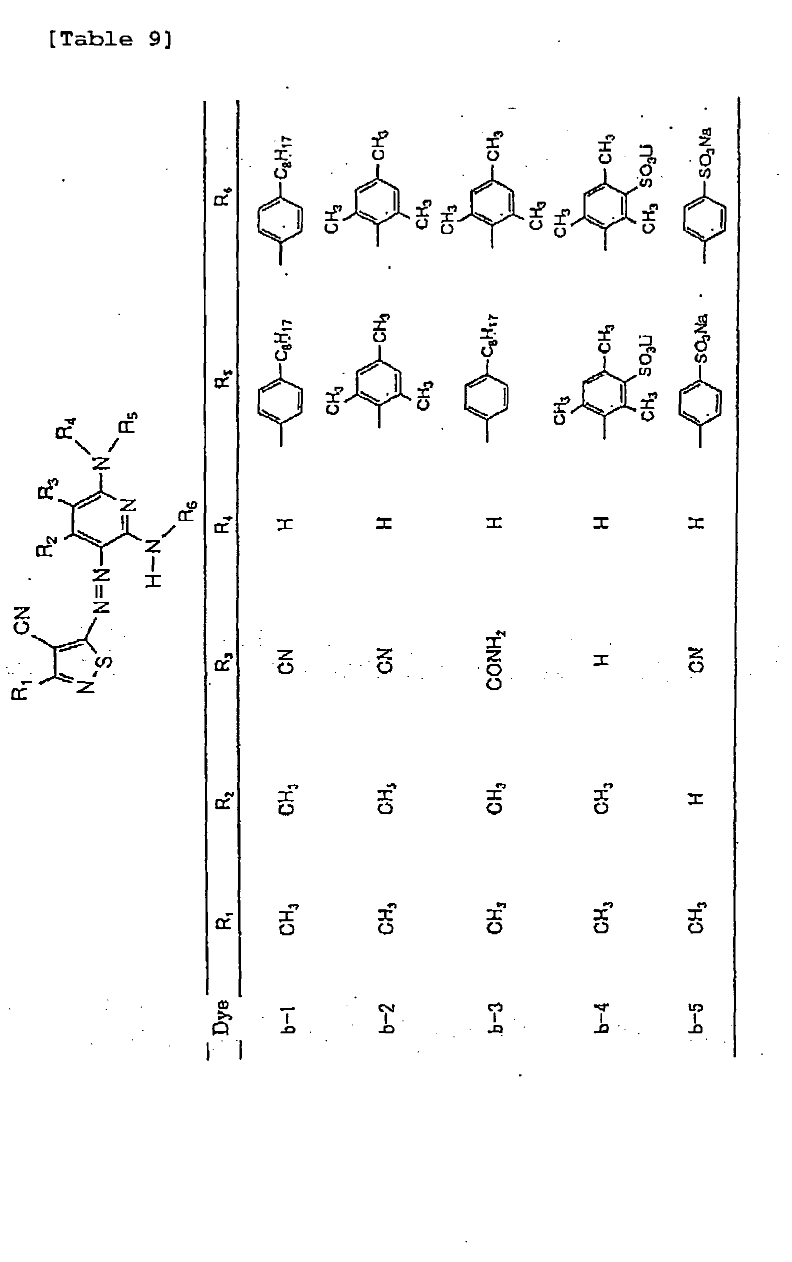

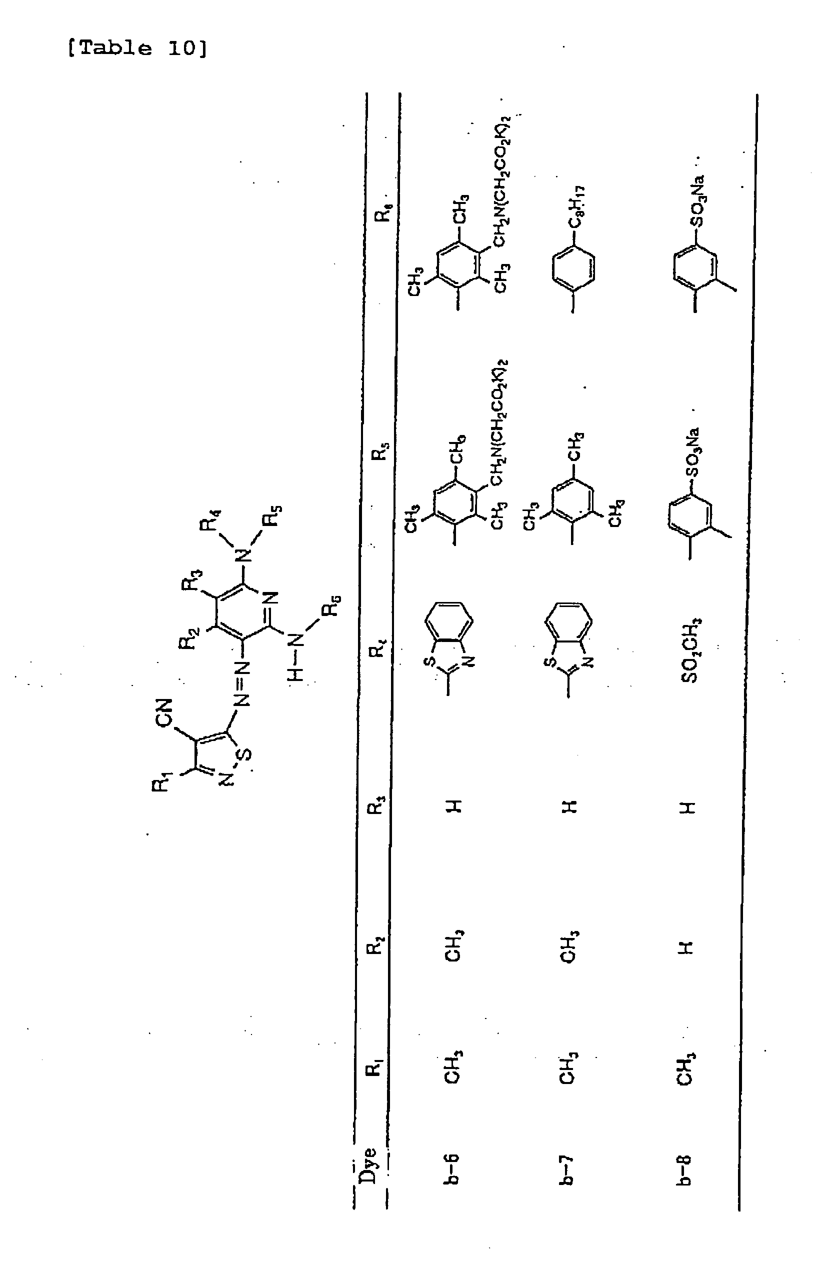

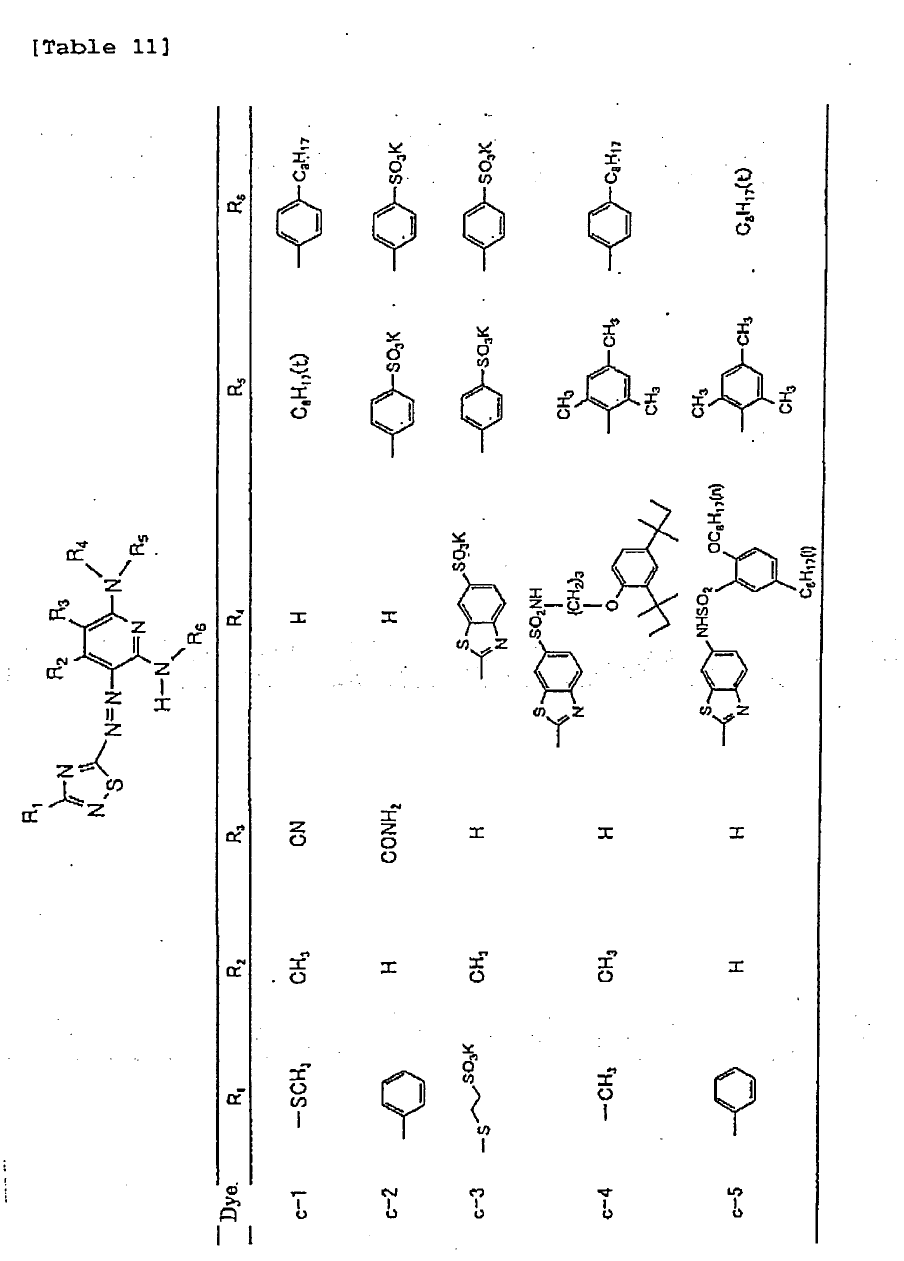

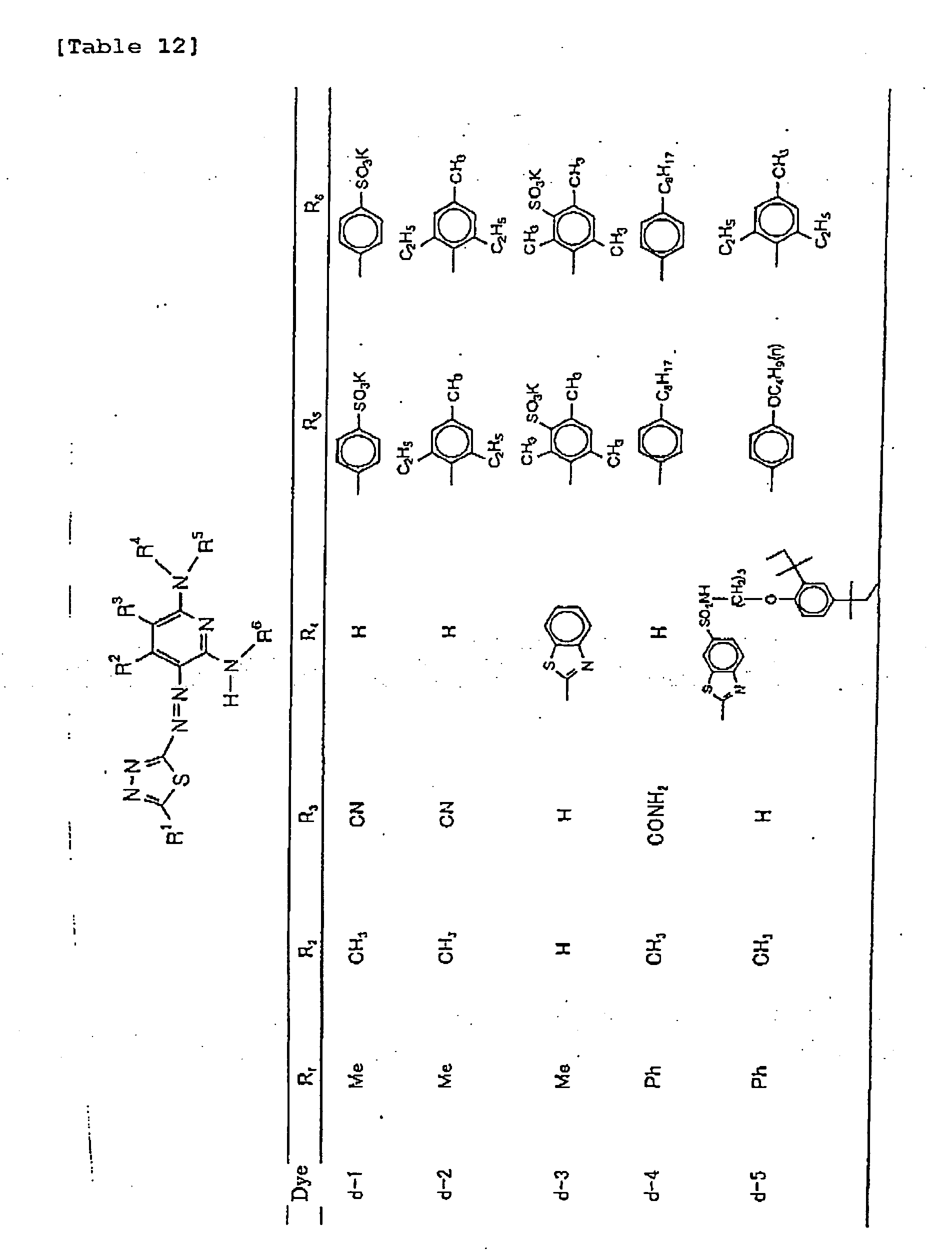

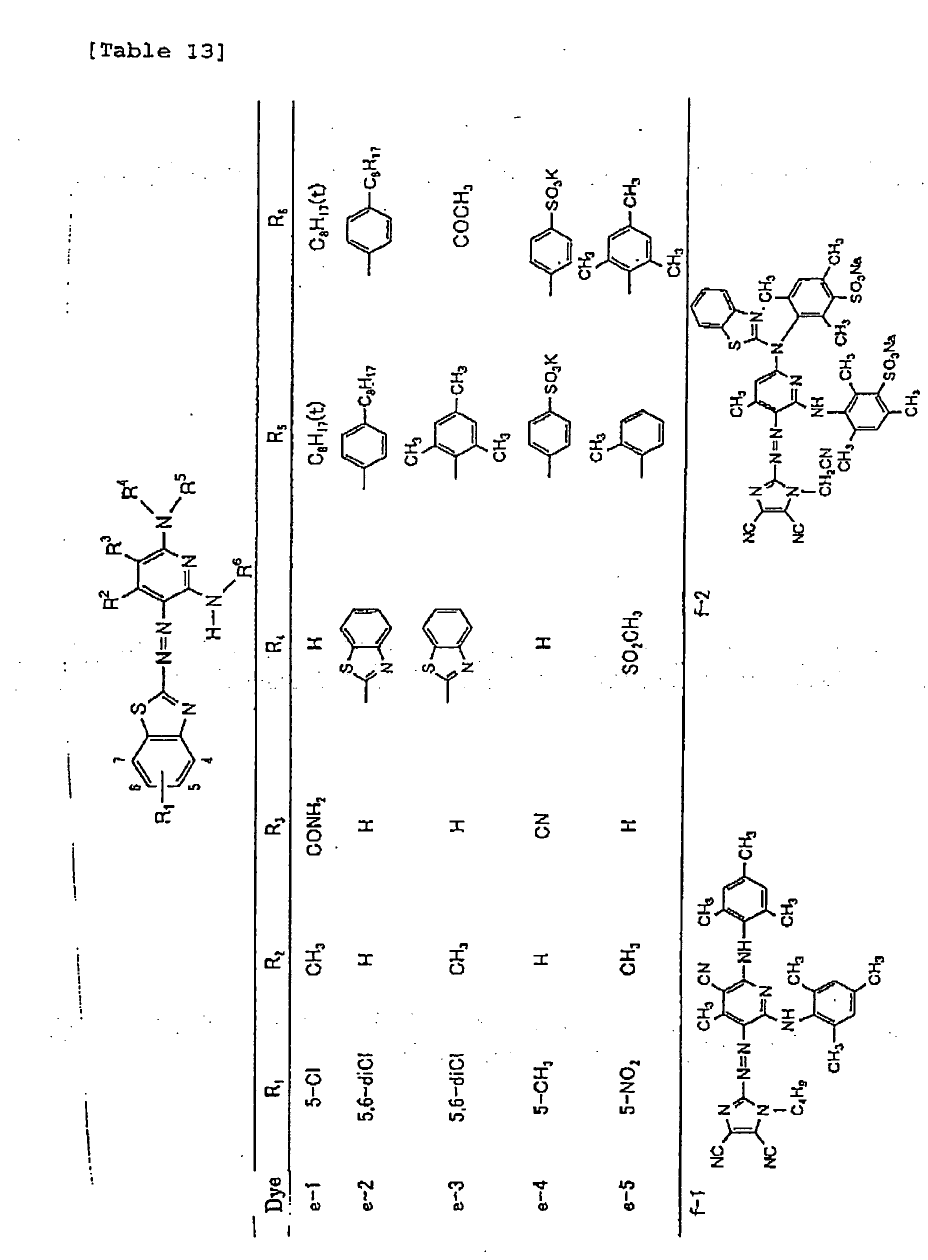

The inkjet recording ink set according to the invention contains, in the magenta ink, the above-described azo dye represented by the formula (3) in an amount from 0.2 to 20% by mass, still preferably from 0.5 to 15% by mass. It is preferable that the dye has a solubility (or dispersibility in a stable state) in water at 20°G of 5% by mass or more, still preferably 10% by mass or more.

### [Dye represented by formula (4)]

The dye represented by the formula (4) is preferably a black dye.

It is preferable that this dye is a dye (L) which has λmax of from 500 nm to 700 nm and shows a half-value width (Wλ,_{1/2}) in the absorption spectrum of a diluted solution having been standardized to give an absorbance of 1.0 of 100 nm or more (preferably from 120 nm to 500 nm and still preferably from 120 nm to 350 nm).

In the case where "distinct black color" (i.e., black color being independent of light sources and almost free from highlighting in any of B, G and R color tones) can be established by using this dye (L) exclusively, it is possible to use this dye alone as a black ink dye. However, it is a common practice to employ the dye together with another dye capable of compensating the black dye in a region where it shows poor absorption. It is usually preferred to combinedly employ a dye (S) having the main absorption in the yellow region. It is also possible to further employ an additional dye to give a black ink.

It is preferable in the invention that a black ink is produced by using the dye alone or as a mixture. To achieve desirable performance as a black ink, namely, 1) being excellent in weatherability and/or 2) not getting off the black balance even after discoloration, an ink fulfilling the following requirements is favorable.

First, black square marks in accordance with JIS CODE 2223 are printed at 48 point with the use of the black ink. Then the reflection density (Dᵥᵢₛ) measured with a status A filter (visual filter) is specified as the initial density. As a reflection densitometer provided with the status A filter, use can be made of, for example, anX-Rite densitometer. To measure the "black" density, the measurement value with Dᵥᵢₛ is employed as a standard observation-reflection density. Next, this print is forcedly discolored by using an ozone discoloration test machine capable of continuously generating 5 ppm of ozone. The time (t) until the reflection density (Dᵥᵢₛ) amounts to 80% of the initial reflection density is measured. Thus, forced discoloration kinetic constant (kᵥᵢₛ) is determined in accordance with the formula (0.8=exp(-kᵥᵢₛ·t)).

In the invention, it is possible to control the above kinetic constant (kᵥᵢₛ) to 5.0x10⁻² (hour⁻¹) or less, preferably 3.0x10⁻² (hour⁻¹) or less and still preferably 1.0x10⁻² (hour⁻¹) or less.

Further, black square marks in accordance with JIS CODE 2223 are printed at 48 point with the use of the black ink. Then the reflection densities of three colors, i.e., cyan (c), magenta (M) and yellow (Y) other than Dᵥᵢₛ are measured with a status A filter and specified as the initial densities (D_{R}, D_{G} and D_{B}) , wherein (D_{R}, D_{G} and D_{B}) respectively stand for the C reflection density using a red filter, the M reflection density using a green filter and the Y reflection density using a blue filter, Next, this print is forcedly discolored by using an ozone discoloration test machine capable of continuously generating 5 ppm of ozone . The times (t' s) until the reflection densities (D_{R}, D_{G} and D_{B}) amount to 80% of the respective initial reflection densities are measured. Thus, forced discoloration kinetic constants (k_{R}, k_{G}; and k_{B}) are determined. After determining these 3 kinetic constants, the ratio (R) of the largest one to the smallest one (in the case where k_{R} is the largest while k_{G} is the smallest, for example, R=k_{R}/k_{G}) is determined. In the invention, it is possible to produce an ink having the above ratio (R) regulated to 1.2 or less, preferably 1.1 or less and still preferably 1.05 or less.

In the print obtained by "printing black square marks in accordance with JIS CODE 2223 at 48 point" as used above, the image is printed in such a size as sufficiently covering an aperture of the densitometer so as to give a satisfactory size for measuring density.

As a dye to be used in the black ink together with the dye (L) represented by the formula (4), a dye (S) having λmax of from 500 nm to 700 nm may be cited. This dye (S) can be also cited as a dye corresponding to the dye represented by the formula (4). It is preferable that at least one of the dyes (L) is a dye of the formula (4). It is particularly preferable that at least one of the dyes (L) and at least one of the dyes (S) are dyes of the formula (4). Among all, it is preferable that 90% by mass of all of the dyes fall within the category of the dyes of the formula (4).

In the formula (4) , A₄₂, B₄₁ and C₄₁ independently represent each an optionally substituted aromatic group or an optionally substituted heterocyclic group (A₄₁ and C₄₁ are monovalent groups while B₄₁ is a divalent group).

It is particularly preferable that the azo dye represented by the formula (4) (hereinafter sometimes referred to simply as "azo dye") is a dye represented by the following formula (4-A).

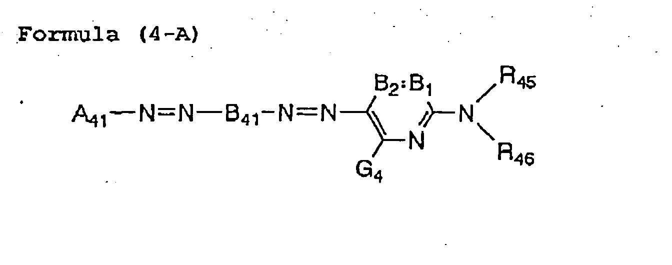

In the above formula (4-A) , A₄₁ and B₄₁ are each as defined in the formula (4). B₁ and B₂ respectively represent =CR₄₁- and - CR₄₂=, or one of B₁ and B₂ is a nitrogen atom while the other represents =CR₄₁- or -CR₄₂=.

G₄, R₄₁ and R₄₂ independently represent each a hydrogen atom, a halogen atom, an aliphatic group, an aromatic group, a heterocyclic group, a cyano group, a carboxyl group, a carbamoyl group, an alkoxycarbonyl group, an aryloxycarbonyl group, a heterocyclic oxycarbonyl group, an acyl group, a hydroxy group, an alkoxy group, an aryloxy group, a heterocyclic oxy group, a silyloxy group, an acyloxy group, a carbamoyloxy group, an alkoxycarbonyloxy group, an aryloxycarbonyloxy group, an amino group (including an alkylamino group, an arylamino group and a heterocyclic amino group) , an acylamino group, an ureido group, a sulfamoylamino group, an alkoxycarbonylamino group, an aryloxycarbonylamino group, an alkyl- or arylsulfonylamino group, a heterocyclic sulfonylamino group, a nitro group, an alkyl- or arylthio group, a heterocyclic thio group, an alkyl-or arylsulfonyl group, a heterocyclic sulfonyl group, an alkyl-or arylsulfinyl group, a heterocyclic sulfinyl group, a sulfamoyl group or a sulfo group, provided that each of these groups may be further substituted.

R₄₅ and R₄₆ independently represent each a hydrogen atom, an aliphatic group, an aromatic group, a heterocyclic group, an acyl group, an alkoxycarbonyl group, an aryloxycarbonyl group, a carbamoyl group, an alkyl- or arylsulfonyl group or a sulfamoyl group, provided that each of these groups may be further substituted. However, R₄₅ and R₄₆ do not represent both hydrogen atoms at the same time.

Moreover, R₄₁ and R₄₅ or R₄₅ and R₄₆ may be bonded to each other to form a 5- to 6-membered ring.

It is furthermore preferable that the azo dye represented by the formula (4-A) is a dye representedby the following formula (4-B).

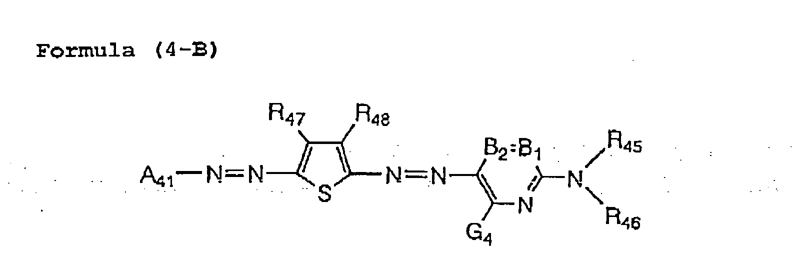

In the above formula (4-B), R₄₇ and R₄₈ have the same meaning as R₄₁ defined in the formula (4-A).

Examples of the halogen atom include a fluorine atom, a chlorine atom and a bromine atom. The aliphatic group means an alkyl group, a substituted alkyl group, an alkenyl group, a substituted alkenyl group, an alkyhyl group, a substituted alkynyl group, an aryalkyl group or a substituted aralkyl group. The aliphatic group may be branched or form a ring. It is preferable that the aliphatic group has from 1 to 20 carbon atoms, still preferably from 1 to 16 carbon atoms. As the aryl moiety in an aralkyl group or a substituted aralkyl group, phenyl or naphthyl is preferred and phenyl is particularly preferred. Examples of the aliphatic group include methyl, ethyl, butyl, isopropyl, t-butyl, hydroxyethyl, methoxethyl, cyanoethyl, trifluoromethyl, 3-sulfopropyl, 4-sulfobutyl, cyclohexyl, benzyl, 2-phenethyl, vinyl and allyl groups.

The monovalent aromatic group means an aryl group or a substituted aryl group. As the aryl group, phenyl or naphthyl is preferred and phenyl is particularly preferred. It is preferable that the monovalent aromatic group has from 6 to 20 carbon atoms, still preferably from 6 to 16 carbon atoms. Examples of the monovalent aromatic group include phenyl, p-tolyl, p-methoxyphenyl, o-chlorophenyl and m-(3-sulfopropylamino)phenyl groups. The divalent aromatic group is a divalent group derived from such a monovalent aromatic group and examples thereof include phenylene, p-tolylene, p-methoxyphenylene, o-chlorophenylene, m-(3-sulfopropylamino)phenylene, naphthylene and so on.

The heterocyclic group includes a substituted heterocyclic group and an unsubstituted heterocyclic group. Further, an aliphatic ring, an aromatic ring or another heterocycle may be fused to the heterocycle. As the heterocyclic group, a 5-membered or 6-membered heterocyclic group is preferable. Examples of the hetero atom in the heterocycle include N, O and S. Examples of the substituent include aliphatic groups, halogen atoms, alkyl- and aryl sulfonyl groups, acyl groups, acylamino groups, a sulfamoyl group, a carbamoyl group and ionic hydrophilic groups. Examples of the heterocycle to be used in monovalent and divalent heterocyclic groups include pyridine, thiophene, thiazole, benzothiazole, benzoxazole and furan rings.

The carbamoyl group includes a substituted carbamoyl group and an unsubstituted carbamoyl group. Examples of the substituent include alkyl groups. Examples of the above-described carbamoyl group include methylcarbamoyl and dimethylcarbamoyl groups.

The alkoxycarbonyl group includes a substituted alkoxycarbonyl group and an unsubsti tuted alkoxycarbonyl group. As the alkoxycarbonyl group, an alkoxycarbonyl group having from 2 to 20 carbon atoms is preferable. Examples of the substituent include ionic hydrophilic groups . Examples of the above-described alkoxycarbonyl group include methoxycarbonyl and ethoxycarbonyl groups.

The aryloxycarbonyl group includes a substituted aryloxycarbonyl group and an unsubstituted aryloxycarbonyl group. As the aryloxycarbonyl group, an aryloxycarbonyl group having from 7 to 20 carbon atoms is preferable. Examples of the substituent include ionic hydrophilic groups. Examples of the above-described aryloxycarbonyl group include a phenoxycarbonyl group.

The heterocyclic oxycarbonyl group includes a substituted heterocyclic oxycarbonyl group and an unsubstituted heterocyclic oxycarbonyl group. As the heterocyclic oxycarbonyl group, a heterocyclic oxycarbonyl group having from 2 to 20 carbon atoms is preferable. Examples of the substituent include ionic hydrophilic groups. Examples of the above-described heterocyclic oxycarbonyl group include a 2-pyridyloxycarbonyl group.

The acyl group includes a substituted acyl group and an unsubstituted acyl group. As the acyl group, an acyl group having from 1 to 20 carbon atoms is preferable. Examples of the substituent include ionic hydrophilic groups. Examples of the above-described acyl group include acetyl and benzoyl groups.

The alkoxy group includes a substituted alkoxy group and an unsubstituted alkoxy group. As the alkoxy group, an alkoxy group having from 1 to 20 carbon atoms is preferable. Examples of the substituent include alkoxy groups, a hydroxyl group and ionic hydrophilic groups. Examples of the above-described alkoxy group include methoxy, ethoxy, isopropoxy, methoxyethoxy, hydroxyethoxy and 3-acrboxypropoxy groups.

The aryloxy group includes a substituted aryloxy group and an unsubstituted aryloxy group. As the aryloxy group, an aryloxy group having from 6 to 20 carbon atoms is preferable. Examples of the substituent include alkoxy groups and ionic hydrophilic groups. Examples of the above-described aryloxy group include phenoxy, p-methoxyphenoxy and o-methoxyphenoxy groups.

The heterocyclic oxy group includes a substituted heterocyclic oxy group and an unsubstituted heterocyclic oxy group. As the heterocyclic oxy group, a heterocyclic oxy group having from 2 to 20 carbon atoms is preferable. Examples of the substituent include alkyl groups, alkoxy groups and ionic hydrophilic groups. Examples of the above-described heterocyclic oxy group include 3-pyridyloxy and 3-thienyloxy groups.

As the silyloxy group, a silyloxy group substituted by an aliphatic group or an aromatic group having from 1 to 20 carbon atoms is preferable. Examples of the silyloxy group include trimethylsilyloxy and diphenylmethylsilyloxy groups.

The acyloxy group includes a substituted acyloxy group and an unsubstituted acyloxy group. As the acyloxy group, an acyloxy group having from 1 to 20 carbon atoms is preferable. Examples of the substituent include ionic hydrophilic groups. Examples of the above-described acyloxy group include acetoxy and benzoyloxy groups.

The carbamoyloxy group includes a substituted carbamoyloxy group and an unsubstituted carbamoyloxy group. Examples of the substituent include alkyl groups. Examples of the above-described carbamoyloxy group include an N-methylcarbamoyloxy group.

The alkoxycarbonyloxy group includes a substituted alkoxycarbonyloxy group and an unsubstituted alkoxycarbonyloxy group. As the alkoxycarbonyloxy group, an alkoxycarbonyloxy group having from 2 to 20 carbon atoms is preferable. Examples of the above-described alkoxycarbonyloxy group include methoxycarbonyloxy and isopropoxycarbonyloxy groups.

The aryloxycarbonyloxy group includes a substituted aryloxycarbonyloxy group and an unsubstituted aryloxycarbonyloxy group. As the aryloxycarbonyloxy group, an aryloxycarbonyloxy group having from 7 to 20 carbon atoms is preferable. Examples of the above-described aryloxycarbonyloxy group include a phenoxycarbonyloxy group.

The amino group includes an amino group substituted by an alkyl group, an aryl group or a heterocyclic group and the alkyl group, aryl group and heterocyclic group may be further substituted. As the alkylamino group, an alkylamino group having from 1 to 20 carbon atoms is preferable. Examples of the substituent include ionic hydrophilic groups. Examples of the alkylamino group include methylamino and diethylamino groups.

The arylamino group includes a substituted arylamino group and an unsubstituted arylamino group. As the arylamino group, an arylamino group having from 6 to 20 carbon atoms is preferable. Examples of the substituent include halogen atoms and ionic hydrophilic groups. Examples of the above-described arylamino group include aniline and 2-chlorophenylamino groups.

The heterocyclic amino group includes a substituted heterocyclic amino group and an unsubstituted heterocyclic amino group. As the heterocyclic amino groups a heterocyclic amino group having from 2 to 20 carbon atoms is preferable. Examples of the substituent include alkyl groups, halogen atoms and ionic hydrophilic groups.

The acylamino group includes a substituted acylamino group and an unsubstituted acylamino group. As the acylamino group, an acylamino group having from 2 to 20 carbon atoms is preferable. Examples of the substituent include ionic hydrophilic groups. Examples of the above-described acylamino group include acetylamino, propionylamino, benzoylamino, N-phenylacetylamino and 3,5-disulfobenzoylamino groups.

The ureido group includes a substituted ureido group and an unsubstituted ureido group. As the ureido group, an ureido group having from 1 to 20 carbon atoms is preferable. Examples of the substituent include alkyl groups and aryl groups. Examples of the above-described ureido group include 3-methylureido, 3,3-dimetmhylureido and 3-phenylureido groups.

The sulfamoylamino group includes a substituted sulfamoylamino group and an unsubstituted sulfamoylamino group. Examples of the substituent include alkyl groups. Examples of the above-described sulfamoylamino group include an N,N-dipropylsulfamoyl group.

The alkoxycarbonylamino group includes a substituted alkoxycarbonylamino group and an unsubstituted alkoxycarbonylamino group. As the alkoxycarbonylamino group, an alkoxycarbonylamino group having from 2 to 20 carbon atoms is preferable. Examples of the substituent include ionic hydrophilic groups. Examples of the above-described alkoxycarbonylamino group include an ethoxycarbonylamino group.

The aryloxycarbonylamino group includes a substituted aryloxycarbonylamino group and an unsubstituted aryloxycarbonylamino group. As the aryloxycarbonylamino group, an aryloxycarbonylamino group having from 7 to 20 carbon atoms is preferable. Examples of the substituent include ionic hydrophilic groups. Examples of the above-described aryloxycarbonylamino group include a phenoxycarbonylamino group.

The alkyl- and arylsulfonylamino groups include substituted alkyl- and arylsulfonylamino groups and unsubstituted alkyl- and arylsulfonylamino groups. As the sulfonylamino group, a sulfonylamino group having from 1 to 20 carbon atoms is preferable. Examples of the substituent include ionic hydrophilic groups. Examples of these sulfonyl amino groups include methylsulfonylamino, N-phenylmethylsulfonylamino, phenylsulfonylamino and 3-carboxyphenylsulfonylamino groups.

The heterocyclic sulfonylamino group includes a substituted heterocyclic sulfonylamino group and an unsubstituted heterocyclic sulfonylamino group. As the heterocyclic sulfonylamino group, a heterocyclic sulfonylamino group having from 1 to 12 carbon atoms is preferable. Examples of the substi tuent include ionic hydrophilic groups. Examples of the above-described heterocyclic sulfonylamino group include 2-thiophenesulfonylamino and 3-pyridinesulfonylamino groups.

The heterocyclic sulfonyl group includes a substituted heterocyclic sulfonyl group and an unsubstituted heterocyclic sulfonyl group. As the heterocyclic sulfonyl group, a heterocyclic sulfonyl group having from 1 to 20 carbon atoms is preferable. Examples of the substituent include ionic hydrophilic groups. Examples of the above-described heterocyclic sulfonyl group include 2-thiophenesulfonyl and 3-pyridinesulfonyl groups.

The heterocyclic sulfinyl group includes a substituted heterocyclic sulfinyl group and an unsubstituted heterocyclic sulfinyl group. As the heterocyclic sulfinyl groups a heterocyclic sulfinyl group having from 1 to 20 carbon atoms is preferable. Examples of the substituent include ionic hydrophilic groups. Examples of the above-described heterocyclic sulfinyl group include a 4-pyridinyesulfinyl group.

The alkyl, aryl and heterocyclic thio groups include substituted alkyl, aryl and heterocyclic thio groups and unsubstituted alkyl, aryl and heterocyclic thio groups. As the alkyl, aryl and heterocyclic thio groups, those having from 1 to 20 carbon atoms arepreferable. Examples of the substituent include ionic hydrophilic groups. Examples of the above-described alkyl, aryl and heterocyclic thio groups include methylthio, phenylthio and 2-pyridylthio groups.

The alkyl- and arylsulfonyl groups include substituted alkyl- and arylsulfonyl groups and unsubstituted alkyl- and arylsulfonyl groups. Examples of the alkyl- and arylsulfonyl groups include amethylsulfonyl group and aphenylsulfonyl group respectively.

The alkyl- and arylsulfinyl groups include substituted alkyl- and arylsulfinyl groups and unsubstituted alkyl- and arylsulfinyl groups. Examples of the alkyl- and arylsulfinyl groups include a methyl sulfinyl group and a phenylsulfinyl group respectively.

The sulfamoyl group includes a substituted sulfamoyl group and an unsubstituted sulfamoyl group. Examples of the substituent include alkyl groups. Examples of the above-described sulfamoyl group include dimethylsulfamoyl and di-(2-hydroxyethyl)sulfarnoyl groups.

Next, the formulae (4), (4-A) and (4-B) will be illustrated.

In the following illustration, each group and substituent have the same meanings as described above.

In the formula (4), A₄₁, B₄₁ and C₄₁ independently represent each an optionally substituted aromatic group (A₄₁ and C₄₁ are monovalent aromatic groups such as an aryl group; and B₄₁ is a divalent aromatic group such as an arylene group) or an optionally substituted heterocyclic group (A₄₁ and C₄₁ are monovalent heterocyclic groups; and B₄₁ is a divalent heterocyclic group). Examples of the aromatic rings include benzene and naphthalene rings. Examples of the hetero atom in the heterocycle include N, O and S. Further, an aliphatic ring, an aromatic ring or another heterocycle may be fused to the heterocycle.

The substituent may be an arylazo group or a heterocyclic azo group.

It is preferable that at least 1 of A₄₁, B₄₁ and C₄₁ is a heterocyclic group and it is still preferable that at least 2 of A₄₁, B₄₁ and C₄₁ are heterocyclic groups. All of A₄₁, B₄₁ and C₄₁ may be heterocyclic groups.

As a preferable heterocyclic group C₄₁, an aromatic nitrogen-containing 6-membered heterocyclic group represented by the following formula (4-C) may be cited. In the case where C₄₁ is an aromatic nitrogen-containing 6-membered heterocyclic group represented by the formula (4-C), the formula (4) corresponds to the formula (4-A).

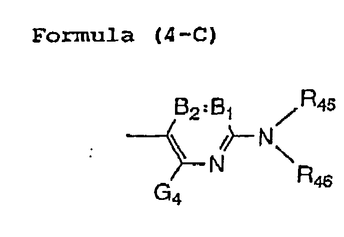

In the formula (4-C) , B₁ and B₂ each represents =CR₄₁-or -CR₄₂=, or one of them represents a nitrogen atom while the other represents =CR₄₁- or -CR₄₂=. It is preferable that each of them represents =CR₄₁- or -CR₄₂=.

R₄₅ and R₄₆ independently represent each a hydrogen atom, an aliphatic group, an aromatic group, a heterocyclic group, an acyl group, an alkoxycarbonyl group, an aryloxycarbonyl group, a carbamoyl group, an alkyl- or arylsulfonyl group or a sulfamoyl group and such a group may be further substituted. Preferable examples of the substituents represented by R₄₅ and R₄₆ include a hydrogen atom, aliphatic groups, aromatic groups, heterocyclic groups, acyl groups and alkyl- or arylsulfonyl groups. Still preferable examples thereof include a hydrogen atom, aromatic groups, heterocyclic groups, acyl groups and alkyl- or arylsulfonyl groups and a hydrogen atom, aryl groups and heterocyclic groups are most desirable. Each group may further have a substituent. However, R₄₅ and R₄₆ do not represent both hydrogen atoms at the same time.

G₄, R₄₁ and R₄₂ independently represent each a hydrogen atom, a halogen atom, an aliphatic group, an aromatic group, a heterocyclic group, a cyano group, a carboxyl group, a carbamoyl group, an alkoxycarbonyl group, an aryloxycarbonyl group, a heterooyolicoxycarbonyl groups an acyl group, a hydroxy group, an alkoxy group, an aryloxy group, a heterocyclic oxy group, a silyloxy group, an acyloxy group, a carbamoyloxy group, an alkoxycarbonyloxy group, an aryloxycarbonyloxy group, an amino group (including an alkylamino group, an arylamino group and a heterocyclic amino group) , an acylamino group, an ureido group, a sulfamoylamino group, an alkoxycarbonylamino group, an aryloxycarbonylamino group, an alkyl- or arylsulfonylamino group, a heterocyclic sulfonylamino groups a nitro group, an alkyl- or arylthio group, a heterocyclic thio group, an alkyl-or arylsulfonyl group, a heterocyclic sulfonyl group, an alkyl-or arylsulfinyl group, a heterocyclic sulfinyl group, a sulfamoyl group or a sulfo group and such a group may be further substituted.

Examples of the substituent represented by G₄ include a hydrogen atom, halogen atoms, aliphatic groups, aromatic groups, a hydroxy group, alkoxy groups, aryloxy groups, acyloxy groups, heterocyclic oxy groups, amino groups (including alkylamino groups, arylamino groups and heterocyclic amino groups), acylamino groups, an ureido group, a sulfamoylamino group, alkoxycarbonylamino groups, aryloxycarbonylamino groups, alkyl- and arylthio groups and heterocyclic thio groups. Still preferable examples thereof include a hydrogen atom, halogen atoms, alkyl groups, a hydroxy group, alkoxy groups, aryloxy groups, acyloxy groups, an amino group (including alkylamino groups, arylamino groups and heterocyclic amino groups) and acylamino groups. Among all, a hydrogen atom, an anilino group and acylamino groups are most desirable. Each group may be further substituted.

Preferable examples of the substituents represented by R₄₁ and R₄₂ include a hydrogen atom, alkyl groups, halogen atoms, alkoxycarbonyl groups, a carboxyl group, a carbamoyl group, a hydroxy group, alkoxy groups and a cyano group. Each group may be further substituted.

Also, R₄₁ and R₄₅ or R₄₅ and R₄₆ may be bonded to each other to form a 5- or 6-membered ring.

In the case where the substituents represented by A₄₁ R₄₁, R₄₂, R₄₅, R₄₆ and G₄ are further substituted, examples of the substituents are those cited above with regard to G₄, R₄₁ and R₄₂. It is preferable that an ionic hydrophilic group is further attached as a substituent to any of A₄₁, R₄₂, R₄₁, R₄₅, R₄₆ and G₄.

Examples of the ionic hydrophilic group as a substituent include a sulfo group, a carboxyl group, a phosphono group, a quaternary ammonium group and so on. As the above-described ionic hydrophilic group, a carboxyl group, a phosphono group and a sulfo group are preferable and a carboxyl group and a sulfo group are still preferable. These carboxyl group, phosphono group and sulfo group may be in the form of a salt. Examples of the counter ion forming the salt include ammonium ion, alkali metal ions (for example, lithium ion, sodium ion and potassium ion) and organic cations (for example, tetramethylammonium ion, tetramethylguanidium ion and tetramethylphosphonium). Among all, lithium ion is favorable.

In the case where B₄₁ has a cyclic structure, preferable examples of the heterocycle include a thiophene ring, a thiazole ring, an imidazole ring, a benzothiazole ring and a thienothiazole ring. Each heterocyclic group may be further substituted. Among all, a thiophene ring, a thiazole ring, an imidazole ring, a benzothiazole ring and a thienothiazole ring represented by the following formulae (a) to (e) are preferable. When B₄₁ is a thiophene ring represented by (a) and C₄₁ has the structure represented by the above-described formula (4-C) , then the formula (4) corresponds to the formula (4-B).

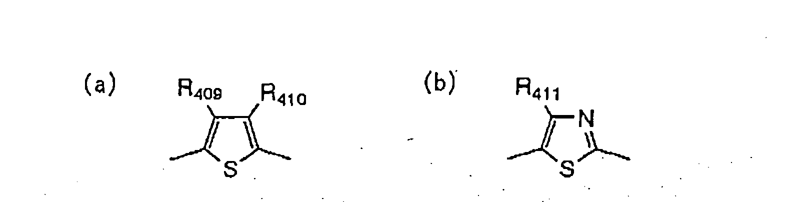

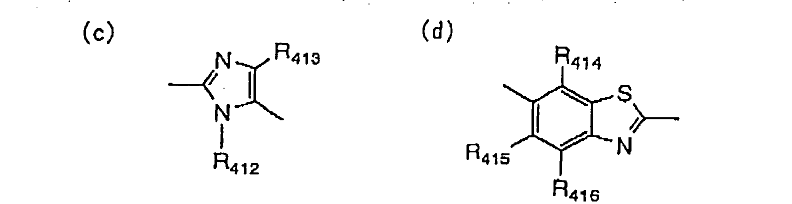

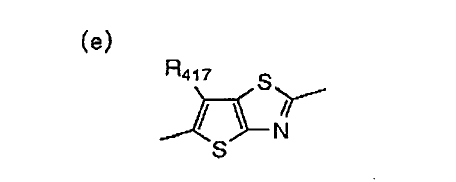

In the above formulae (a) to (e) , R₄₀₉ to R₄₁₇ represent substituents having the same meanings as G₄, R₄₁ and R₄₂ in the formula (4-A).

A particularly preferable structure in the invention is the one represented by the following formula (4-D).

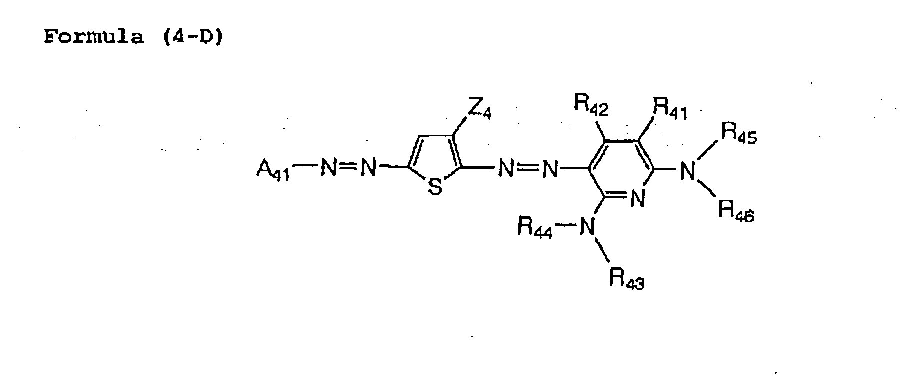

In the above formula, Z₄ represents an electron-withdrawing group having a Hammett's substituent constant σp of 0.20 or more. It is preferable that Z₄ is an electron-withdrawing group having a σp of 0.30 or more, still preferably an electron-withdrawing group having a σp of 0.45 or more and particularly preferably an electron-withdrawing group having a σp of 0.60 or more, though it is desirable that the σp does not exceed 1.0. As preferable examples of the substituent, citation may be made of electron-withdrawing groups as will be described hereinafter. Among all, acyl groups having from 2 to 20 carbon atoms, alkyloxycarbonyl groups having from 2 to 20 carbon atoms, a nitro group, a cyano group, alkylsulfonyl groups having from 2 to 20 carbon atoms, arylsulfonyl groups having from 6 to 20 carbon atoms, carbamoyl groups having from 1 to 20 carbon atoms and halogenated alkyl groups having from 1 to 20 carbon atoms are preferable. Particularly preferable examples thereof include cyano groups, alkylsulfonyl groups having from 1 to 20 carbon atoms and arylsulfonyl groups having from 6 to 20 carbon atoms, and a cyano group is most desirable therefor.

R₄₁, R₄₂, R₄₅ and R₄₆ have the same meanings as in the formula (4-A). R₄₃ and R₄₄ independently represent each a hydrogen atom, an aliphatic group, an aromatic group, a heterocyclic group, an acyl group, an alkoxycarbonyl group, an aryloxycarbonyl group, a carbamoyl group, an alkyl- or arylsulfonyl group or a sulfamoyl group. Among all, a hydrogen atom, an aromatic group, a heterocyclic group, an acyl group, and an alkyl- or arylsulfonyl group are preferable and a hydrogen atom, an aromatic group and a heterocyclic group are particularly preferable.

Each of the substituents illustrated with regard to the formula (4-D) may be further substituted. In the case where these substituents are further substituted, examples of the substituents include those illustrated with regard to the formula (4-A) , the groups represented by G₄, R₄₁ and R₄₂ and ionic hydrophilic groups.

Although each of the above-described substituents is restricted or illustrated based on the Hammett's substituent constant σ_{P} in the present invention, it is needless to say that such substituents are not restricted to substituents having known parameters as reported in the above publications but include substituents the parameters of which seemingly fall within the range when measured in accordance with Hammett's rule. Although the compounds of the formulae (4) , (4-A) , (4-B) , (4-C) and (4-D) include those which are not benzene derivatives, σ_{P} is also employed as an indication of the electron effect of each substituent regardless of the substitution position. That is to say, σ_{P} is employed in this meaning in the invention.

Examples of electron-withdrawing groups having a Hammett's substituent constant σ_{P} of 0.60 or more include a cyano group, a nitro group, alkylsulfonyl groups (for example, a methanesulfonyl group) and arylsulfonyl groups (for example, a benzenesulfonyl group).

Examples of electron-withdrawing groups having a Hammett' s substituent constant σₚ of 0.45 or more include, in addition to those cited above, acyl groups (for example, an acetyl group), alkoxycarbonyl groups (for example, a dodecyloxycarbonyl group), aryloxycarbonyl groups (for example, m-chlorophenoxycarbonyl) , alkylsulfinyl groups (for example, n-propylsulfinyl) , arylsulfinyl groups (for example, phenylsulfinyl), sulfamoyl groups (for example, N-ethylsulfamoyl and N,N-dimethylsulfamoyl) and halogenated alkyl groups (for example, trifluoromethyl).

Examples of electron-withdrawing groups having a Hammett's substituent constant σₚ of 0.30 or more include, in addition to those cited above, acyloxy groups (for example, acetoxy) , carbamoyl groups (for example, N-ethylcarbamoyl and N,N-dibutylcarbamoyl) , halogenatedalkoxygroups (for example, trifluoromethyloxy) , halogenated aryloxy groups (for example, pentafluorophenyloxy), sulfonyloxy groups (for example, methylsulfonyloxy) , halogenated alkyl thio groups (forexample, difluoromethylthio), aryl groups having 2 or more electron-withdrawing substituents having a Hammett's substituent constant σₚ of 0.15 or more (for example, 2,4-dinitrophenyl and pentachlorophenyl) and heterocyclic groups (for example, 2-benzoxazolyl, 2-benzothiazolyl and 1-phenyl-2-benzoimidazolyl).

Specific examples of electron-withdrawing groups having a Hammett's substituent constant σₚ of 0.20 or more include, in addition to those cited above, halogen atoms and so on.

Concerning the combination of preferable substituents in the azo dye represented by the above-described formula (4-B), it is favorable that R₄₅ and R₄₆ are each a hydrogen atom, an alkyl group, an aryl group, a heterocyclic group, a sulfonyl group or an acyl group, still preferably a hydrogen atom, an aryl group, a heterocyclic group or a sulfonyl group and a hydrogen atom, an aryl group or a heterocyclic group is most desirable, provided that R₄₅ and R₄₆ do not represent hydrogen atoms at the same time.

It is preferable that G₄ is a hydrogen atom, a halogen atom, an alkyl group, a hydroxyl group, an amino group or an acylamino group, still preferably a hydrogen atom, a halogen atom, an amino group or an acylamino group and a hydrogen atom, an amino group or an acylamino group is most desirable.

As A₄₁, an aromatic group, a pyrazole ring, an imidazole ring, an isothiazole ring, a thiadiazole ring and a benzothiazole ring are preferable. A pyrazole ring and an isothiazole ring are still preferable and a pyrazole ring is most desirable.

It is preferable that B₁ and B₂ are respectively =CR₄₁-and -CR₄₂= wherein R₄₁ and R₄₂ preferably represent each a hydrogen atom, an alkyl group, a halogen atom, a cyano group, a carbamoyl group, a carboxyl group, a hydroxyl group, an alkoxy group or an alkoxycarbonyl group, still preferably a hydrogen atom, an alkyl group, a carboxyl group, a cyano group or a carbamoyl group.

Concerning the combination of preferable substituents in the above-described azo dye, it is favorable that at least one of the substituents is selected from the above-described preferable groups. A dye having a larger number of substituents selected from the above-described preferable groups is still preferable and a dye all of the substi tuents of which are selected from the above-described preferable ones is most desirable.

Next, specific examples of the above-described azo dye will be presented, though the azo dye to be used in the invention is not restricted thereto. In the following specific examples, carboxyl group, phosphono group and sulfo group may be in the form of a salt. Examples of the counter ion forming the salt include ammonium ion, alkali metal ions (for example, lithium ion, sodium ion and potassium ion) and organic cations (for example, tetramethylammoniumion, tetramethylguanidiumionand tetramethylphosphonium) . Among all, lithium ion is favorable.

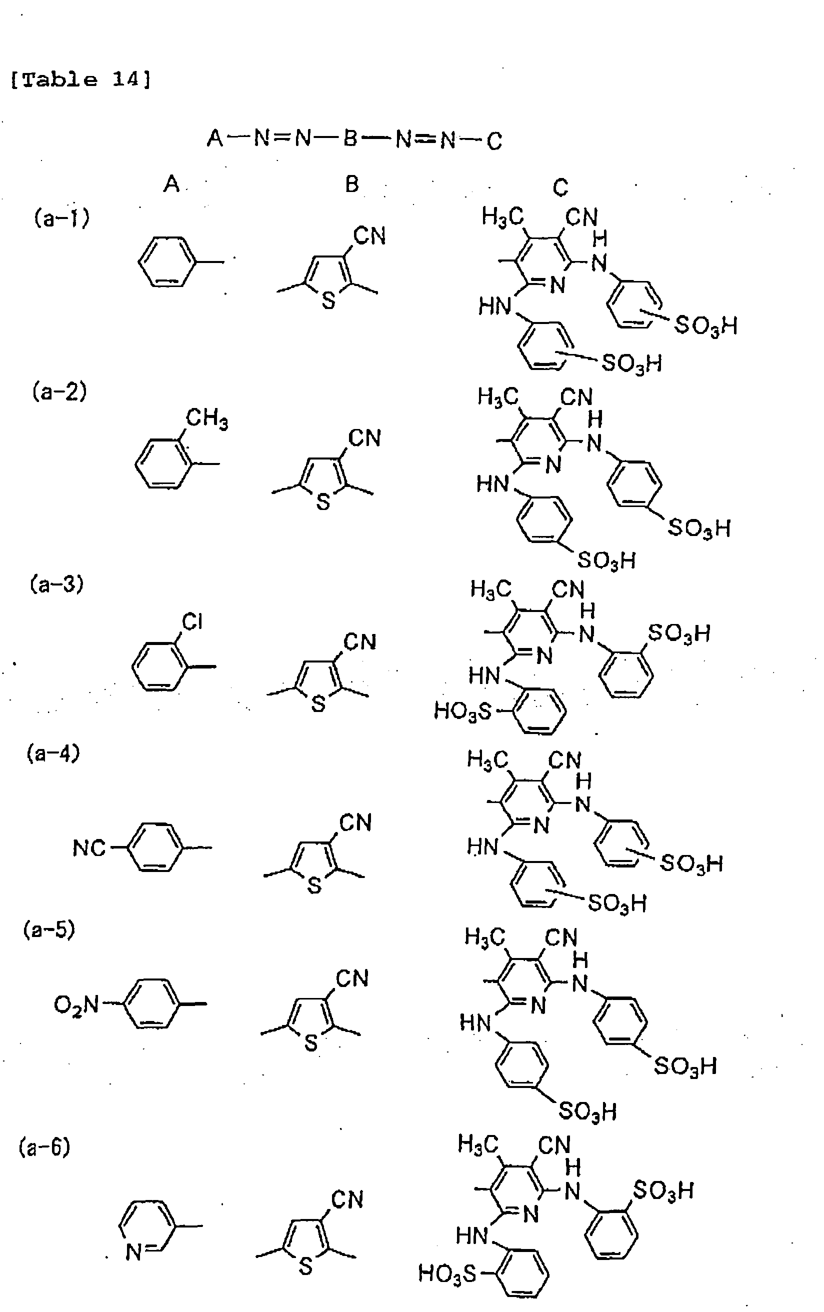

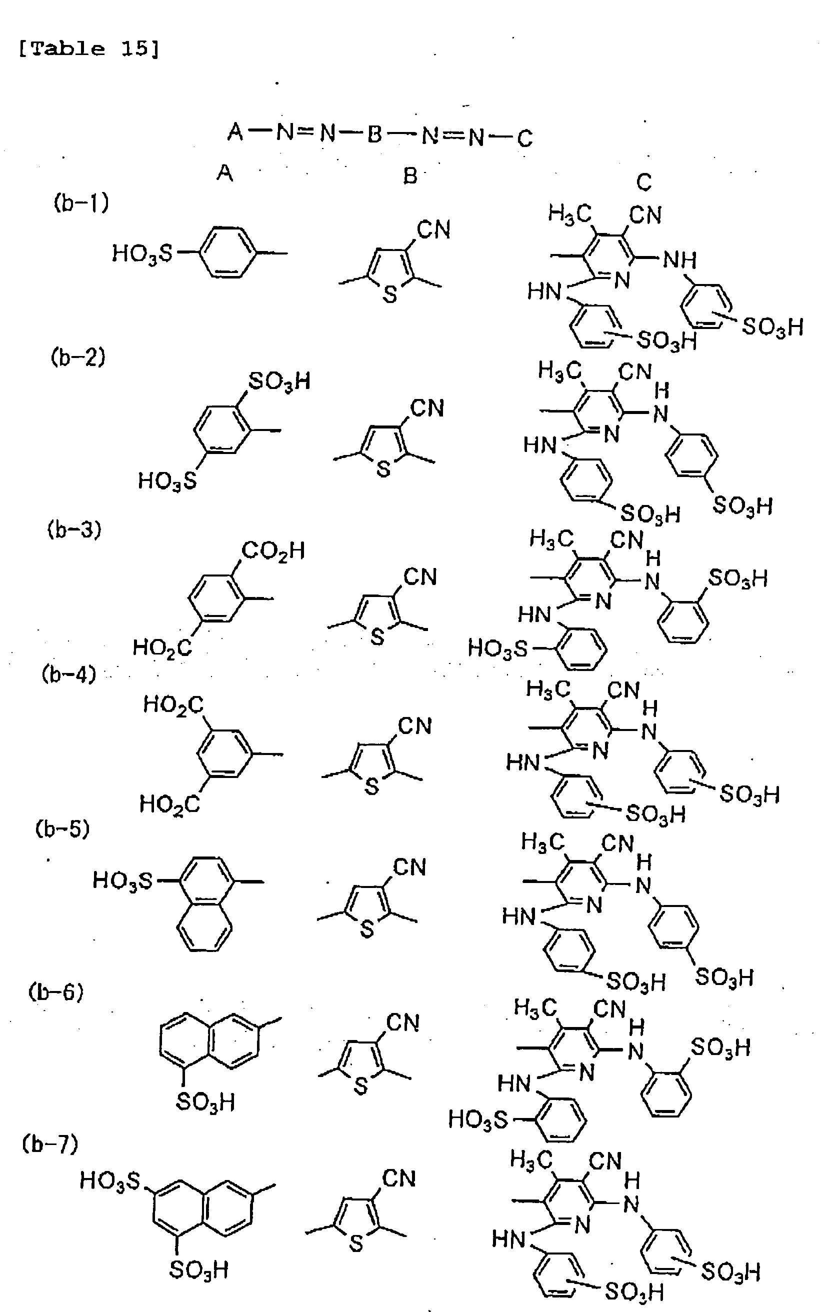

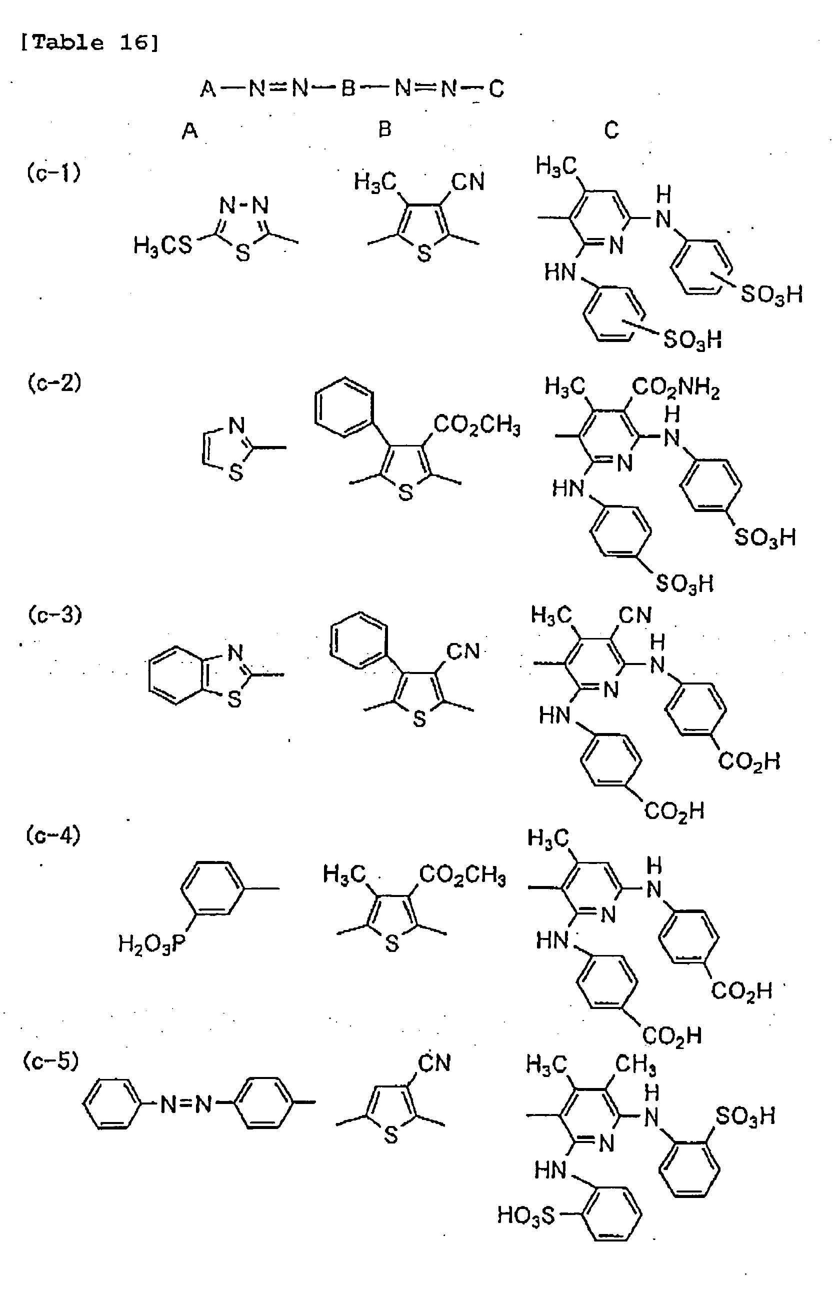

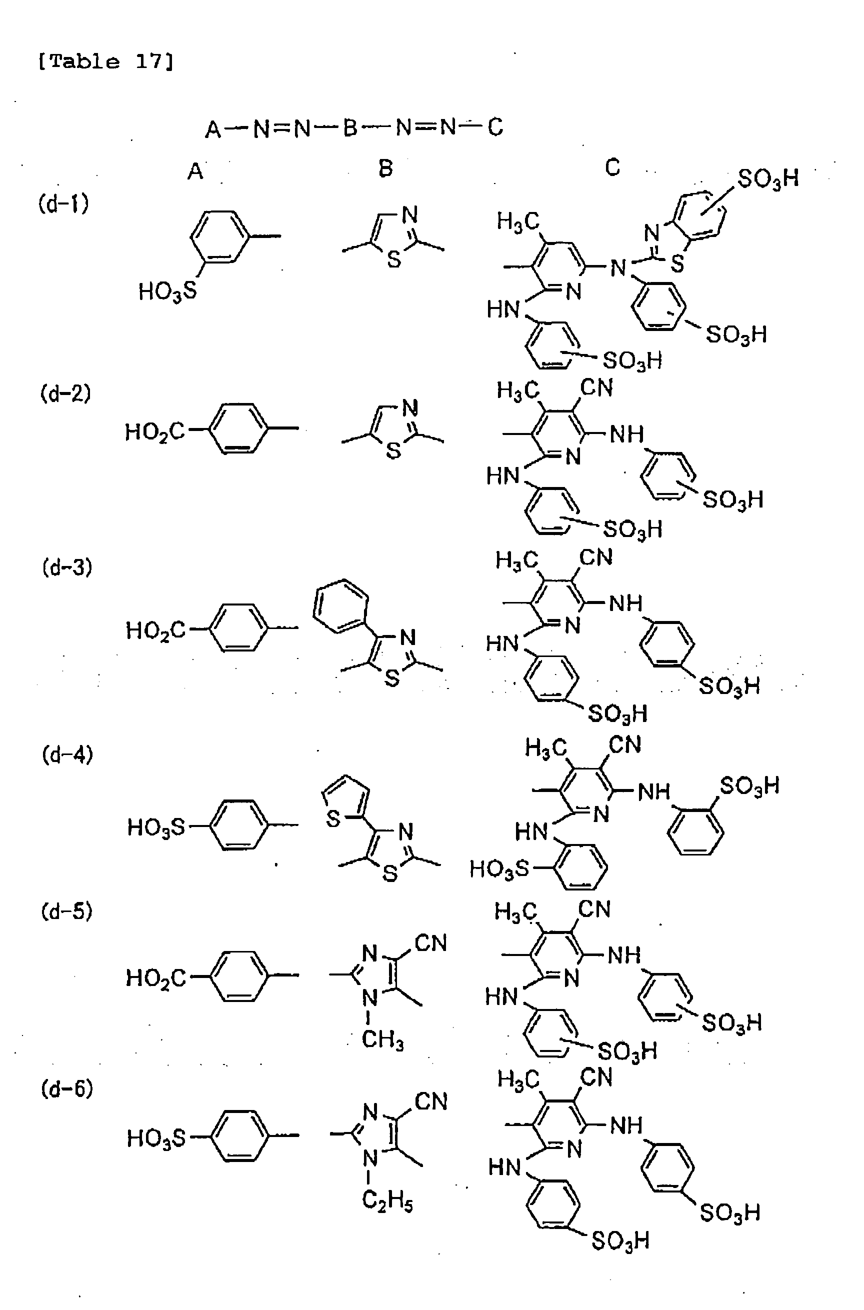

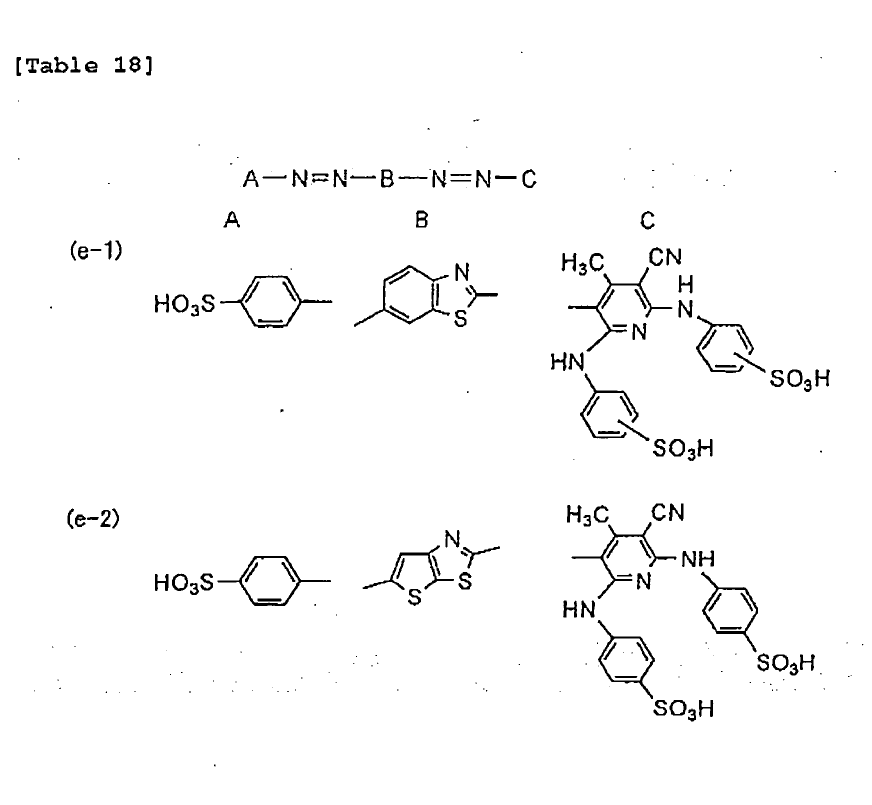

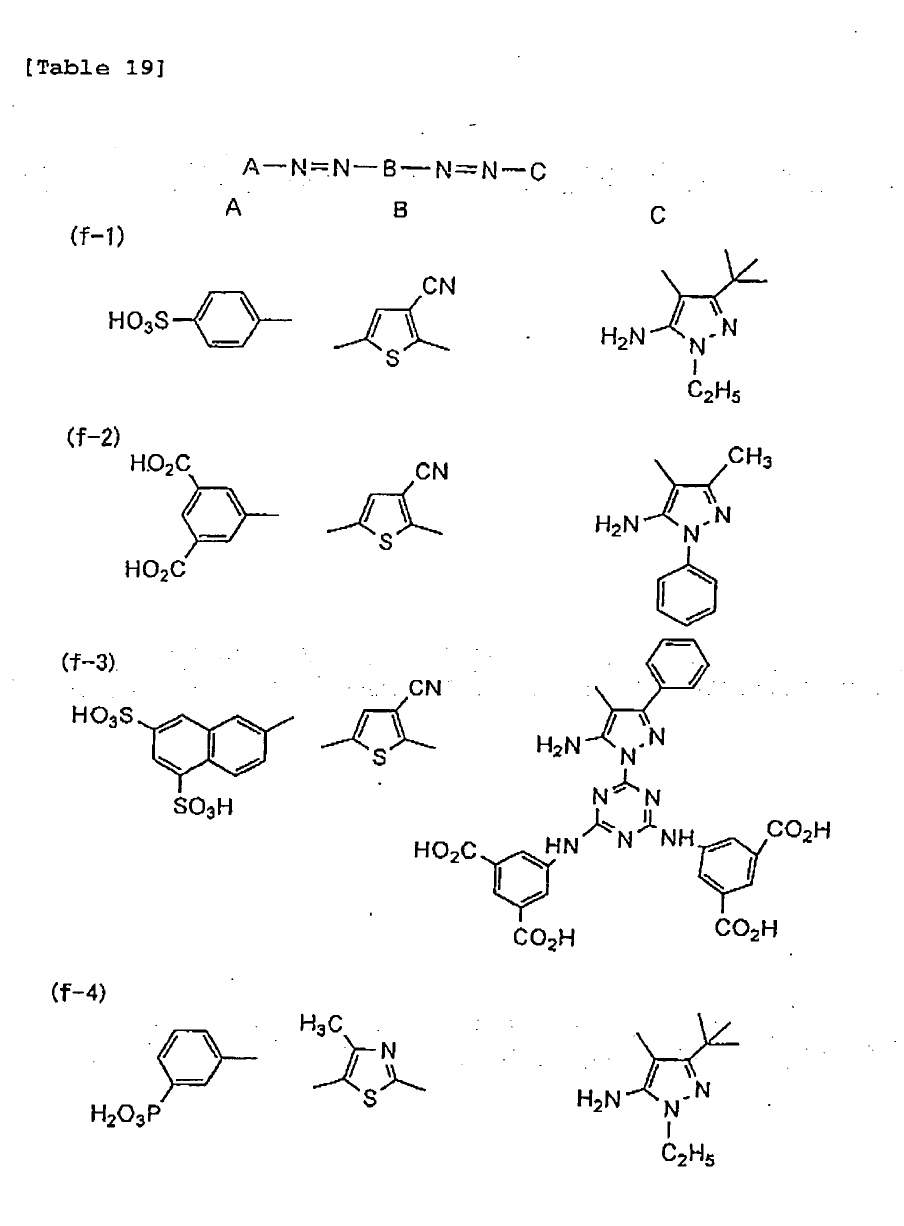

Azo dyes represented by the above-described formulae (4) , (4-1) , (4-B) and (4-D) can be synthesized by a coupling reaction between a diazo component and a coupler. The main synthesis can be carried out by the method reported in Japanese Patent Application 2002-113460.

As the dye (S) having a λmax of from 350 to 500 nm in the black ink, use can be preferably made of the dye represented by the formula (1) or (4) as described above and a yellow colorant and a yellow pigment as will be described hereinafter. Such a dye and a pigment may be used either combinedly or independently.

In the invention, it is preferable that the black ink contains from 0.2 to 20% by mass, still preferably from 0.5 to 15% by mass, of the dye represented by the formula (4).

Examples of dyes usable in the invention are as follows, in addition to the above-described ones. A single dye may be used. Alternatively, it is also possible to use a combination of plural dyes to control the color tone. In order to obtain a full-color image, use can be also made of an ink set consisting of plural inks with the use of plural dyes in the invention.

Yellow dyes include aryl or heteryl azo dyes having, for example, phenols, naphthols, anilines, pyrazolones, pyridones or open-chain active methylene compounds as a coupling component; azomethine dyes having, for example, open-chain active methylene compounds as a coupling component; methine dyes such as a benzylidene dye and a monomethine oxol dye; and quinone dyes such as a naphthoquinone dye and an anthraquinone dye. Examples of otherdye speciesinciude quinophthalone dyes, nitro-nitroso dyes, acridine dyes and acridinone dyes. Such a dye may be one which would not develop a yellow color until a part of its chromophore thereof is dissociated. In this case, the counter cation may be either an inorganic cation such as an alkali metal or ammonium or an organic cation such as pyridinium or a quaternary ammonium salt. Moreover, a polymer cation having such a cation as its partial structure may be used.

Magenta dyes include aryl or heteryl azo dyes having, for example, phenols, naphthols or anilines as a coupling component; azomethine dyes having, for example, pyrazolones or pyrazolotriazoles as a coupling component; methine dyes such as an arylidene dye, a styryl dye, a merocyanine dye and an oxonol dye; carbonium dyes such as a diphenylmethane dye, a triphenylmethane dye and a xanthene dye; quinone dyes such as a naphthoquinone dye and an anthraquinone dye; and fused polycyclic dyes such as a dioxazine dye. Such a dye may be one which would not develop a magenta color until a part of its chromophore thereof is dissociated. In this case, the counter cation may be either an inorganic cation such as an alkali metal or ammonium or an organic cation such as pyridinium or a quaternary ammonium salt. Moreover, a polymer cation having such a cation as its partial structure may be used.

Cyan dyes include azomethine dyes such as an indoaniline dye and an indophenol dye; polymethine dyes such as a cyanine dye, an oxonol dye and a merocyanine dye; carbonium dyes such as a diphenylmethane dye, a triphenylmethane dye and a xanthene dye; phthalocyanine dyes; anthraquinone dyes; aryl or heteryl azo dyes having, for example, phenols, naphthols or anilines as a coupling component; and indigo-thioindigo dyes. Such a dye may be one which would not develop a cyan color until a part of its chromophore thereof is dissociated. In this case, the counter cation may be either an inorganic cation such as an alkali metal or ammonium or an organic cation such as pyridinium or a quaternary ammonium salt. Moreover, a polymer cation having such a cation as its partial structure may be used.

It is also possible to use water-soluble dyes such as direct dyes, acidic dyes, edible dyes, basic dyes and reactive dyes. Preferable examples thereof are as follows.

C.I. Direct Red Nos. 2, 4, 9, 23, 26, 31, 39, 62, 63, 72, 75, 76, 79, 80, 81, 83, 84, 89, 92, 95, 111, 173, 184, 207, 211, 212, 214, 218, 21, 223, 224, 225, 226, 227, 232, 233, 240, 241, 242, 243 and 247.

C.I. Direct Violet Nos. 7, 9, 47, 48, 51, 66, 90, 93, 94, 95, 98, 100 and 101.

C.I. Direct Yellow Nos. 8, 9, 11, 12, 27, 28, 29, 33, 35, 39, 41, 44, 50, 53, 58, 59, 68, 86, 87, 93, 95, 96, 98, 100, 106, 108, 109, 110, 130, 132, 142, 144, 161 and 163.

C.I. Direct Blue Nos. 1, 10, 15, 22, 25, 55, 67, 68, 71, 76, 77, 78, 80, 84, 86, 87, 90, 98, 106, 108, 109, 151, 156, 158, 159, 160, 168, 189, 192, 193, 194, 199, 200, 201, 202, 203, 207, 211, 213, 214, 218, 225, 229, 236, 237, 244, 248, 249, 251, 252, 264, 270, 280, 288, 289 and 291.

C.I. Direct Black Nos. 9, 17, 19, 22, 32, 51, 56, 62, 69, 77, 80, 91, 94, 97, 108, 112, 113, 114, 117, 118, 121, 122, 125, 132, 146, 154, 166, 168, 173 and 199.

C.I. Acid Red Nos. 35, 42, 52, 57, 62, 80, 82, 111, 114, 118, 119, 127, 128, 131, 143, 151, 154, 158, 249, 254, 257, 261, 263, 266, 289, 299, 301, 305, 336, 337, 361, 396 and 397.

C.I. Acid Violet Nos. 5, 34, 43, 47, 48, 90, 103 and 126.

C.I. Acid Yellow Nos. 17, 19, 23, 25, 39, 40, 42, 44, 49, 50, 61, 64, 76, 79, 110, 127, 135, 143, 151, 159, 169, 174, 190, 195, 196, 197, 199, 218, 219, 222 and 227.

C.I. Acid Blue Nos. 9, 25, 40, 41, 62, 72, 76, 78, 80, 82, 92, 106, 112, 113, 120, 127:1, 129, 138, 143, 175, 181, 205, 207, 220, 221, 230, 232, 247, 258, 260, 264, 271, 277, 278, 279, 280, 288, 290 and 326.

C.I. Acid Black Nos. 7, 24, 29, 48, 52:1 and 172.

C.I. Reactive Red Nos. 3, 13, 17, 19, 21, 22, 23, 24, 29, 35, 37, 40, 41, 43, 45, 49 and 55.

C.I. Reactive Violet Nos. 1, 3, 4, 5, 6, 7, 8, 9, 16, 17, 22, 23, 24, 26, 27, 33 and 34.

C.I. Reactive Yellow Nos. 2, 3, 13, 14, 15, 17, 18, 23, 24, 25, 26, 27, 29, 35, 37, 41 and 42.

C.I. Reactive Blue Nos. 2, 3, 5, 8, 10, 13, 14, 15, 17, 18, 19, 21, 25, 26, 27, 28, 29 and 38.

C.I. Reactive Black Nos. 4, 5, 8, 14, 21, 23, 26, 31, 32 and 34.

C.I. Basic Red Nos. 12, 13, 14, 15, 18, 22, 23, 24, 25, 27, 29, 35, 36, 38, 39, 45 and 46.

C.I. Basic Violet Nos. 1, 2, 3, 7, 10, 15, 16, 20, 21, 25, 27, 28, 35, 37, 39, 40 and 48.

C.I. Basic Yellow Nos. 1, 2, 4, 11, 13, 14, 15, 19, 21, 23, 24, 25, 28, 29, 32, 36, 39 and 40.

C.I. Basic Blue Nos. 1, 3, 5, 7, 9, 22, 26, 41, 45, 46, 47, 54, 57, 60, 62, 65, 66, 69 and 71.

C.I. Basic Black No. 8, and so on.

In the invention, it is also possible to use an ink with the use of a combination of a pigment with a dye.

As the pigment usable in the invention, use can be made of commercially available products as well as publicly known ones reported in various documents. Examples of such documents include *Color Index,* (ed. by The Society of Dyers and Colourists) ; *Kaitei Shinpan Ganryo Binran,* ed. by Nippon Ganryo Gijutu Kyokai (1989) ; *Salshin Ganryo Oyo Gijutsu,* CMC Shuppan (1986); *Insatau Inki Gijutsu,* CMC Shuppan (1984) ; W. Herbst and K. Hunger, Industrial Organic Pigments (VCH Verlagsgesellschaft, 1993) ; etc. More specifically speaking, examples thereof include organic pigments such as azo pigments (azo lake pigments, insoluble azo pigments, fused azo pigment and chelate azo pigment), polycyclic pigments (phthalocyanine pigments, anthraquuinone pigments, perylene and perynone pigments, indigo pigments, quinacridone pigments, dioxazine pigments, isoindolinone pigments, quinophthalone pigments, diketopyrrolopyrole pigments, etc.), dye lake pigments (lake pigments of acidic or basic dyes), azine pigments and so on, and inorganic pigments such as yellow pigments (C.I. Pigment Yellow Nos. 34, 37, 42, 53, etc.), red pigments (C.I. Pigment Red Nos. 101, 108, etc.) , blue pigments (C. I . Pigment Blue Nos. 27, 29, 17:1, etc.), black pigments (C.I. Pigment Black No.7, magnetite, etc.) and white pigments (C.I. Pigment white Nos. 4, 6, 18, 21, etc.).

As pigments having favorable color tone for image formation, it is preferable to use, as blue or cyan pigments, phthalocyanine pigments, indanthrone pigments falling within the category of anthraquinone type (for example, C.I. Pigment Blue No.60) and triarylcarbonium pigments falling within the category of dye lake pigments. It is still preferable to use phthalocyanine pigments (preferable examples thereof including copper phthalocyanine pigments such as C.I. Pigment Blue Nos. 15:1, 15:2, 15:3, 15:4, 15:6, monochloro- or low-chlorinated copper phthalocyanine, aluminum phthalocyanine such as the one described in EP 860475, nonmetal phthalocyanine such as C. I. Pigment Blue No. 16 and phthalocyanine pigments having Zn, Ni or Ti as the center metal, and, among all, C.I. Pigment Blue Nos. 15:3 and 15:4 and aluminum phthalocyanine being most desirable).

As red or purple pigments, it is preferable to use azo pigments (preferable examples thereof including C. I. Pigment Red Nos. 3, 5, 11, 22, 38, 48:1, 48:2, 48:3, 48:4, 49:1, 52:1, 53:1, 57:1, 63:2, 144, 146 and 184), still preferably C.I. Pigment Red Nos. 57:1, 146 and 184; quinacridone pigments (preferable examples thereof including C.I. Pigment Red Nos. 122, 192, 202, 207 and 209 and C.I. Pigment Violet Nos. 19 and 42, and, among all, C.I. Pigment Red No. 122 being most desirable), triarylcarbonium pigments falling within the category of dye lake pigments (preferable examples thereof including xanthene-based C.I. Pigment Red No. 81:1 and C. I. Pigment Violet Nos. 1, 2, 3, 27 and 39), dioxane pigments (for example, C.I. Pigment Violet Nos. 23 and 37), diketopyrrolopyrole pigments (for example, C.I. Pigment Red 254), perylene pigments (for example, C.I. Pigment Violet No. 29), anthraquinone pigments (for example, C.I. Pigment Violet Nos. 5:1, 31 and 33) and thioindigo pigments (for example, C.I. Pigment Red Nos. 38 and 88).

As yellow pigments, it is preferable to use azo pigments (preferable examples thereof including monoazo pigments such as C.I. Pigment Yellow Nos. 1, 3, 74 and 98, disazo pigments such as C.I. Pigment Yellow Nos. 12, 13, 14, 16, 17 and 83, general azo type pigments such as C. I. Pigment Yellow Nos. 93, 94, 95, 128 and 155, benzimidazolone pigments such as C.I. Pigment Yellow Nos. 120, 151, 154, 156 an d180 and so on, and, among all, those not produced from benzidine compounds being still preferable), isoindoline and isoindolinone pigments (preferable examples including C.I. Pigment Yellow Nos. 109, 110, 137 and 139), quinophthalone pigments (preferable examples thereof including C. I. Pigment Yellow No. 138) and flavantrone pigments (for example, C.I. Pigment Yellow No. 24).

As black pigments, preferable examples include inorganic pigments (preferable examples thereof including carbon black and magnetite) and aniline black.

Furthermore, use may be made of orange pigments (C.I. Pigment Orange Nos. 13 and 16, etc.) or green pigments (C.I. Pigment Green No.7, etc.).

The pigment usable in the invention may be a naked pigment as described above. Alternatively, a surface-treated pigment may be used. Methods of the surface-treatment include coating the pigment surface with a resin or wax, adhering a surfactant, bonding a reactive substance (for example, a silane coupling agent, an epoxy compound, polyisocyanate or a radical formed from a diazonium salt) to the pigment surface. These methods are described in the following documents and patents.
(1) Kinzoku *Sekken* no Seishitsu to *Oyo* (Saiwai Shobo)
(2) Insatsu *Inki Insatsu* (CMC Shuppan, 1984)
(3) *Saishin Ganryo Oyo Gisutsu* (CMC Shuppan, 1986)
(4) US Patent 5,554,739 and US Patent 5,571,311
(5) JP-A-9-151342, JP-A-10-140065, JP-A-10-292143 and JP-A-11-166145

In particular, self-dispersible pigments prepared by treating carbon black with a diazonium salt as described in the above US Patents (4) and capsulated pigments prepared by the method described in the above Japanese Patents (5) are effective, since high dispersion stability can be established thereby without using any excessive dispersant in the ink.

In the invention, a pigment may be dispersed by further usingadispersant. As thedispersant, use can be made of various publicly known dispersants (for example, a low-molecular weight dispersant of the surfactant type and a high-molecular weight dispersant) selected depending on the pigment to be employed. As examples of the dispersants those described in JP-A-3-69949 and EP 549486 may be cited. In the case of using a dispersant, it is also possible to add a pigment derivative called a synergist to thereby promote the adsorption of the dispersant by the pigment.

It is preferable that the particle size of the pigment usable in the invention ranges from 0.01 to 10 µm, still preferably from 0.05 to 1 µm after the dispersion.

As a method of dispersing the pigment, use can be made of publicly known techniques employed in producing inks or toners. Examples of di spersingmachines include a vertical or horizontal agitator mill, an attoliter, a colloid mill, a ball mill, a three-roll mill, a pearl mill, a supermill, an impeller, a disperser, a KD mill, a Dynatron, a pressure kneader and so on. These machines are described in detail in *Saishin Ganryo Oyo Gijutsu* (CMC Shuppan, 1986).

As a water-soluble dye usable in the invention, it is preferable to employ amagenta dye reported in JP-A-2002-371214, a phthalocyanine dye reported in JP-A-2002-309118, a water-soluble phthalocyanine dye reported in JP-A-2003-12952 and JP-A-2003-12956 or the like.

The ink according to the invention can be prepared by adding the dye to an aqueous medium. The addition of the dye is preferably carried out by dissolving and/or dispersing the dye. The term "aqueous medium" as used herein means water optionally mixed with a solvent such as a water-miscible organic solvent, an additive such as a moistening agent, a stabilizer or a preservative, if necessary.

The above-described water-miscible organic solvent usable in the invention is a material having effects of preventing the inkjet recording ink from drying, accelerating the penetration thereof, moistening, etc. in the art. Use is mainly made of a high-boiling point water-miscible organic solvent therefor. Examples of such a compound include alcohols (for example, methanol, ethanol, propanol, isopropanol, butanol, isobutanol, sec-butanol, t-butanol pentanol, hexanol, cyclohexanol and benzyl alcohol), polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerol, hexanetriol and thiodiglycol), glycol derivatives (for example, ethylene glycol monometyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether and ethylene glycol monophenyl ether), amines (for example, ethanolamine, diethanolamine, triethanolamine, N-methyldiethanolamine, N-ethyldiethanolamine, morpholine, N-ethylmorpholine, ethylenediamine, diethylenetriamine, triethylenetetramine, polyethyleneimine and tetramethylpropylenediamine) and other polar solvents (for example, formamide, N,N-dimethylformamide, N,N-dimethylacetamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile and acetone). Two or more of these water-miscible organic solvents may be used together.

Among all, alcoholic solvents are preferable. It is preferable that the ink according to the invention contains a water-miscible organic solvent having a boiling point of 1.50°C or higher, for example, 2-pyrrolidone selected from among those cited above.

It is preferable that the total content of these water-miscible organic solvents is from 5 to 60% by mass, particularly preferably form 10 to 45% by mass, in the ink.

To prepare the ink according to the invention, it is preferable in the case of a water-soluble ink to first dissolve in water. Subsequently, various solvents and additives are added thereto and dissolved and mixed to give a homogeneous ink.

For the dissolution, use can be made of various methods such as dissolution under stirring, dissolution under ultrasonication, dissolution by shaking, etc. Among all, the stirring method is preferably employed. In the case of stirring, use can be made of various methods publicly known in the art, for example, fluidization stirring, stirring with the use of shear force (an inversion agitator, a dissolver, etc.) and so on. It is also preferable to employ a stirring system with the use of the shear force against the container bottom such as a magnetic stirrer.

The ink according to the invention may contain a surfactant by which the liquid properties of the ink can be controlled, thereby contributing to the improvement in the jetting stability of the ink, the improvement in the water resistance of a printed image and the prevention of the printed ink from bleeding.

Examples of the surfactant include anionic surfactants such as sodium dodecyl sulfate, sodium dodecyloxysulfonate and sodium alkylbenzenesulfonate, cationic surfactants such as cetylpyridinium chloride, trimethylcetylammonium chloride and tetrabutylammonium chloride, and nonionic surfactants such as polyoxyethylene nonyl phenyl ether, polyoxyethylene naphthyl ether and polyoxyethylene octyl phenyl ether. Among all, it is particularly preferable to use a nonionic surfactant.

The content of the surfactant ranges from 0.001 to 20% bymass, preferably from 0.005 to 10% bymass and still preferably from 0.01 to 5% by mass, based on the ink.

In the case where the above-described dye is a fat-soluble dye, the ink can be prepared by dissolving the fat-soluble dye in a high-boiling point organic solvent and then emulsified and dispersed in an aqueous medium.

The high-boiling point organic solvent to be used in the invention has a boiling point of 150°C or higher, preferably 170°C or higher.

Examples of the high-boiling point organic solvent include phthalic acid esters (for example, dibutyl phthalate, dioctyl phthalate, dicyclohexyl phthalate, di-2-ethylhexyl phthalate, decyl phthalate, bis(2,4-di-tert-amylphenyl) isophthalate and bis(1,1-diethylpropyl) phthalate), phosphoric acid or phosphone esters (for example, diphenyl phosphate, triphenyl phosphate, tricresyl phosphate, 2-ethylhexyldiphenyl phosphate, dioetylbutyl phosphate, tricyclohexyl phosphate, tri-2-ethylhexyl phosphate, tridecyl phosphate and di-2-ethylhexylphenyl phosphate) , beizoic acid esters (for example, 2-ethylhexyl benzoate, 2,4-dichloro benzoate, dodecyl benzoate and 2-ethylhexyl-o-hydroxybenzoate) , amides (for example, N,N-diethyldecanamide and N,N-diethyllaurylamide), alcohols or phenols (isostearyl alcohol, 2, 4-di-tert-amyl phenol, etc.), aliphatic esters (for example, dibutoxyethyl succinate, di-2-ethylhexyl succinate, h-hexyldecyl tetradecanoate, tributyl citrate, diethyl azelate, isostearyl lactate and trioctyl citrate), aniline derivatives (N,N-dibutyl-2-butoxy-5-tert-octylaniline, etc.), chlorinated paraffins (paraffins containing from 10% to 80% of chlorine), trimesic acid esters (for example, tributyl trimesate), dodecylbenzene, diisopropylnaphthalene, phenols (for example, 2,4-di-tert-amyl phenol, 4-dodecyloxy phenol, 4-dodecyloxycarbonyl phenol and 4-(4-dodecyloxyphenylsulfonyl) phenol)), carboxylic acids (for example, 2-(2,4-di-tert-amylphenoxybutyric acid and 2-ethoxyoctanedecanoic acid), alkylphosphoric acids (for example, di-2(ethylhexyl)phosphoric acid and diphenylphosphoric acid) and so on. Such a high-boiling point organic solvent can be used in an amount of from 0.01 to 3 times by mass, preferably form 0.01 to 1.0 time by mass, as much as the fat-soluble dye.

Either one of these high-boiling point organic solvents or a mixture of several types thereof (for example, tricresyl phosphate and dibutyl phthalate, trioctyl phosphate with di(2-ethylhexyl) cebacate, dibutyl phthalate with poly(N-t-butylacrylamide)) may be used.

Examples of the high-boiling point organic solvent to be used in the invention other than the compounds cited above and methods of synthesizing these high-boiling point organic solvents are described in, for example, US Patent 2,322,027, US Patent 2,533,514, US Patent 2,772,163, US Patent 2, 835,579, US Patent 3,594,171, US Patent 3,676,137, US Patent 3,689,271, US Patent 3,700,454, US Patent 3,748,141, US Patent 3,764,336, US Patent 3,765,897, US Patent 3,912,515, US Patent 3, 936,303, US Patent 4,004,928, US Patent 4,080,209, US Patent 4,127,413, US Patent 4,193,802, US Patent 4,207,393, US Patent 4,220,711, US Patent 4,239,851, US Patent 4,278,757, US Patent 4,353,979, US Patent 4,363,873, US Patent 4,430,421, US Patent 4,430,422, US Patent 4,464,464, US Patent 4,483,918, US Patent 4,540,657, US Patent 4,684,606, US Patent 4,728,599, US Patent 4,745,049, US Patent 4,935,321, US Patent 5,013,639, European Patent 276,319A, European Patent 286,253A, European Patent 289,820A, European Patent 309,158A, European Patent 309, 159A, European Patent 309,160A, European Patent 509,311A, European Patent 510, 576A, East Germany Patent 147,009, East Germany Patent 157,147, East Germany Patent 159,573, East Germany Patent 225,240A, British Patent 2,091,124A, JP-A-48-47355, JP-A-50-26530, JP-A-51-25133, JP-A-51-26036, JP-A-51-27921, JP-A-51-27922, JP-A-51-149028, JP-A-52-46816, JP-A-53-1520, JP-A-53-1521, JP-A-53-15127, JP-A-53-146622, JP-A-54-91325, JP-A-54-106228, JP-A-54-118246, JP-A-55-59464, JP-A-56-64333, JP-A-56-81836, JP-A-59-204041, JP-A-61-84641, JP-A-62-118345, JP-A-62-247364, JP-A-63-167357, JP-A-63-214744, JP-A-63-301941, JP-A-64-9452, JP-A-64-9454, JP-A-64-68745, JP-A-1-101543, JP-A-1-102454, JP-A-2-792, JP-A-2-4239, JP-A-2-43541, JP-A-4-29237, JP-A-4-30165, JP-A-4-232946, JP-A-4-346338 and so on.

Such a high-boiling point organic solvent is used in an amount of from 0.01 to 3 times by mass, preferably form 0.01 to 1.0 time by mass, as much as the fat-soluble dye.

In the invention, the fat-soluble dye and the high-boiling point organic solvent are emulsified and dispersed in an aqueous medium before using. From the viewpoint of emulsification properties, use can be sometimes made of a low-boiling point organic solvent in the step of emulsification and dispersion. The term "low-boiling point organic solvent" means an organic solvent having a boiling point of from about 30°C to 150°C under atmospheric pressure. Preferable examples thereof include esters (for example, ethyl acetate, butyl acetate, ethyl propionate, β-ethoxyethyl acetate and methyl cellosolve acetate), alcohols (for example, isopropyl alcohol, n-butyl alcohol and secondary butyl alcohol), ketones (for example, methyl isobutyl ketone, methyl ethyl ketone and cyclohexanone) , amides (for example, dimethylformamide and N-methylpyrrolidone), ethers (for example, tetrahydrofuran and dioxane) and so on, though the invention is not restricted thereto.

The emulsification and dispersion can be carried out by dissolving the oily phase in the high-boiling point organic solvent, which is optionally in the form of a solvent mixture with the low-boiling point organic solvent, dispersing the oily phase in an aqueous phase mainly comprising water and thus forming small oil droplets of the oily phase. In this step, it is possible to add an additive such as a surfactant, a moistening agent, a dye stabilizer, an emulsion stabilizer, a preservative or an antifungal agent either one of the aqueous phase and the oily phase or both of the same, if necessary.

Although emulsification is commonly carried out by adding the oily phase to the aqueous phase, it is also favorable to employ a so-called reversedphase emulsification method in which the aqueous phase is added in drops into the oily phase. This emulsification method is also applicable to the case of using a water-soluble dye and a fat-soluble component.

In the emulsification and dispersion step, various surfactants canbeused. Preferable examples of the surfactants include anionic surfactants such as fatty acid salts, alkylsulfuric acid ester salts, alkylbenzenesulfonic acid salts, alkylnaphthalenesulfonic acid salts, dialkylsulfosuccinic acid salts, alkylphosphoric acid ester salts, naphthalenesulfonic acid-formalin condensation product and polyoxyethylene alkylsulfuric acid ester salts, and nonionic surfactants such as polyoxyethylene alkyl ethers, polyoxyethylene alkyl aryl ethers, polyoxyethylene fatty acid esters, sorbitan fatty acid esters, polyoxyethylene sorbitan fatty acid esters, polyxoyethylene alkylamines, glycerol fatty acid esters and oxyethylene oxypropylene block copolymers. It is also preferable to use SURFYNOLS (Air Products & Chemicals) which are acetylene polyoxyethylene oxide-based surfactants. It is also preferable to employ amine oxide type amphoteric surfactants such as N,N-dimethyl-N-alkylamine oxides. Moreover, use can be made of those cited as surfactants in JP-A-59-157,636, pp.37-38 and Research Disclosure No. 308119 (1989).

To stabilize the product immediately after the emulsification, a water-soluble polymer may be added together with the above-described surfactant. As the water-soluble polymer, it is preferable to use polyvinyl alcohol, polyvinylpyrrolidone, polyethylene oxide, polyacrylic acid, polyacrylamide or a copolymer thereof. It is also preferable to employ natural water-soluble polymers such as polysaccharides, casein and gelatin. To stabilize the dye dispersion, use can be also made of polyvinyl, polyurethane, polyester, polyamide, polyurea, polycarbonate, etc. which are obtained by polymerizing acrylic acid esters, methacrylic acid esters, vinyl esters, acrylamides, methacrylamides, olefins, styrenes, vinyl ethers, acrylonitriles and substantially insoluble in aqueous media. It is preferable that such a polymer has -SO₃⁻ or -COO⁻. In the case of using such a polymer substantially insoluble in aqueous media, it is used preferably in an amount of 20% by mass or less, still preferably 10% by mass or less based on the high-boiling point organic solvent.

To produce an aqueous ink composition by dispersing the fat-soluble dye and the high-boiling point organic solvent by emulsification and dispersion, it is particularly important to control the particle size. To elevate the color purity or density of an image formed by ink jetting, it is essentially required to lessen the average particle size. The volume-average particle size of 1 µm is preferable and an average particle size of from 5 to 100 nm is still preferable.

The volume-average particle diameter and the grain size distribution of the dispersed particles as described above can be easily measured by using publicly known methods, for example, the static light scattering method, the dynamic light scattering method, the centrifugal precipitation method, or the methods described in *Jikken Kagaku Koza,* 4th ed., pp.417-418. For example, the ink composition is diluted with distilled water to give a particle concentration of 0.1 to 1% by mass and then the measurement can be easily made by using a commercially available volume-average particle size analyzer (for example, MICROTRAC UPA manufactured by NIKKISO). The dynamic light scattering method with the use of the laser Doppler effect is particularly preferable, since even a small particle size can be measured thereby.

"Volume-average particle diameter", which means the average particle diameter weighted with particle volume, is calculated by dividing the sum of the products of the diameters of individual particles by the volumes of the corresponding particles by the total volume of the particles. Volume-average particle diameter is reported in Kobunshi Ratekkusu no *Kagaku,* (Soichi Murai, Kobunshi Kanko-kai), p. 119.

Moreover, it has been clarified that the existence of coarse particles largely affects the printing performance. That is to say, coarse particles would result in nozzle head clogging or, at least, form stains to cause jetting failures or misdirection, thereby seriously affecting the printing performance. To prevent these phenomena, it is important to regulate the ratio of particles of 5 µm or larger to not more than 10 particles per µl of ink and the ratio of particles of 1 µm or larger to not more than 1000 particles per µl of ink.

To remove these coarse particles, use can be made of the publicly known centrifugation method, ultrafiltration method or the like. Such a separation operation may be carried out immediately after the emulsification and dispersion-Alternatively, it may be carried out after adding various additives such as a moistening agent and a surfactant to the emulsion/dispersion and immediately before packing into an ink cartridge.

As an efficacious operation for lessening the average particle size and removing coarse particles, use can be made of a mechanical emulsifying apparatus.

As an emulsifying apparatus, use can be made of publicly known apparatuses such as a simple stirrer, an impeller stirring system, an in-line stirring system, a milling system such as a colloid mill and an ultrasonication system. Among all, it is particularly preferable to employ a high-pressure homogenizer.

Detailed mechanism of a high-pressure homogenizer is described in US Patent 4533254, JP-A-6-47264, etc. Examples of commercially available apparatuses include a Gaulin Homogenizer (A.P.V. GAULIN INC.), a microfluidizer (MICROFLUIDEX INC.) and an ultimizer (SUGINO MACHINE, LTD.) and so on.

In recent years, there has been reported a high-pressure homogenizer having a mechanism of atomizing in an ultra-high pressure jet stream as described in US Patent 5720551. This apparatus is particularly effective in the emulsification and dispersion in the invention. As an example of the emulsification appara tus wi th the use of the ultra-high pressure jet stream, DeBEE 2000 (BEE INTERNATIONAL LTD.) can be cited.

The pressure employed in the emulsification using the high-pressure emulsification apparatus is 50 MPa or more, preferably 60 MPa or more and still preferably 180 MPa or more.

It is a particularly preferable method to employ 2 or more emulsification apparatuses, for example, emulsifying by a stirring emulsification apparatus and then passing through a high-pressure homogenizer. It is also preferable to employ a method which comprises once emulsifying and dispersing with such an emulsification apparatus, then adding additives such as a moistening agent and a surfactant, and then passing through a high-pressure homogenizer before packing the ink into a cartridge.

In the case of containing a high-boiling point organic solvent together with a low-boiling point organic solvent, it is favorable from the viewpoints of the stability of the emulsion and safety and hygiene to remove the low-boiling point organic solvent. To remove the low-boiling point organic solvent, various publicly known methods can be used depending on the type of the solvents . Namely, use can be made of the evaporation method, the vacuum evaporation method, the ultrafiltration method, etc. It is preferable to remove the low-boiling point organic solvent as quickly as possible immediately after the emulsification.

Methods of producing inkjet recording inks are reported in detail in JP-%-148436, JP-A-5-295312, JP-A-7-97541, JP-A-7-82515 and JP-A-7-118584 and these methods are applicable to the production of the ink according to the invention.

The ink according to the invention can contain functional components for imparting various functions to the ink. Examples of the functional components include various solvents as described above, an anti-drying agent for preventing clogging at the jetting port due to drying, a penetration promoter for improving the penetration of the ink into paper, an UV absorber, an antioxidant, a viscosity controlling agent, a surface tension controlling agent, a dispersant, a dispersion stabilizer, an antifungal agent, ananti-rustingagent, a pH controlling agent, a defoaming agent, a chelating agent and soon. The ink according to the invention may contain such components of appropriately selected types each in an appropriate amount. These functional components include a compound which can exert 2 or more functions alone. In the composition ratios of the functional components as will be given hereinafter, therefore, a compound having plural functions is considered as being independently employed for each function.

As the anti-drying agent to be used in the invention, a water-soluble organic solvent having a vapor pressure lower than water is preferred. Specific examples thereof include polyhydric alcohols typified by ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerol and trimethylolpropane, polyhydric alcohol lower alkyl ethers such as ethylene glycol monomethyl (or ethyl) ether, diethylene glycol monomethyl (or ethyl) ether and triethylene glycol monomethyl (or butyl) ether, heterocyclic compounds such as 2-pyrrolidone, N-methyl-2-pyrrolidone, 1,3-dimethyl-2-imidazolidinone and N-ethylmorpholine, sulfur-containing compounds such as sulfolane, dimethyl sulfoxide and 3-sulfolene, polyfunctional compounds such as diacetone alcohol and diethanolamine and urea derivatives. Among these compounds, polyhydric alcohols such as glycerol and diethylene glycol are still preferable. Either one of these anti-drying agents or a combination of two or more thereof may be used. It is preferable that the content of such an anti-drying agent in the ink ranges from 10 to 50% by mass.

As the penetration promoter to be used in the invention, it is possible to employ alcohols such as ethanol, isopropanol, butanol, di (tri) ethylene glycol monobutyl ether and 1,2-hexanediol, sodium lauryl sulfate, sodium oleate and nonionic surfactants. Such a penetration promoter exerts a sufficient effect at a content of from 10 to 30% by mass in the ink. It is preferably added in such an amount as not causing print bleeding or print through.

As the UV absorber to be used in the invention in order to improve the image storage properties, use can be made of benzotriazole compounds described in JP-A-58-185677, JP-A-61-190537, JF-A-2-782, JP-A-5-197075, JP-A-9-34057, etc., benzophenone compounds described in JP-A-46-2784 , JP-A-5-19483, US Patent 3214463, etc., cinnamic acid compounds described in JP-B-48-30492, JP-B-56-21141, JP-A-10-88106, etc., triazine compounds described in JP-A-4-298503, JP-A-8-53427, JP-A-B-239368, JP-A-10-182621, JP-T-8-501291, etc., compounds described in Research Disclosure No. 24239, and compounds absorbing UV rays and generating fluorescence (i. e. , so-called fluorescent whitening agents) typified by stilbene and benzoxazole compounds.

As the antioxidant to be used in the invention for improving image storage properties, use can be made of various discoloration inhibitors of the organic and metal complex types. Examples of the organic discoloration inhibitors include hydroquinones, alkoxyphenols, dialkoxyphenols, phenols, anilines, amines, indanes, chromans, alkoxyanilines and heterocyclic compounds. Examples of the metal complex discoloration inhibitors include nickel complexes and zinc complexes. More specifically speaking, it is possible to employ compounds described in patents cited in Research Disclosure No. 17643, VII-I to J, Research Disclosure No. 15162, Research Disclosure No. 18716, p. 650, left column, Research Disclosure No. 36544, p. 527, Research Disclosure No. 307105, p. 872 and Research Disclosure No. 15162 and compounds included in the formula of typical compounds and compound examples given in JP-A-62-215272, pp. 127-137.

As the antifungal agent to be used in the invention, citation may be made of sodium dehydroacetate, sodiumbenzoate, sodium pyridinethione-1-oxide, ethyl ester of p-hydroxybenzoic acid, 1,2-benzisothiazolin-3-one and its salt. It is preferable that such an antifungal agent is used in an amount of from 0.02 to 5.00% by mass in the ink.

These compounds are illustrated in detail in *Bokin Bobizai Jiten,* (ed. by The Society of Antibacterial and Antifungal Agents, Japan) and so on.

Examples of the anti-rusting agent include acidic sulfites, sodium thiosulfate, ammon thioglycolate, diisopropylammonium nitrite, pentaerythritol tetranitrate, dicyclohexylammonium nitrite, benzotriazole and so on. Such an anti-rusting agent is preferably used in an amount of form 0.02 to 5.00% by mass in the ink.

In the invention, it is appropriate to use a pH controlling agent so as to control the pH value and impart dispersion stability. It is preferable that the pH value of the ink is controlled to 8 to 11 at 25°C. When the pH is lower than 8, the solubility of the ink is worsened and thus nozzle clogging frequently arises. When the pH exceeds 11, on the other hand, the water-resistance of the ink is liable to be worsened. Examples of the pH controlling agent include basic ones such as organic bases and inorganic alkalis and acidic ones such as organic acids and inorganic acids.

As the basic compound, use can be made of inorganic compounds such as sodium hydroxide, potassium hydroxide, sodium carbonate, potassium carbonate, sodium hydrogen carbonate, potassium hydrogen carbonate, sodium acetate, potassium acetate, sodium phosphate and sodium monohydrogen phosphate, and organic bases such as aqueous ammonia, methylamine, ethylamine, diethylamine, triethylamine, ethanolamine, diethanolamine, triethanolamine, ethylenediamine, piperidine, diazabicyclooctane, diazabicycloundecene, pyridine, quinoline, picoline, lutidine and collidine.

As the acidic compound, use can be made of inorganic compounds such as hydrochloric acid, sulfuric acid, phosphoric acid, boric acid, sodium hydrogen sulfate, potassium hydrogen sulfate, potassium dihydrogen phosphate and sodium dihydrogen phosphate and organic compounds such as acetic acid, tartaric acid, benzoic acid, trifluoroacetic acid, methanesulfonic acid, ethanesulfonic acid, benzenesulfonic acid, p-toluenesulfonic acid, saccharicacid, phthalicacid, piaolicacidandquinolinic acid.

The conductivity of the ink according to the invention ranges from 0.01 to 10 S/m, preferably from 0.05 to 5 S/m.

The conductivity can be measured by the electrode method with the use of a commercially available saturated potassium chloride.

The conductivity can be controlled mainly depending on the ion concentration in an aqueous solution. In the case where the salt concentration is excessively high, desalting can be carried out by using an ultrafiltration membrane, etc. In the case of controlling the conductivity by adding a salt or the like, the controlling can be made by adding various organic salts or inorganic salts.

As an inorganic sal t, use canbemade of inorganic compounds such as potassium halides, sodium halides, sodium sulfate, potassium sulfate, sodium hydrogen sulfate, potassium hydrogen sulfate, sodium nitrate, potassium nitrate, sodium hydrogen carbonate, potassium hydrogen carbonate, sodium phosphate, sodium monohydrogen phosphate, boric acid, potassium dihydrogen phosphate and sodium dihydrogen phosphate, or organic compounds such as sodium acetate, potassium acetate, potassium tartarate, sodium tartarate, sodium benzoate, potassium benzoate, sodium p-toluenesulfonate, potassium saccharate, potassium phthalate and sodium picolinate.

It is also possible to control the conductivity by appropriately selecting the components of the aqueous medium as will be described hereinafter.

The ink according to the invention has a viscosity at 25°C of from 1 to 20 mPa·S, preferably from 2 to 15 mPa·S and still preferably from 2 to 10 mPa·S. When the ink viscosity exceeds 30 mPa·S, the fixation speed of the image is lowered and the jetting performance is worsened. When the ink viscosity is less than 1 mPa·S, on the other hand, the image suffers from bleeding and thus the text qualities are worsened.

The viscosity can be arbitrarily regulated by controlling the addition level of the ink solvent. Examples of the ink solvent include glycerol, diethylene glycol, triethanolamine, 2-pyrrolidone, diethylene glycol monobutyl ether, triethylene glycol monobutyl ether and so on.

It is also possible to employ a viscosity controlling agent. Examples of the viscosity controlling agent include water-soluble polymers such as cellulose and polyvinyl alcohol and nonionic surfactants. These substances are described in greater detail in *Nendo Chosei Gijutsu,* (Technical Information Institute, 1999) chap. 9; *and Inku Jetto Purinta-yo Kemikaruzu* (enlarged in 98) *Zairyo* no *Kaibatsu Doko Tenbo Chosa,* (CMC, 1997), pp. 162-174.

Amethod of measuring the viscosity of a liquid is described in detail in JIS Z8803. It can be conveniently measured with a commercially available viscometer, for example, a rotary viscometer such as B-type viscometer and E-type viscometer manufactured by Tokyo Keiki. In the invention, the viscosity is measured at 25°C with the use of a vibratory viscometer Model VM-100A-L manufactured by Yamaichi Electronics. Although viscosity is expressed in pascal second (Pa·s), millipascal second (mPa·s) is usually employed.

Concerning surface tension, it is preferable that the ink to be used in the invention has a dynamic surface tension and a static surface tension at 25°C both ranging from 20 to 50 mN/m, still preferably from 20 to 40 mN/m. When the surface tension exceeds 50 mN/m, printing qualities (jetting stability, bleeding at colormixing, tailing, etc.) are seriously worsened. When the surface tension of the ink is controlled to 20 mN/m or lower, there sometimes arise printing failures due to the adhesion of the ink to the hard surface at jetting, etc.

In order to control the surface tension, it is possible to add various surfactants such as the above-described cationic, anionic, nonionic and betaine surfactants. It is also possible to employ 2 or more surfactants together.

For measuring static surface tension, there have been known the capillary rising method, the dropping method, the suspending ring method, etc. In the invention, use is made of the vertical plate method in measuring static surface tension.

Namely, a thin plate made of glass or platinum is suspended vertically while soaking a part thereof in a liquid. Thus the surface tension of the liquid acts downward along the length of the contact of the liquid with the plate. This force is balanced with an upward force, thereby measuring the surface tension.

For measuring dynamic surface tension, on the other hand, there have been known the vibration jet method, the meniscus drop method and the maximum bubble pressure method, as reported in *Shin Jikken* Kagaku *Koza,* vol .18, *Kaimen to Koroido* (Maruzen, p.69-90 (1977)). Moreover, there has been known a liquid membrane breakage method as reported in JP-A-3-2064. In the invention, a differential bubble pressure method is employed in measuring dynamic surface tension. Next, the measurement principle and method will be illustrated.

When bubbles are formed in a solution having been homogenized by stirring, new gas-liquid interfaces are formed and thus surfactant molecules in the solution aggregate toward the water surface at a definite speed. In the case of altering the bubble rate (i.e., the bubble-formation speed), a larger number of surfactant molecules aggregate toward the bubble surface at a higher formation speed and thus the maximum bubble pressure immediately before the breakage of the bubbles are lowered. Thus, the maximum bubble pressure (surface tension) to the bubble rate can be detected. A preferable method of measuring dynamic surface tension comprising forming bubbles in a solution by using 2 probes (a small one and a and large one), measuring the pressure difference between the maximum bubble pressures of these 2 probes and thus calculating the dynamic surface tension.

From the viewpoints of the ink jetting stability, image qualities, image fastness for various factors and prevention of printed image from bleeding and sticking, it is preferable that the content of nonvolatile components in the ink according to the invention ranges from 10 to 70% by mass based on the whole ink. Taking the ink jetting stability and prevention of the printed image from bleeding, it is still preferable that the content thereof ranges from 20 to 60% by mass.

The term "nonvolatile components" as used herein means liquid components having boiling point of 150°C or higher at 1 atm as well as solid components and high-molecular weight components. The nonvolatile components in an inkjetink involve a dye, a high-boiling point solvent, and additives added if necessary such as a polymer latex, a surfactant, a dye stabilizer, an antifungal agent and a buffer. Many of these nonvolatile components excluding the dye stabilizer would lower the dispersion stability of the ink. Moreover, they exist on an inkjet image-receiving paper after printing and, therefore, inhibit the stabilization of the dye due to association on the image-receiving paper and worsen the fastness of the image part to various factors and image bleeding under highly humid conditions.

The ink according to the invention can further contain a high-molecular weight compound. The term "high-molecular weight compound" as used herein means any high-molecular weight compounds having number-average molecular weight of 5000 or more in the ink. Examples of such high-molecular weight compounds include water-soluble high-molecular weight compounds substantially dissolved in the aqueous medium, water-dispersible high-molecular weight compounds such as a polymer latex and a polymer emulsion, and alcohol-soluble high-molecular weight compounds which are soluble in a polyhydric alcohol employed as an auxiliary solvent. Any compounds which are substantially uniformly dissolved or dispersed in the ink liquid fall within the category of the high-molecular weight compounds in the invention.

Specific examples of the water-soluble high-molecular weight compounds include water-soluble polymers such as polyvinyl alcohol, silanol-denatured polyvinyl alcohol, carboxymethylcellulose, hydroxyethylcellulose, polyvinylpyrrolidone, polyalkylene oxides such as polyethylene oxide and polypropylene oxide and polyalkylene oxide derivatives, natural water-soluble polymers such as polysaccharides, starch, cationized starch, casein and gelatin, water-base acrylic resins such as polyacrylic acid, polyacrylamide and copolymers thereof, water-base alkyd resins and water-soluble high-molecular weight compounds having -SO₃⁻ or -COO⁻ group in molecule and being substantially soluble in aqueous medium.

Examples of the polymer latex include styrene-butadiene latex, styrene-acryl latex, polyurethane latex and so on. Examples of the polymer emulsion include acryl emulsion and so on.

Either one of these water-soluble high-molecular weight compounds or a combination of 2 or more thereof may be used.

As discussed above, the water-soluble high-molecular weight compound is employed as a viscosity controlling agent to control the ink viscosity to a level giving favorable jetting properties. When the high-molecular weight compound is added in a large amount, the ink viscosity is elevated and the jetting stability of the liquid ink is lowered. In this case, a precipitate is formed with the passage of time, thereby frequently causing nozzle clogging.

The high-molecular weight compound employed as a viscosity controlling agent is added in an amount of from 0 to 5% by mass, preferably from 0 to 3% bymass andstill preferably from 0 to 1% by mass based on the whole ink, though it varies depending on the type of the compound to be added (i. e. , a compound with a higher molecular weight is added in a less amount).

In the invention, use can be also made of the above-described cationic, anionic, nonionic and betaine surfactants as a dispersant and a dispersion stabilizer, fluorine-containing compounds and silicone compounds as a defoaming agent, and chelating agents typified by EDTA and so on, if needed.

Next, reflection media which are printing media appropriately usable in the invention will be illustrated. Examples of the reflection media include recording paper and recording films. As the substrate of the recording papers or the recording films, use'can be made of a chemical pulp such as LBKP or NBKP, a mechanical pulp such as GP, PGW, RMP, TMP, CTMP, CMP or CGP, or a waste paper pulp such as DIP which may contain, if necessary, various publicly known additives such as a pigment, a binder, a sizing agent, a fixing agent, a cationic agent or a paper reinforcing agent and which are processed by using various machines such as a long-wire paper machine or a round-wire paper machine. In addition to these substrates, use can be also made of synthetic papers or plastic film sheets. The thickness of the substrate preferably ranges from 10 to 250 µm, while the basis weight thereof preferably ranges from 10 to 250 g/m².

An image receiving layer and a back coat layer may be directly formed on the substrate as such to give an image-receiving material for the ink and ink set according to the invention. Alternatively, a size press or an anchor coat layer may be formed using starch, polyvinyl alcohol, etc. followed by the formation of image receiving layer and a back coat layer to give an image-receiving material. The substrate maybe smoothened by using a calendering machine such as a machine calender, a TG calender or a soft calender.

As the substrate, it is preferable to employ a paper sheet or a plastic film having been laminated on both faces with a polyolefin (forexample, polyethylene, polystyrene, polybutene or a copolymer thereof) or polyethylene terephthalate. It is preferable to add a white pigment (for example, titanium oxide or zinc oxide) or a coloring dye (for example, cobalt blue, ultramarine blue or neodium oxide) to the polyolefin.

The image receiving layer to be formed on the substrate contains a porous material and an aqueous binder. It is also preferable that the image receiving layer contains a pigment which is preferably a white pigment. Examples of the white pigment include inorganic white pigments such as calcium carbonate, kaolin, talc, clay, diatomaceous earth, synthetic amorphous silica, aluminum silicate, magnesium silicate, calcium silicate, aluminum hydroxide, alumina, lithopone, zeolite, barium sulfate, calcium sulfate, titanium dioxide, zinc sulfide and zinc carbonate, and organic pigments such as styrene-based pigments, acrylic pigments, urea resins and melamine resins. Inorganic white pigments having porous natures are favorable and synthetic amorphous silica having a large pore size is particularly suitable therefor. As the synthetic amorphous silica, either silicic anhydride obtained by the dry production process or water-containing silicic acid obtained by the wet production process may be used.

As the recording paper containing the above-described pigment in the image receiving layer, use can be made of those disclosed in JP-A-10-81064, JP-A-10-119423, JP-A-19-157277, JP-A-10-217601, JP-A-11-348409, JP-A-2001-138621, JP-A-2000-43401, JP-A-2000-211235, JP-A-2000-309157, JP-A-2001-96897, JP-A-2001-138627, JP-A-11-91242, JP-A-8-2087, JP-A-8-2090, JP-A-8-2091, JP-A-8-2093, JP-A-8-174992, JP-A-11-192777, JP-A-2001-301314 and so on.

Examples of the aqueous binder to be contained in the image receiving layer include water-soluble polymers such as polyvinyl alcohol, silanol-denaturedpolyvinyl alcohol, starch, cationized starch, casein, gelatin, carboxymethylcellulose, hydroxyethylcellulose, polyvinylpyrrolidone, polyalkylene oxides and polyalkylene oxide derivatives, and water-dispersible polymers such as styrene-butadiene latex and acrylic emulsion. Either one of these aqueous binders or a combination of 2 or more thereof may be used. Among all, polyvinyl alcohol and silanol-denatured polyvinyl alcohol are particularly preferable in the invention from the viewpoints of the stickiness to the pigment and peeling-resistance of the ink absorbing layer.

In addition to the pigment and the aqueous binder, the image receiving layer can further contain other additives such as a mordant, a water-fastness agent, a light-resistance improving agent, a gas-resistance improving agent, a surfactant, a film-hardening agent, etc.

It is preferable that the mordant to be added to the image receiving layer has been fixed. Therefor, it is favorable to employ a polymer mordant.

Polymer mordants are described in JP-A-48-28325, JP-A-54-74430, JP-A-54-124726, JP-A-55-22766, JP-A-55-142339, JT-A-60-23850, JP-A-60-23851, JP-A-60-23852, JP-A-60-23853, JP-A-60-57836, JP-A-60-60643, JP-A-60-118834, JP-A-60-122940, JP-A-60-122941, JP-A-60-122942, JP-A-60-235134, JP-A-1-161236, US Patent 2484430, US Patent 2548564, US Patent 3148061, US Patent 3309690, US Patent 4115124, US Patent 4124386, US Patent4193800, US Patent 4273853, US Patent 4282305 and US Patent 4450224. Among all, image-receiving materials containing the polymer mordants described in JP-A-1-161236, pp. 212-215 are particularly preferable. Using the polymer mordants described in this document, images with excellent qualities can be obtained and the light-resistance of the images can be improved.

A water-fastness agent is effective in making an image waterproof. As the water-fastness agent, cation resins are particularly preferable. Examples of the cation resins include polyamide polyamine epichlrohydrin, polyethyleneimine, polyaminesulfone, dimethyldiallyammonium chloride polymer, cation polyacrylamide, colloidal silica and so on. Among these cation resins, polyamide polyamine epichlrohydrin is appropriate. The content of such a cation resin preferably ranges form 1 to 15% by mass, still preferably from 3 to 10% by mass, based on the total solid content of the ink absorbing layer.

Examples of the light-resistance improving agent and the gas-resistance improving agent include phenol compounds, hindered phenol compounds, thioether compounds, thiourea compounds, thiocyanic acid compounds, amine compounds, hindered amine compounds, TEMPO compounds, hydrazine compounds, hydrazide compounds, amidine compounds, vinyl group-containing compounds, ester compounds, amide compounds, ether compounds, alcohol compounds, sulfinic acid compounds, sugars, water-soluble reducing compounds, organic acids, inorganic acids, hydroxy group-containing compounds, benzotriazole compounds, benzophenone compounds, triazine compounds, heterocyclic compounds, water-soluble metal salts, organic metal compounds, metal complexes and so on.

Specific examples of these compounds are those described in JP-A-10-182621, JP-A-2001-260519, JP-A-2000-260519, JP-B-4-34953, JP-B-4-34513, JP-B-4-34512, JP-A-11-170686, JP-A-60-67190, JP-A-7-276808, JP-A-2000-94829, JP-T-8-512258, JP-A-11-321090, etc.

The surfactant serves as a coating aid, a peeling properties improving agent, a slipperiness improving agent or an antistatic agent. Surfactants are described in JP-A-62-173463 and JP-A-62-183457.

The surfactantmaybe replacedbyanorganofluoro compound. It is preferable that the organofluoro compound has a hydrophobic nature. Examples of the organofluoro compound include fluorine-based surfactants, oily fluorine-based compounds (for example, fluorine oil) and solid fluorine-based compounds (for example, ethylene tetrafluoride resin). Organofluoro compounds are described in JP-B-57-9053 (columns 8 to 17), JP-A-61-20994 and JP-A-62-135826.

As the film-hardening agent, use can be made of materials described in JP-A-1-161236, p.222, JP-A-9-263036, JP-A-10-119423, JP-A-2001-310547, etc.

As other additives to be added to the image receiving layer, a pigment dispersant, a thickener, a defoaming agent, a dye, a fluorescent whitening agent, a preservative, a pH controlling agent, a matting agent, etc. can be cited. The ink absorbing layer may consist of either a single layer or two layers.

Further, the recording paper or the recording film may be provided with a back coat layer which may contain a white pigment, an aqueous binder and other components.

Examples of the white pigment to be contained in the back coat layer include inorganic white pigments such as light calcium carbonate, heavy calcium carbonate, kaolin, talc, calcium sulfate, barium sulfate, titanium dioxide, zinc oxide, zinc sulfide, zinc carbonate, satin white, aluminum silicate, diatomaceous earth, calcium silicate, magnesium silicate, synthetic amorphous silica, colloidal silica, colloidal alumina, pseudoboehmite, aluminum hydroxide, alumina, lithopone, zeolite, hydrated halloysite, magnesium carbonate and magnesium hydroxide, and organic pigments such as styrene-based plastic pigments, acrylic plastic pigments, polyethylene, microcapsules, urea resins and melamine resins.

Examples of the aqueous binder to be contained in the back coat layer include water-soluble polymers such as styrene/maleic acid salt copolymers, styrene/acrylic acid salt copolymers, polyvinyl alcohol, silanol-denatured polyvinyl alcohol, starch, cationized starch, casein, gelatin, carboxymethylcellulose, hydroxyethylcellulose and polyvinylpyrrolidone and water-dispersible polymers such as styrene-butadiene latex and acrylic emulsion. As other additives to be added to the back coat layer, a defoaming agent, a foam-controlling agent, a dye, a fluorescent whitening agent, a preservative, a water-fastness agent, etc. can be cited.

A dispersion of fine polymer particles may be added to the layers (including the back coat layer) constituting the inkjet recording paper and recording film. The dispersion of fine polymer particles is employed to improve film properties, for example, dimensional stabilization, prevention of curling, prevention of sticking, prevention of film cracking, etc. Such dispersions of fine polymer particles are described in JP-A-62-245258, JP-A-62-1316648 and JP-A-62-110066. By adding a dispersion of fine polymer particles having a low glass transition temperature (40°C or lower) to a layer containing a mordant, the layer can be prevented from cracking or curling. By adding a dispersion of fine polymer particles having a high glass transition temperature to the back layer, curing can be also prevented.

The inkjet recording ink according to the invention can be also used for purposes other than inkjet recording. For example, it is usable in display image materials, image-forming materials for interior decorating, image-forming materials for exterior decorating, etc.

The image-forming materials for exterior decorating means posters, wallpapers, decorative gadgets (figurines, dolls, etc.), advertising circulars, wrapping papers, wrapping materials, paper bags, plastic bags, packaging materials, advertising displays, images drawn on the side wall of transport facilities (automobiles, buses, trains, etc.), clothes with logo, and so on. In the case of using the dye according to the invention as a material for forming display images, these images include not only images in the narrow sense but also any patterns (abstractive designs, characters, geometric patterns, etc.) being drawn with the dye and perceivable with the human eye.

The image-forming materials for interior decorating mean wallpapers, decorative gadgets (figurines, dolls, etc.), lighting parts, furniture parts, floor and ceiling materials and so on. In the case of using the dye according to the invention as amaterial for forming display images, these images include not only images in the narrow sense but also any patterns (abstractive designs, characters, geometric patterns, etc.) being drawn with the dye and perceivable with the human eye.

The image-forming materials for exterior decorating mean wall materials, roofing materials, advertising signs, gardening materials, exterior decorative gadgets (figurines, dolls, etc.), exterior lighting parts, and so on. In the case of using the dye according to the invention as a material for forming display images, these images include not only images in the narrow sense but also any patterns (abstractive designs, characters, geometric patterns, etc.) being drawn with the dye and perceivable with the human eye.

As the media on which patterns are formed in the above-described uses, various materials such as paper, fibers, fabrics (including nonwoven fabrics), plastics, metals and ceramics can be cited. Concerning the dyeing methods, use can be made of mordanting or printing. It is also possible to fix a colorant in the form of a reactive dye having a reactive group introduced thereinto. Among these methods, the mordanting is preferred.

In the course of producing an ink, ultrasonic vibration can be employed in the step of, for example, dissolving additives such as a dye.

The ultrasonic vibration is employed to prevent bubbling due to the pressure loaded on the ink in the recording head by preliminarily supplying ultrasonic energy comparable to the energy supplied in the recording head or even exceeding the same in the course of the ink production and thus removing bubbles.

The ultrasonic vibration is appliedby using an ultrasonic wave having a frequency of 20 kHz or more, preferably 40 kHz or more and still preferably 50 kHz or more. The energy supplied to the liquid by the ultrasonic vibration is usually 2x10⁷ J/m³ or more, preferably 5x10⁷ J/m³ or more and still preferably 1x10⁸ J/m³ or more. The ultrasonic vibration is applied usually for about 10 minutes to 1 hour.

The ultrasonic vibration can exert its effect at any step after adding the dye to the medium. It is also effective to apply the ultrasonic vibration to an ink product having been stored for a while. However, it is preferable to apply the ultrasonicvibration in the stepof dissolvingand/ordispersing the dye in the medium, since a larger effect of removing bubbles can be thus established and the dissolution and/or dispersion of the colorant in the medium can be promoted by the ultrasonic vibration.

Namely, the above-described step of at least applying the ultrasonic vibration may be carried out either during the step of dissolving and/or dispersing the dye in the medium or thereafter. In other words, the above-described step of at least applying the ultrasonic vibration may be carried out once or more at an arbitrary point between the preparation of the ink and the completion of the production.

In a practical embodiment, it is preferable that the step of dissolving and/or dispersing the dye in the medium comprises the step of dissolving the dye in a portion of the whole medium and the step of mixing the remaining medium and the ultrasonic vibration is applied preferably at one of these steps. It is still preferable to apply the ultrasonic vibration at least in the step of mixing the remaining medium.

The step of mixing the remaining medium as described above may consist of either a single step or plural steps.

In the process of producing the ink according to the invention, it is preferably to employ thermal degassing or vacuum degassing since the effect of removing bubbles from the ink can be enhanced thereby. The thermal degassing or the vacuum degassing is preferably carried out simultaneously with the step of mixing the remaining medium or thereafter.

To generate the ultrasonic vibration in the step of applying the ultrasonic vibration, use can be made of publicly known apparatus such as an ultrasonic disperser.

To produce the ink according to the invention, it is important to remove dusts (solid matters) by filtration which is performed after the preparation of the liquid ink. A filtration filter is employed in this operation. As the filtration filter, use is made of a filter having an effective pore size of 1 µm or less, preferably from 0.3 µm to 0.05 µm and particularly preferably from 0.3 µm to 0.25 µm. The filter may be made of various materials. In the case of an ink having a water-soluble dye, it is preferable to employ a filter produced for aqueous solvents. Among all, it is preferable to use a filter made of a polymer material giving little dusts. Concerning the filtration method, the ink may be passed through the filter by pumping. Alternatively, use can be made of pressure filtration or vacuum filtration.

After the completion of the filtration, it is frequently observed that the solution contains air thus incorporated. Since bubbles due to the air frequently result in disturbance of image in inkjet recording, it is preferable to separately employ the defoaming step as described above. The defoaming may be carried out by allowing the filtered solution to stand. Alternatively, use can be made of various methods such as ultrasonic defoaming with the use of a marketed apparatus and vacuum defoaming. In the case of the ultrasonic defoaming, it is preferable to carry out the defoaming operation fro 30 second to 2 hours, still preferably for about 5 minutes to 1 hour.

To prevent contamination with dusts, it is preferable to carry out such a operation by using a dust-free space such as a clean room or a clean bench. In the invention, it is preferable to perform the operation in a space of a degree of cleanness of class 1000 orbelow. The term "degree of cleanness" as used herein means a value measured with a dust counter.

The droplet size of the ink according to the invention on a recording material is from 0.1 pl to 100 pl. The droplet size preferably ranges from 0.5 pl to 50 pl and particularly preferably from 2 pl to 50 pl.

In the invention, the inkjet recording system is not particularly restricted, so long as an image is recorded with the use of the ink or ink set according to the invention. Namely, the invention is applicable to various publicly known systems, for example, the charge-control system wherein an ink is jetted using static attraction, the drop on demand system (a pressure pulse system) with the use of vibration pressure of a piezo element, a sonic inkjet system wherein an electric signal is converted into a sonic beam and irradiated to an ink so that the ink is jetted under the radiation pressure, and the thermal inkjet (bubble jet) system wherein ink is heated to formbubbles and the pressure thus generated is employed.

Inkjet recording systems include a system wherein a large number of inks with low density, which are called photoinks, are jetted each in a small volume, and a system wherein plural inks having substantially the same color hue but different densities are employed to improve image qualities. The droplet volume of an ink is controlled mainly by the print head.

In the thermal inkjet system, for example, the droplet volume can be controlled depending on the print head structure. That is to say, droplets of a desired size can be achieved by altering the ink chamber, the heating unit and the nozzle size. Even in the thermal inkjet system, it is also possible to present droplets of plural sizes by using plural print heads having different heating units or nozzle sizes.

In the drop on demand system with the use of apiezo element, the droplet size can be structurally varied by altering the print head structure as in the thermal inkjet system. It is also possible to present droplets of plural sizes with the use print heads of the same structure by controlling the wave pattern of driving signals by which the piezo element is driven, as will be described hereinafter.

It is preferable that the jetting frequency of the ink, which is jetted toward a recording material, is 1 KHz or more.

To record an image of high qualities such as a photograph, the droplet density should be controlled to 600 dpi or more (number of dots per inch) to thereby reproduce an image having a high sharpness with small ink droplets.

In a printing type of jetting an ink from plural head nozzles wherein a recording paper and print heads moves at right angles to each other, on the other hand, about several tens to 200 heads can be driven at the same time. In a so-called line head type wherein heads are fixed, the number of heads driven at the same time is restricted to several hundreds. This is because the driving power is restricted and heat generated at the heads affects the image so that a large number of heads cannot be driven at the same time.

In such cases, recording speed can be elevated by increasing the driving frequency.

In the thermal inkjet system, the jetting frequency can be controlledbycontrolling the frequency of the driving signals by which the heads are heated.

In the piezo system, the jetting frequency can be controlled by controlling the frequency of the signals driving the piezo.

Next, driving of a piezo head will be illustrated. The droplet size, jetting speed and jetting frequency of image signals to be printed are determined by the printer controlling unit and thus signals driving the printer heads are provided. The driving signals are fed into the printer heads. The droplet size, the jetting speed and the jetting frequency are controlled by signals driving the piezo. In this case, the droplet size and the jetting speed are determined by the pattern and amplitude of the driving wave while the frequency is determined by the repeating cycle of the signals.

When the jetting frequency is set at 10 kHz, a head is driven once in 100 µsec and recording of a line is completed within 400 µsec- By setting the paper feeding speed at 1/600 inch (i.e., shifting about 42 µm) per 400 µsec, printing can be carried out at a speed of 1 sheet per 1.2 sec.

Concerning the constitution of a printing apparatus and the constitution of a printer to be used in the invention, it is appropriate to employ, for example, a mode disclosed by JP-A-11-170527. Concerning a ink cartridge, it is appropriate to employ, for example, one disclosed by JP-A-5-229133. Concerning suction, the constitution of a cap covering aprint-ing head and so on, it is appropriate to employ, for example, those disclosed by JP-A-7-276671. It is also appropriate that a filter for eliminating bubbles is provided around a head as disclosed by JP-A-9-277552.

Moreover, it is appropriate that the nozzle surface has been subjected to a water-repellent treatment as described in JP-A-2002-292878. With regard to the purpose of the apparatus, it may be a printer to be connected to a computer or an apparatus to be employed exclusively for printing photographs.

In the inkjet recording method to be applied to the invention, the average jetting speed in jetting an ink onto a recording material is 2 m/sec or more, preferably 5 m/sec or more.

The jetting speed is controlled by controlling the wave pattern and amplitude.

By using plural driving wave patterns, droplets of different sizes can be jetted by using a single head.

### EXAMPLES

Now, the invention will be illustrated by reference to the following Examples, though the invention is not construed as being restricted thereto.

### (Example 1)

Ultrapure water (electrical resistance: 18 MΩor more) was added to the following components to give a total volume of 1 L. Then the mixture was heated to 30 to 40°C under stirring for 1 hour. Next, it was filtered through a microfilter of 0.25 µm in average pore size under reduced pressure to thereby prepare ink sets 101 of respective inks.

**[Table 20]**

| [Formulation of ink set 101] | | | | | | | |
|---|---|---|---|---|---|---|---|
| Component | C | LC | M | LM | Y | DY | Bk |
| Dye | C-1 45g | C-1 15g | M-1 30g | M-1 10g | Y-1 30g | Y-1 30g C-1 3g M-1 5g | Bk-1 55g BK-2 15g |
| BTZ | 3g | 3g | 3g | 3g | 3g | 3g | 3g |
| UR | 12g | 5g | 10g | 5g | 10g | 15g | 17g |
| DGB | - | - | - | - | 130g | 125g | 120g |
| TGB | 150g | 140g | 120g | 120g | - | - | - |
| DEG | 100g | 100g | 90g | 80g | - | - | - |
| TEG | - | - | - | - | 110g | 125g | 100g |
| GR | 120g | 130g | 130g | 120g | 125g | 135g | 125g |
| PRD | 35g | 35g | - | - | - | - | 35g |
| TEA | 10g | 10g | 10g | 10g | 10g | 10g | 10g |
| PRX | 1g | 1g | 1g | 1g | 1g | 1g | 1g |
| SW | 10g | 10g | 10g | 10g | 10g | 10g | 10g |
| Names of the components in the above table are as follows. | | | | | | | |
| BTZ: benzotriazole | | | | | | | |
| OR: urea | | | | | | | |
| DGB: diethylene glycol monobutyl ether | | | | | | | |
| TGB: triethylene glycol monobutyl ether | | | | | | | |
| DEG: diethylene glycol | | | | | | | |
| TEG: triethylene glycol | | | | | | | |
| GR: glycerol | | | | | | | |
| PRD: 2-pyrrolidone | | | | | | | |
| TEA: triethanolamine | | | | | | | |
| PRX: Proxel XL2(S) (manufactured by Avecia) | | | | | | | |
| SW: Sufynol STG | | | | | | | |

Ink sets 102 to 110, which had the same formulations as those of ink sets 101 but altering dyes as follows, were also produced.

**[Table 21]**

| | C | LC | M | LM | Y | DY | Bk |
|---|---|---|---|---|---|---|---|
| 101 (Comp.Ex. 1) | C-1 | C-1 | M-1. | M-1 | Y-1 | Y-1 C-1 M-1. | Bk-1 Bk-2 |
| 102 (Comp.Ex. 2) | C-1 | C-1 | M-1 | M-2 | Y-1 | Y-1 C-1 M-2 | Bk-1 Bk-2 |
| 103 (Comp.Ex. 3) | C-1 | C-1 | M-1 | M-1 | Y-2 | Y-1 C-1 M-1 | Bk-1 Bk-2 |
| 104 (Comp.Ex. 4) | C-2 | C-2 | M-1 | M-1 | Y-1 | Y-1 C-1 M-1 | Bk-3 Bk-2 |
| 105 ( Invention) | C-2 | C-2 | M-3 | M-3 | Y-1 | Y-3 C-2 M-3 | Bk-4 Bk-5 |
| 106 (invention) | C-2 | C-2 | M-3 | M-3 | Y-1 | Y-3 C-2 M-3 | Bk-4 Bk-5 |
| 107 (Invention) | C-2 | C-2 | M-3 | M-3 | Y-3 | Y-4 C-2 M-3 | Bk-4 Bk-6 |
| 108 (Invention) | C-3 | C-3 | M-3 | M-3 | Y-3 | Y-3 C-2 M-3 | Bk-4 Bk-5 |
| 109 (Invention) | C-3 | C-3 | M-3 | M-3 | Y-4 | Y-3 C-2 M-3 | Bk-4 Bk-6 |
| 110 (Invention) | C-3 | C-3 | M-3 | M-3 | Y-3 | Y-4 C-2 M-3 | Bk-4 Bk-5 |

Dyes employed in the above ink sets are as follows.

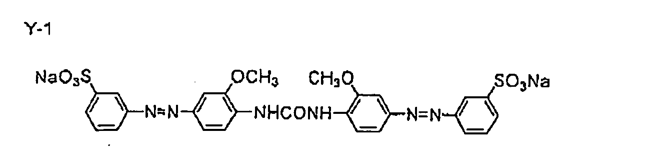

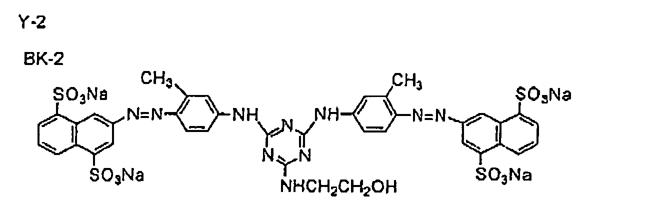

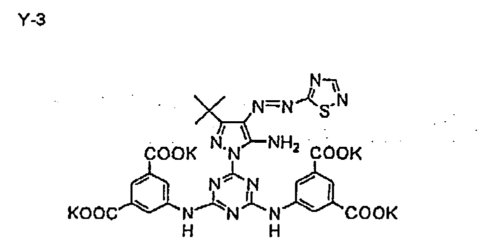

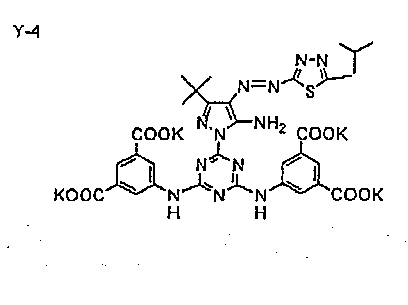

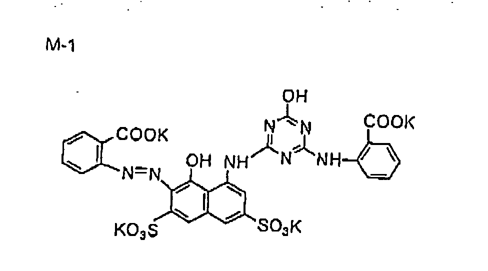

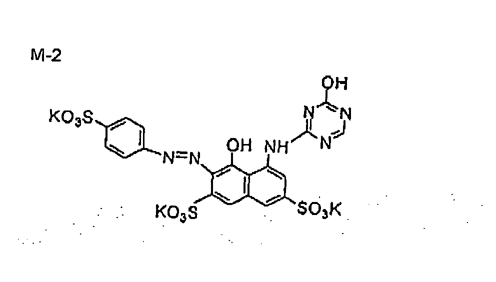

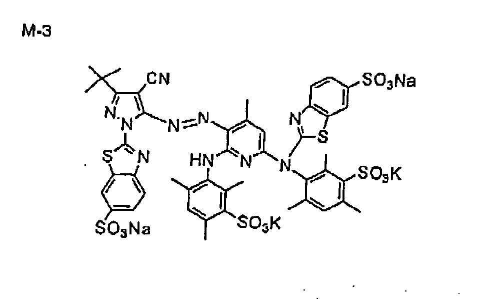

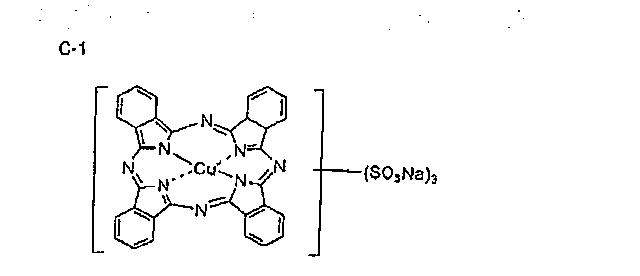

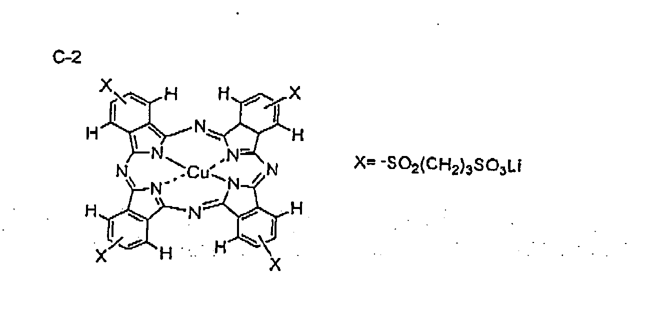

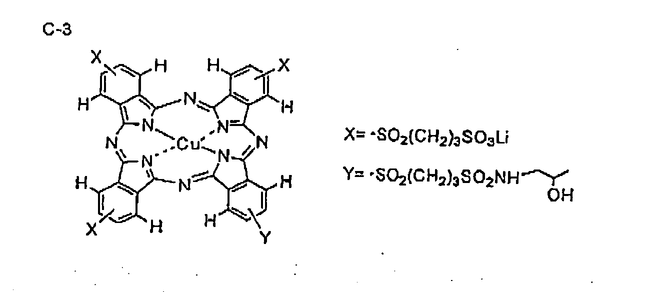

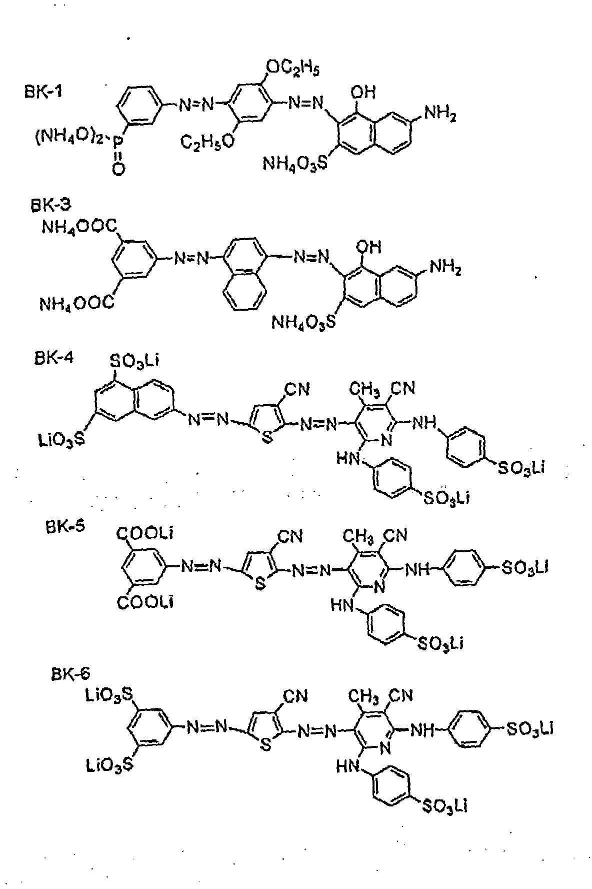

Triazine rings in the structural formulae of Y-2 (Bk-2), M-1 and M-2, among the above-describeddyes, are not heterocycles in the dye fundamental skeletons participating in the color development.

These inks were packed in cartridges of an ink jet printer Model PM-950C (EPSON) and an image with gray color graduation and a figure portrait image were printed.

As an image-receiving sheet, use was made of a glossy inkjet photopaper *Gasai* manufactured by Fuji Photo Film Co., Ltd. Then the image qualities, inkjetting properties and image fastness were evaluated.

### (Evaluation experiment)

1) Jetting stability was evaluated by setting a cartridge in a printer, confirming the jetting of the ink from all nozzles, then stopping the operation of the printer, allowing the printer to stand at 15°C and 30% RH and then at 35°C and 90% RH each for 240 hours, and then printing the images on 100 paper sheets (A4) , followed by evaluation in accordance with the following criteria.
   A: no printing disruption was observed throughout the printing.
   B: printing disruption was observed.
   C: printing disruption was continuously observed throughout the printing.
2) Image storage properties were evaluated as follows using printed samples.
   (1) Fastness to light was evaluated by irradiating a printed image with a xenon lamp (85000 1x) using a weather meter (manufactured by Atlas) for 7 days followed by evaluation. In the evaluation, A means a case wherein worsening in the image, compared with the initial stage, fell within an acceptable scope; B means a case wherein an image got off color balance though color density was little lowered; and C manes a case wherein color density was obviously lowered and the image level was seriously worsened.
   (2) Fastness to heat was evaluated by storing a sample at 80°C and 70% RH for 10 days followed by the same evaluation as in the above (1).
   (3) Fastness to ozone (O₉) was evaluated by storing a sample in a box with an ozone concentration of 0.5 ppm for 7 days followed by the same evaluation as in the above (1).

The following table shows the obtained results.

**[Table 22]**

| No. | Jetting properties | Light fastness | Heat fastness | O₃ fastness |
|---|---|---|---|---|
| PM-950C (Bk) (Comp. Ex.) | A | B | B | C |
| 101 (Comp. Ex.) | A | C | B | C |
| 102 (Comp. Ex.) | A | C | B | C |
| 103 (Comp. Ex.) | A | C | B | C |
| 104 (Comp. Ex.) | A | C | C | C |
| 105 (Invention) | A | A | A | A |
| 106 (Invention) | A | A | A | A |
| 107 (Invention) | A | A | A | A |
| 108 (Invention) | A | A | A | A |
| 109 (Invention) | A | A | A | A |
| 110 (Invention) | A | A | A | A |

The results given in the above table indicate that the systems with the use of the inks according to the invention are superior to the comparative examples in all of the image storage factors and also excellent in the jetting properties.

### (Example 2)

Ultrapure water (electrical resistance: 18 MΩ or more) was added to the following components to give a total volume of 1 L. Then the mixture was heated to 30 to 40°C under stirring for 1 hour. Next, it was filtered through a microfilter of 0.25 µm in average pore size under reduced pressure to thereby prepare ink sets 201 of respective inks.

**[Table 23]**

| [Formulation of ink set 201] | | | | | | | |
|---|---|---|---|---|---|---|---|
| Component | C | LC | M | LM | Y | DY | Bk |
| Dye | C-1 45g | C-1 15g | M-1 30g | M-1 10g | Y-1 30g | Y-1 30g C-1 3g M-1 5g | Bk-1 55g BK-2 15g |
| BTZ | 3g | 3g | 3g | 3g | 3g | 3g | 3g |
| UR | 12g | 5g | 10g | 5g | 10g | 15g | 17g |
| DGB | - | - | - | - | 130g | 125g | 120g |
| TGB | 150g | 140g | 120g | 120g | - | - | - |
| DEG | 100g | 100g | 90g | 80g | - | - | - |
| TEG | - | - | - | - | 110g | 125g | 100g |
| GR | 120g | 130g | 130g | 120g | 125g | 135g | 125g |
| PRD | 35g | 35g | - | - | - | - | 35g |
| TEA | 10g | 10g | 10g | 10g | 10g | 10g | 10g |
| PRX | 1g | 1g | 1g | 1g | 1g | 1g | 1g |
| SW | 10g | 10g | 10g | 10g | 10g | 10g | 10g |
| Names of the components in the above table are as follows. | | | | | | | |
| BTZ: benzotriazole | | | | | | | |
| UR: urea | | | | | | | |
| DGB: diethylene glycol monobutyl ether | | | | | | | |
| TGB: triethylene glycol monobutyl ether | | | | | | | |
| DEG: diethylene glycol | | | | | | | |
| TEG: triethylene glycol | | | | | | | |
| GR: glycerol | | | | | | | |
| PRD: 2-pyrrolidone | | | | | | | |
| TEA: triethanolamine | | | | | | | |
| PRX: Proxel XL2 (S) (manufactured by Avecia) | | | | | | | |
| SW: Sufynol STG | | | | | | | |

ink sets 202 to 210, which had the same formulations as those of ink sets 201 but altering dyes as follows, were also produced.

**[Table 24]**

| | C | LC | M | LM | Y | DY Bk | |
|---|---|---|---|---|---|---|---|
| 201 (Comp.Ex.) | C-1 | C-1 | M-1 | M-1 | Y-1 | Y-1 C-1 M-1 | Bk-1 Bk-2 |
| 202 (Comp. Ex.) | C-1 | C-1 | M-1 | M-2 | Y-1 | Y-1 C-1 M-2 | Bk-1 Bk-2 |
| 203 (Comp.Ex.) | C-1 | C-1 | M-1 | M-1 | Y-2 | Y-1 C-1 M-1 | Bk-1 Bk-2 |
| 204 (Comp.Ex.) | C-2 | C-2 | M-1 | M-1 | Y-1 | Y-1 C-1 M-1 | Bk-3 Bk-2 |
| 205 (Invention) | C-2 | C-2 | M-3 | M-3 | Y-3 | Y-3 C-2 M-3 | Bk-4 Bk-5 |
| 206 (Invention) | C-2 | C-2 | M-3 | M-3 | Y-4 | Y-3 c-2 M-3 | Bk-4 Bk-5 |
| 207 (Invention) | C-2 | C-2 | M-3 | M-3 | Y-3 | Y-4 C-2 M-3 | Bk-4 Bk-6 |
| 208 (Invention) | C-3 | C-3 | M-3 | M-3 | Y-3 | Y-3 C-2 M-3 | Bk-4 Bk-5 |
| 209 (Invention) | C-3 | C-3 | M-3 | M-3 | Y-4 | Y-3 C-2 M-3 | Bk-4 Bk-6 |
| 210 (Invention) | C-3 | C-3 | M-3 | M-3 | Y-3 | Y-4 C-2 M-3 | Bk-4 Bk-5 |

Dyes employed in the above ink sets are as follows.

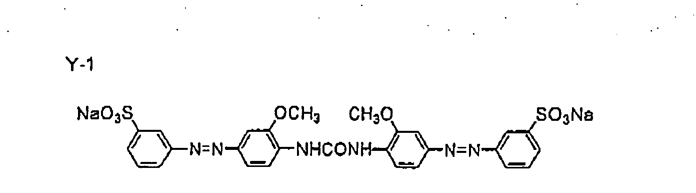

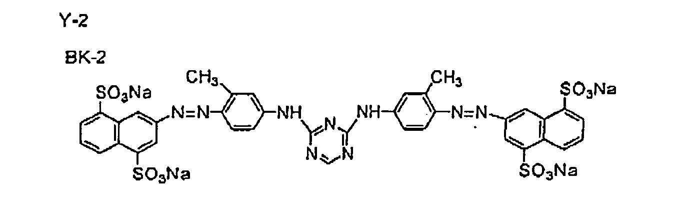

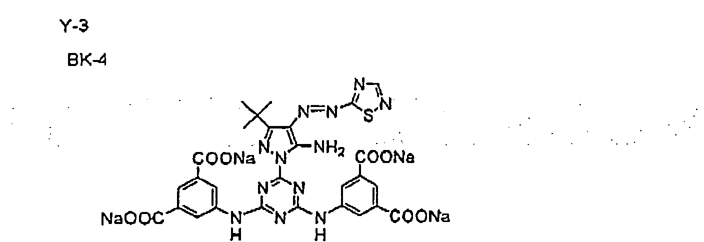

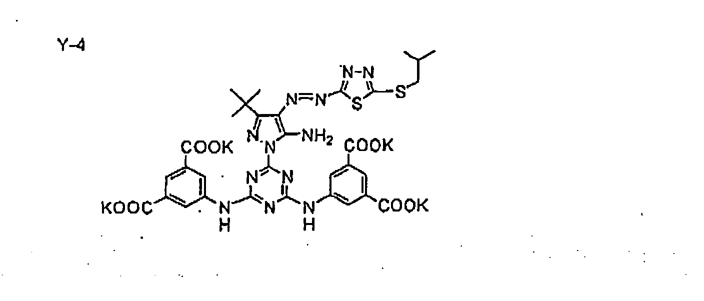

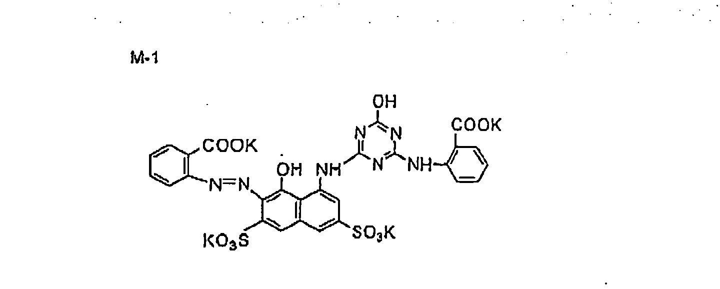

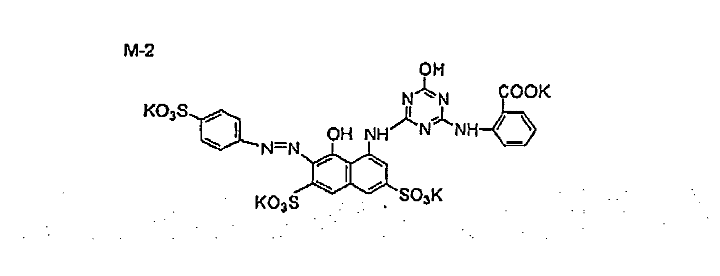

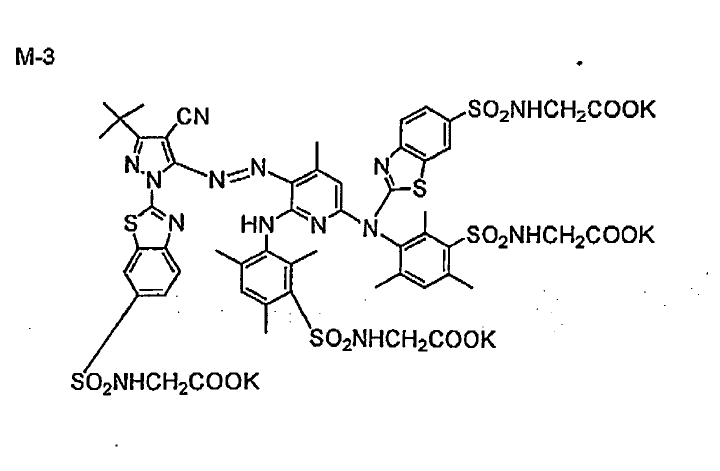

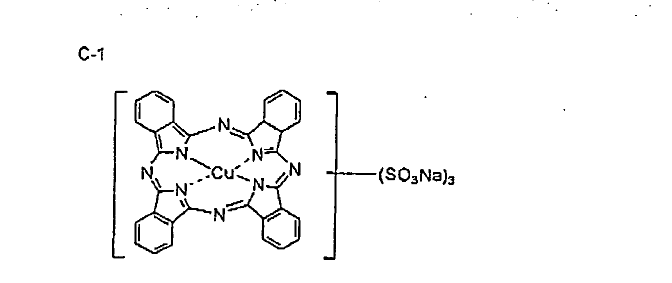

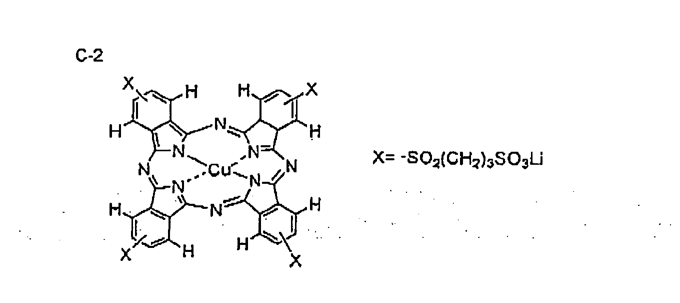

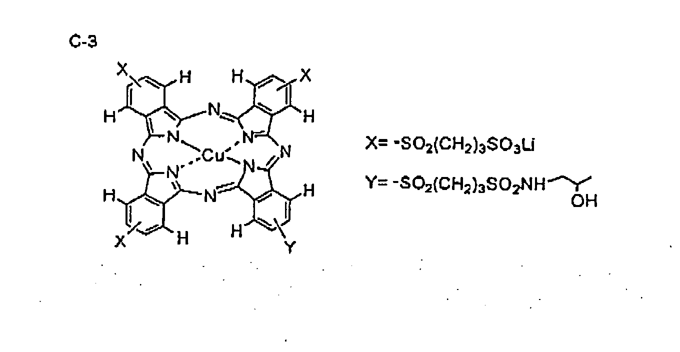

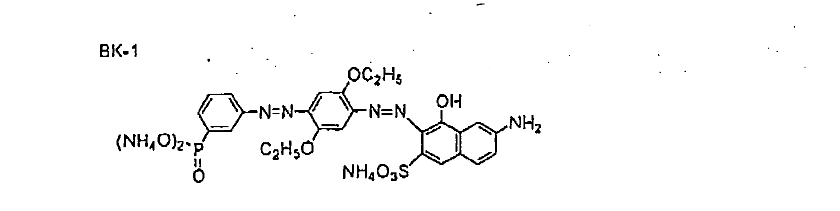

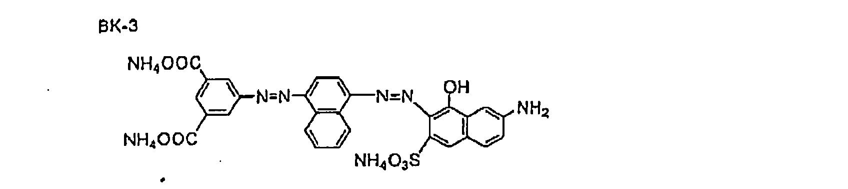

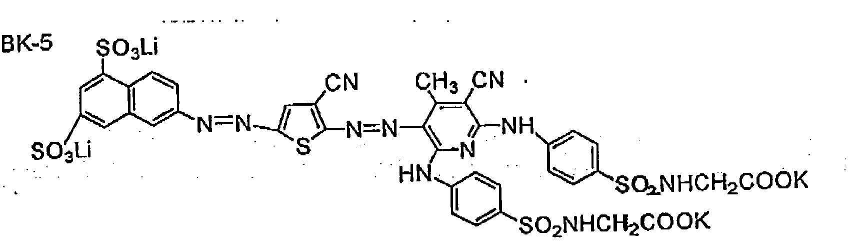

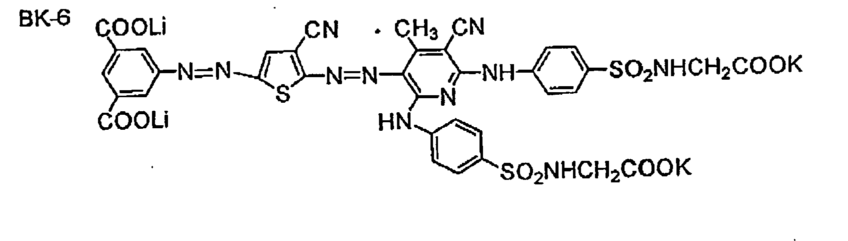

A ratio of a total atomic weight of hetero elements contained in a dye molecule to a dye molecular of DyesY-1, Y-2, Y-3, Y-4, M-1, M-2, M-3, C-1, C-2, C-3, BK-1, BK-3, BK-4 and BK-6 is 0.276, 0.247, 0.489, 0.466, 0.364, 0.331, 0.46, 0.31, 0.41, 0.44, 0.29, 0.30, 0.41, 0.47, respectively. In the invention, the ratio is calculated by assuming that -COOM is -COO, and -SO₉M is excluded.

These inks were packed in cartridges of an ink jet printer Model PM-950C (EPSON) and an image with gray color graduation and a figure portrait image were printed.

As an image-receiving sheet, use was made of a glossy inkjet photopaper Gasai manufactured by Fuji Photo Film Co., Ltd. Then the image qualities, inkjetting properties and image fastness were evaluated as in Example 1.

The following table shows the obtained results.

**[Table 25]**

| No. | Jetting properties | Light fastness | Heat fastness | O₃ fastness |
|---|---|---|---|---|
| PM-950C (Bk) (Comp. Ex.) | A | B | B | C |
| 201 (Comp. Ex.) | A | C | B | C |
| 202 (Comp. Ex.) | A | C | B | C |
| 203 (Comp. Ex.) | A | C | B | C |
| 204 (Comp. Ex.) | A | C | C | C |
| 205 (Invention) | A | A | A | A |
| 206 (Invention) | A | A | A | A |
| 207 (Invention) | A | A | A | A |
| 208 (Invention) | A | A | A | A |
| 209 (Invention) | A | A | A | A |
| 210 (Invention) | A | A | A | A |

The results given in the above table indicate that the systems with the use of the inks according to the invention are superior to the comparative examples in all of the image storage factors and also excellent in the jetting properties.

Similar effects could be obtained by using the inks and ink sets according to the invention in a thermal inkjet printer.

This application is based on Japanese Patent application JP 2003-85457, filed March 26, 2003, and Japanese Patent application JP 2003-89231, filed March 27, 2003,the entire contents of those are hereby incorporated by reference, the same as if set forth at length.

## Claims

1. An ink containing:
an aqueous medium; and
at least one dye in which a ratio of a total atomic weight of hetero elements contained in a dye molecule to a dye molecular weight is from 40 to 90%.

2. The ink according to claim 1, wherein the dye is a compound represented by the following formula (1):
(A-N=N-B )ₙL (1)
wherein A and B each independently represent an optionally substituted heterocyclic group; L represents a hydrogen atom, a chemical bond or a divalent linking group; and n is 1 or 2, provided that in a case where n is 1, L represents a hydrogen atom and A and B each independently represent a monovalent heterocyclic group; in a case where n is 2, L is a chemical bond or a divalent linking group and one of A and B is a monovalent heterocyclic group while the other is a divalent heterocyclic group; and in the case where n is 2, A' s may be either the same or different and B's may be either the same or different.

3. The ink according to claim 1, wherein the ratio is 50% or more.

4. An ink set containing at least one of the ink according to claim 1.

5. An ink set containing at least two of the ink according to claim 1.

6. An ink set containing at least three of the ink according to claim 1.

7. An ink set wherein each of inks constituting the ink set is the ink according to claim 1.

8. An ink set comprising inks each containing at least one dye and an aqueous medium, wherein inks contained in the ink set include cyan, light cyan, magenta, light magenta and yellow inks, and at least three of the cyan, light cyan, magenta, light magenta and yellow inks contain each at least one dye having two or more heterocyclic groups in a fundamental dye skeleton participating in a color development.

9. An ink set comprising inks each containing at least one dye and an aqueous medium, wherein all of inks contained in the ink set contain each at least one dye having two or more heterocyclic groups in a fundamental dye skeleton participating in a color development.

10. The ink set according to claim 8, which the dye having two or more heterocyclic groups is an azo dye.

11. The ink set according to claim 9, which the dye having two or more heterocyclic groups is an azo dye.

12. The ink set according to claim 8, wherein the dye having two or more heterocyclic groups is a metal chelate dye.

13. The ink set according to claim 9, wherein the dye having two or more heterocyclic groups is a metal chelate dye.

14. The ink set according to claim 10, wherein heterocyclic groups are bonded to each other via an azo bond in the azo dye.

15. The ink set according to claim 11, wherein heterocyclic groups are bonded to each other via an azo bond in the azo dye.

16. The ink set according to claims 12, wherein the metal chelate dye is a phthalocyanine dye.

17. The ink set according to claims 13, wherein the metal chelate dye is a phthalocyanine dye.

18. The ink set according to claim 8, wherein the ink containing a dye having heterocyclic groups is the ink according to claim 1.

19. The ink set according to claim 9, wherein the ink containing a dye having heterocyclic groups is the ink according to claim 1.

20. The ink set according to claim 4 , further containing a black ink, wherein a dye concentration of the black ink is highest.

21. The ink set according to claim 4, wherein further containing a black ink, in which the black ink includes an ink comprising a dye and another ink comprising a pigment dispersion.
